(19) Europäisches Patentamt
European Patent Office
Office européen des brevets

(11) **EP 4 757 213 A1**

(12) **EUROPEAN PATENT APPLICATION**
published in accordance with Art. 153(4) EPC

(43) Date of publication:
**10.06.2026 Bulletin 2026/24**

(21) Application number: **23946958.8**

(22) Date of filing: **28.07.2023**

(51) International Patent Classification (IPC):
***H04L 1/00*** *(2006.01)*

(52) Cooperative Patent Classification (CPC):
**H04L 1/00**

(86) International application number:
**PCT/CN2023/109992**

(87) International publication number:
**WO 2025/025002 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XIAO, Han**
**Dongguan, Guangdong 523860 (CN)**

(74) Representative: **RGTH**
**Patentanwälte PartGmbB**
**Mönckebergstraße 11**
**20095 Hamburg (DE)**

(54) **WIRELESS COMMUNICATION METHOD AND COMMUNICATION DEVICE**

(57) The present application provides a wireless communication method and a communication device. The method comprises: a first device sends a target signal to a second device on a target transmission resource, wherein the target signal comprises a first signal and a second signal that are non-orthogonally transmitted. Embodiments of the present application provide a wireless communication method. In the method, a first signal and a second signal are non-orthogonally transmitted on the same transmission resource (also referred to as a "target transmission resource"), and compared with the traditional signal transmission scheme in which a first signal and a second signal are orthogonally transmitted on different transmission resources, the present application improves the utilization rate of transmission resources.

```
┌──────────────┐              ┌───────────────┐
│ First device │              │ Second device │
└──────────────┘              └───────────────┘
        │      S1010, target Signal    │
        │─────────────────────────────▶│
        │                              │
```

FIG. 10

**Description**

## TECHNICAL FIELD

The present disclosure relates to the technical field of communications, and more specifically, to a wireless communication method and a communication device.

## BACKGROUND

Currently, in known communication systems, if a plurality of different signals need to be transmitted, the plurality of different signals are transmitted in an orthogonal manner through different transmission resources. That is, for a certain transmission resource, it can be only used to transmit one type of signal at a certain time instant, resulting in a low utilization ratio of the transmission resource. On the other hand, in a case of a fixed total amount of transmission resources, if a number of transmission resources occupied by a first signal increases, it means that a number of transmission resources available for transmitting a second signal decreases, which may result in the second signal not being transmitted in time. Alternatively, if a number of transmission resources occupied by the second signal increases, it means that a number of transmission resources available for transmitting the first signal decreases, which may result in the first signal not being transmitted in time.

## SUMMARY

The present disclosure provides a wireless communication method and a communication device. Various aspects involved in the present disclosure are described below.

In a first aspect, a wireless communication method is provided, and includes: transmitting, by a first device, a target signal to a second device on a target transmission resource, where the target signal includes a first signal and a second signal transmitted in a non-orthogonal manner.

In a second aspect, a wireless communication method is provided, and includes: receiving, by a second device, a target signal transmitted by a first device on a target transmission resource, where the target signal includes a first signal and a second signal transmitted in a non-orthogonal manner.

In a third aspect, a communication apparatus is provided, the communication apparatus is a first device, and the communication apparatus includes: a transmitting unit, configured to transmit a target signal to a second device on a target transmission resource, where the target signal includes a first signal and a second signal transmitted in a non-orthogonal manner.

In a fourth aspect, a communication device is provided, and includes a processor, a memory, and a communication interface, and the memory is configured to store one or more computer programs, and the processor is configured to call the computer programs in the memory, to cause the communication device to perform a part or all of the steps in the methods of the above aspects.

In an eighth aspect, the embodiments of the present disclosure provide a communication system, and the system includes the terminal device and/or the network device described above. In another possible design, the system may further include other device(s) that interact with the terminal device or the network device in solutions provided in the embodiments of the present disclosure.

In a ninth aspect, the embodiments of the present disclosure provide a computer-readable storage medium, and the computer-readable storage medium has stored a computer program, and the computer program causes a communication device (e.g., the terminal device or the network device) to perform a part or all of the steps in the methods of the above aspects.

In a tenth aspect, the embodiments of the present disclosure provide a computer program product, where the computer program product includes a non-transitory computer-readable storage medium that has stored a computer program, and the computer program is operable to cause a communication device (e.g., the terminal device or the network device) to perform a part or all of the steps in the methods of the above aspects. In some implementations, the computer program product may be a software installation package.

In an eleventh aspect, the embodiments of the present disclosure provide a chip, and the chip includes a memory and a processor, and the processor may call and run a computer program from the memory, to implement a part or all of the steps described in the methods of the above aspects.

The embodiments of the present disclosure provide a wireless communication method, and in the method, a first signal and a second signal may be transmitted in a non-orthogonal manner on a same transmission resource (also referred to as a "target transmission resource"), which helps to improve the utilization ratio of transmission resources, compared to conventional signal transmission solutions in which the first signal and the second signal are transmitted in an orthogonal transmission manner by occupying different transmission resources.

## BRIEF DESCRIPTION OF THE DRAWINGS

FIG. 1 is a wireless communication system 100 applied to the embodiments of the present disclosure.

FIG. 2 is a schematic diagram of channel estimation and signal recovery applicable to the embodiments of the present disclosure.

FIG. 3 illustrates patterns of data symbols and pilot symbols in different configurations.

FIG. 4 illustrates a neural network model applicable to the embodiments of the present disclosure.

FIG. 5 illustrates a neural network model applicable to the embodiments of the present disclosure.

FIG. 6 illustrates a convolutional neural network as applicable to the embodiments of the present disclosure.

FIG. 7 illustrates a long short-term memory (LSTM) model applicable to the embodiments of the present disclosure.

FIG. 8 illustrates a process of channel estimation based on a channel estimation module.

FIG. 9 is a wireless communication system 900 applicable to the embodiments of the present disclosure.

FIG. 10 is a schematic flowchart of a wireless communication method in the embodiments of the present disclosure.

FIG. 11 illustrates a transmission mode for a first signal and a second signal in an embodiment of the present disclosure.

FIG. 12 illustrates a transmission mode for a first signal and a second signal in another embodiment of the present disclosure.

FIG. 13 illustrates a solution for transmitting a first signal and a second signal based on a linear superimposition mode provided in the embodiments of the present disclosure.

FIG. 14 is a schematic diagram of adjusting a modulation constellation point associated with a second signal in the embodiments of the present disclosure.

FIG. 15 to FIG. 24 are schematic diagrams of superimposing the first signal and the second signal in the embodiments of the present disclosure.

FIG. 25 to FIG. 58 are schematic diagrams of a first parameter setting mode in the embodiments of the present disclosure.

FIG. 59 to FIG. 66 are schematic diagrams of signal receiving solutions in the embodiments of the present disclosure.

FIG. 67 is a schematic diagram of a training process in the embodiments of the present disclosure.

FIG. 68 is a schematic diagram of a communication device in the embodiments of the present disclosure.

FIG. 69 is a schematic diagram of a communication device in other embodiments of the present disclosure.

FIG. 70 is a schematic diagram of an apparatus in the embodiments of the present disclosure.

## DETAILED DESCRIPTION

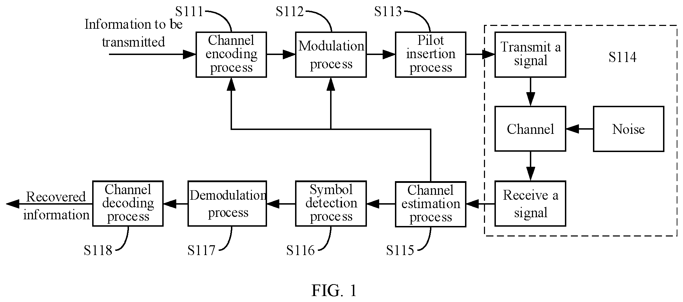

The technical solutions in the present disclosure will be described below in conjunction with the drawings. In order to facilitate understanding of the present disclosure, terms and communication processes involved in the embodiments of the present disclosure are first introduced below in conjunction with FIG. 1 to FIG. 9.

## I. Signal transmission process in a wireless communication system

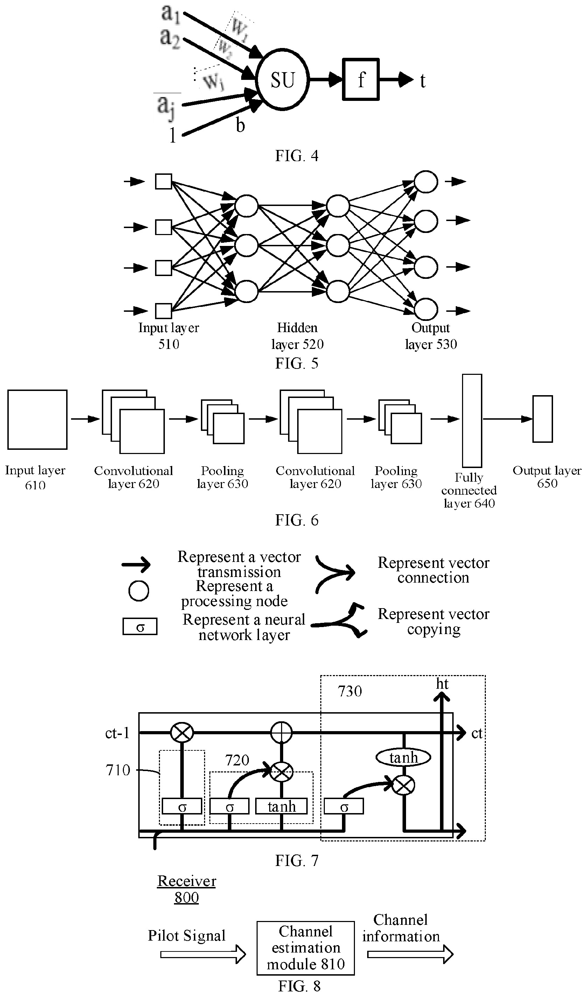

FIG. 1 is a flowchart of transmitting a signal in a wireless communication system applicable to the embodiments of the present disclosure. As shown in FIG. 1, the signal transmission process in the wireless communication system may be roughly divided into a plurality of signal processing processes S111 to S118 shown in FIG. 1. A part or all of the signal processing processes shown in FIG. 1 may be implemented by separate AI models, the specific implementations of which may be seen in the introductions of FIG. 5 to FIG. 8.

A transmitter performs channel encoding on to-be-transmitted information in a channel encoding process S111, to obtain an encoded bitstream. The to-be-transmitted information may be in the form of a bit stream.

In a modulation process S112, the bitstream is modulated into modulated symbols.

In a pilot insertion process S113, pilot symbols are inserted into the above-described modulated symbols, to form a signal to be transmitted, where the pilot symbol may be used by a receiver for channel estimation and symbol detection.

In transmitting the signal S114, the above-described signal is carried on a channel and transmitted to the receiver. The signal is generally superimposed with noise in the transmission process via the channel.

In a channel estimation process S115, the receiver may perform channel estimation based on the pilot signal to obtain channel state information (channel state information-reference signal, CSI), and feed back the CSI to the transmitter via a feedback link, for the transmitter to adjust the channel encoding, modulation, precoding modes, etc.

In a symbol detection process S116, symbol detection is performed on the received modulated symbol to obtain a detected result.

In a demodulation process S117, the received modulated symbol is demodulated based on the detected result, to obtain a bitstream.

In a channel decoding process S118, the bitstream is decoded to obtain recovered information, where the recovered information may be in the form of a bit stream.

It should be understood that the signal processing processes S111 to S118 shown in FIG. 1 only exemplarily list common signal processing processes in the wireless communication system, and signal processing processes such as resource mapping, precoding, interference cancellation, CSI measurement, etc., may further be included in the wireless communication system, and all of these signal processing processes may also be implemented by separate AI models. For the sake of brevity, the present disclosure will not be repeated.

## II. Channel estimation

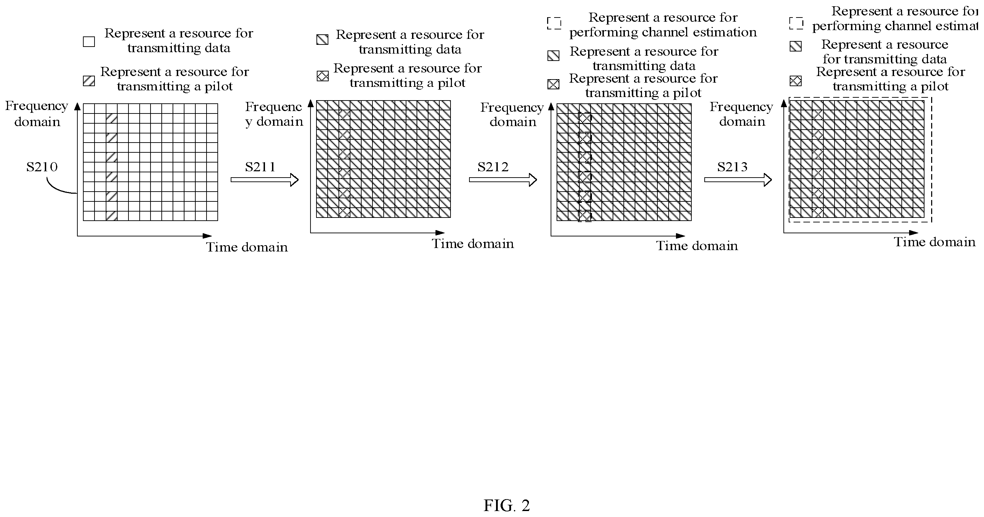

Due to the complexity and time varying nature of the wireless channel environment, in a wireless communication system (e.g., the wireless communication system introduced above), a receiver needs to recover the received signal based on the estimation result of the channel. FIG. 2 is a schematic diagram of channel estimation and signal recovery applicable to the embodiments of the present disclosure.

As shown in FIG. 2, in step S210, the transmitter transmits a series of pilot signals known to the receiver, in addition to transmitting data signals on time-frequency resources, such as a channel state information-reference signal (CSI-RS), a demodulation reference signal (DMRS), etc.

**In** step S211, the transmitter transmits the data signals and the pilot signals described above to the transmitter via the channel.

Time-frequency resources occupied by the pilot signals are different from time-frequency resources occupied by the data signals.

In step S212, the receiver may perform channel estimation after receiving the pilot signal. In a possible implementation, the receiver may estimate channel information of a channel for transmitting the pilot signal through a channel estimation algorithm (e.g., least squares (least squares method, LS) channel estimation) based on a pre-stored pilot signal and the received pilot signal.

In step S213, the receiver may, according to the channel information of the channel for transmitting the pilot sequence, using an interpolation algorithm, recover channel information on a full time-frequency resource, for subsequent CSI feedback or data recovery, etc.

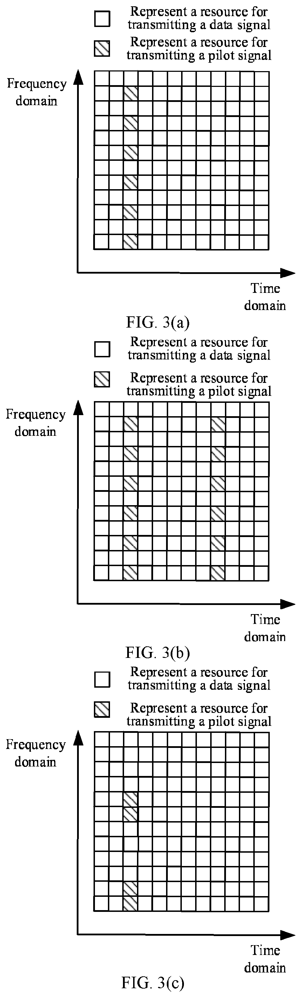

Based on the above introduction in conjunction with FIG. 2, it can be seen that the time-frequency resources for transmitting the pilot signals and the time-frequency resources for transmitting the data signals are different time-frequency resources. In addition, it is specified in some communication protocols (e.g., an NR communication protocol) that symbols used to transmit the pilot signals (hereinafter referred to as "pilot symbols" briefly) are different from symbols used to transmit the data signals (hereinafter also referred to as "data symbols"). FIG. 3 illustrates patterns of data symbols and pilot symbols in different configurations.

Referring to FIG. 3(a), in an RB, pilot symbols are distributed at an interval of a symbol among a plurality of REs corresponding to a symbol 2 in the RB. Referring to FIG. 3(b), in an RB, pilot symbols occupy a part of symbols among a plurality of symbols corresponding to a symbol 2 and a symbol 10 in the RB. Referring to FIG. 3(c), in an RB, pilot symbols occupy multiple groups of REs in a symbol 2 in the RB, where each group of REs includes two REs that are consecutive in the frequency domain.

Generally, in the patterns shown in FIG. 3(a) to FIG. 3(c), different patterns may be adapted for different communication environments. In some implementations, when the movement speed of the terminal device is high and the time varying of the channel characteristics is fast, a pattern with a denser distribution of pilot symbols may be selected, which helps to improve the accuracy of the channel quality estimation for the whole RB. For example, the pattern shown in FIG. 3(b) may be selected.

In some other implementations, when the movement speed of the terminal device is slow and the time varying of the channel characteristics is slow, a pattern with a sparser distribution of pilot symbols may be selected, which helps to reduce the overhead generated by transmitting the pilot signals under the premise of ensuring the accuracy of the channel quality estimation for the entire RB.

## III. Neural network

In recent years, artificial intelligence researches such as neural networks as representatives, have achieved great outcomes in many fields, and it will also play an important role in people's production and life for a long time to come. The neural network may be understood as an operation model consisting of multiple neuron nodes connected to each other, in which a connection between nodes may represent a weighted value from an input signal to an output signal, generally referred to as a parameter. Each node performs a weighted summation on different input signals and outputs through a specific activation function.

Referring to FIG. 4, the neuron may rely on the activation function to achieve a nonlinear mapping, where the input of the neuron may be denoted as A, each dimension of the input is denoted as $a_j$, and the corresponding parameter is denoted as $w_j$ and augments or weakens the input along with a summation unit (SU). In addition, the output of SU may be input into the activation function f to obtain the output t, where j takes the values of 1, 2, ..., and n.

Common neural networks are convolutional neural networks (CNN), recurrent neural networks (RNN), deep neural networks (DNN), etc.

A neural network applicable to the embodiments of the present disclosure is introduced below in conjunction with FIG. 5. The neural network shown in FIG. 5 may be divided into three types according to positions of different layers: an input layer 510, a hidden layer 520, and an output layer 530. Generally, a first layer is the input layer 510, a last layer is the output layer 530, and intermediate layers between the first layer and the last layer are all hidden layers 520.

The input layer 510 is used for inputting data, where the input data may be, for example, a received signal received by the receiver. The hidden layer 520 is used for processing the input data, for example, decompressing processing on the received signal. The output layer 530 is used for outputting the processed output data, for example, to output the decompressed signal.

As shown in FIG. 5, the neural network includes a plurality of layers, each layer including a plurality of neurons, and a neuron between a layer and a layer may be fully connected or partially connected. For the connected neuron, an output of a neuron in a previous layer may be used as an input of a neuron in a next layer.

With the continuous development of neural network researches, neural network deep learning algorithms have been proposed in recent years, where more hidden layers are introduced into the neural network to form a DNN, and more hidden layers allow the DNN to be more capable of portraying complex situations in the real world. Theoretically, the more parameters a model has, the higher its complexity will be, and the greater its "capacity" will be, which means that it can complete more complex learning tasks. This neural network model is widely applied to aspects such as mode recognition, signal processing, combination optimization, and abnormity detection, etc.

The CNN is a deep neural network with a convolutional structure, the structure of which is shown in FIG. 6, and may include an input layer 610, a convolutional layer 620, a pooling layer 630, a fully connected layer 640, and an output layer 650.

Each convolutional layer 620 may include many convolutional operators, and the convolutional operator is also referred to as kernels, whose function may be regarded as a filter that extracts specific information from the input signal, and the convolutional operator may essentially be a parameter matrix, and this parameter matrix is generally predefined.

Parameter values in these parameter matrices need to be obtained through a large amount of training in practical applications, and the respective parameter matrices formed from the parameter values obtained through training may extract information from the input signal, thereby helping the CNN to perform correct predictions.

When the CNN has a plurality of convolutional layers, an initial convolutional layer tends to extract more general features, and the general feature may also be referred to as low-level features; as the depth of the CNN deepens, features extracted by the later convolutional layers become more and more complex.

For the pooling layer 630, because it is often necessary to reduce the number of training parameters, it is often necessary to periodically introduce a pooling layer after the convolutional layer, and for example, a convolutional layer may be followed by a pooling layer as shown in FIG. 6, or a plurality of convolutional layers may be followed by one or more pooling layers. In the signal processing process, the sole purpose of the pooling layer is to reduce the spatial size of the extracted information.

For the fully connected layer 640, after the processing of the convolutional layer 620 and the pooling layer 630, the CNN is not sufficient to output the desired output information. This is because, as described above, the convolutional layer 620, pooling layer 630 can only extract features and reduce parameters brought from the input data. However, in order to generate the final output information (e.g., the bit stream of the original information transmitted by the transmitter), the CNN further needs to use the fully connected layer 640. Generally, the fully connected layer 640 may include a plurality of hidden layers, and parameters contained in the plurality of hidden layers may be obtained by pre-training according to the training data related to a specific task type, and for example, the task type may include decoding the data signal received by the receiver, or for example, the task type may also include performing channel estimation based on the pilot signal received by the receiver.

After the plurality of hidden layers in the fully connected layer 640, that is, a final layer of the entire CNN is the output layer 650 for outputting the result. Generally, this output layer 650 is set with a loss function (e.g., a loss function similar to the classification cross-entropy) for calculating a prediction error, or for evaluating a difference degree of between the result (also referred to as a predicted value) output by the CNN model and an ideal result (also referred to as a true value).

In order to minimize the loss function, the CNN model needs to be trained. In some implementations, the CNN model may be trained by using a backpropagation algorithm (BP). The training process of BP consists of a forward propagation process and a backpropagation process. In the forward propagation (e.g., a propagation from 610 to 650 in FIG. 6 is the forward propagation) process, the input data is input to the above-described respective layers of the CNN model, processed layer by layer and passed to the output layer. If the result output in the output layer differs greatly from the ideal result, the minimization of the above-described loss function is taken as an optimization objective, and transferring to the backpropagation (e.g., a propagation from 650 to 610 in FIG. 6 is the backpropagation), partial derivatives of the optimization objective with respect to the respective neuron weights are solved layer by layer, to form gradients of the optimization objective with respect to weight vectors, which are taken as the basis for modifying the model parameters, and the training process of the CNN is completed in the process of modifying the parameters. When the above-described error reaches a desired value, the training process of the CNN ends.

It should be noted that the CNN shown in FIG. 6 is only as an example of a convolutional neural network, and in specific applications, the convolutional neural network may be present in the form of other network models, which are not limited in the embodiments of the present disclosure.

The purpose of the RNNs is to process sequence data. In a conventional neural network model (e.g., in a CNN model), it is from the input layer to the hidden layer to the output layer, and the layers are fully connected to each other, and nodes among each layer are unconnected. But this ordinary neural network is incompetent for many problems. For example, if you want to predict what a next word in a sentence will be, a previous word generally needs to be used, because the previous and next words in the sentence are not independent. RNN is referred to as a recurrent neural network because the current output of a sequence is also related to the previous output. The specific presentation form is that the network will memorize the previous information and apply it to the calculation of the current output, i.e., the nodes among the hidden layer are no longer unconnected but are connected to each other, and the input of the hidden layer includes not only the output of the input layer but also includes the output of the hidden layer at a previous time instant. Theoretically, the RNN is capable of processing sequence data with any length.

Training for the RNN is the same as training for the traditional ANN (Artificial Neural Network). The BP error backpropagation algorithm is also used, however, there is a slight difference. If the RNN is unfolded on the Internet, parameters W, U, and V are shared, whereas the traditional neural network is not like that. And in using the gradient descent algorithm, the output of each step depends not only on the network at the current step, but also on the state of the network at the previous several steps. For example, at t=4, three steps further need to be passed backward, and various gradients need to be incorporated at the three backward steps accordingly. This learning algorithm is referred to as back propagation through time (BPTT).

Why do we need the recurrent neural network when we already have the artificial neural network and the convolutional neural network? The reason is simple: both the convolutional neural network and artificial neural network are based on the premise that elements are independent of each other, and that the input and the output are also independent of each other, such as a cat and a dog. But in the real world, many elements are interconnected, such as changes in stocks over time, and a person said: I like to travel, one of my favorite places is Yunnan, in the future there is an opportunity to go to __. Here to fill in the blank, people should know that it is filled with "Yunnan". Because we infer it from the content of the context, but it is quite difficult to do so by the opportunity. Therefore, there is now a recurrent neural network, its nature is: like people having the ability to memorize. Therefore, its output depends on the current input and memory. To explain the RNN in a sentence, a unit structure is reused.

Currently, in order to solve the problem of gradient explosion or disappearance of the RNN, a long short-term memory (LSTM) model is obtained by morphing on the basis of the RNN. See FIG. 7, the LSTM introduces a new memory cell $c_t$ (also referred to as "cell state") for linear cyclic information transfer, and meanwhile, an external state $h_t$ for outputting information to the hidden layer. At each time instant t, $c_t$ records history

information up to the current time instant. Unlike the RNN only considering the recent state, the memory unit decides which states should be left behind and which states should be forgotten, thereby solving the shortcomings of the traditional RNN in the long-term memory.

Continuing to refer to FIG. 7, in order to implement the selection of the states described above, a gate control mechanism is introduced to the memory unit to control the path of the information transfer, similar to a gate in a data circuit, where "0" means OFF and "1" means ON. The memory unit includes a forgetting gate 710, an input gate 720, and an output gate 730. The forgetting gate is used to control how much information needs to be forgotten by the memory unit $c_{t-1}$ at the previous time instant, the input gate is used to control how much information needs to be stored in a candidate state $\widehat{c}_t$ in the current time instant, and the output gate is used to control how much information needs to be output to the external state $h_t$ by the memory unit $c_t$ at the current time instant.

## IV. Channel estimation based on an AI decoder

The channel estimation based on the AI decoder aims to implement channel estimation by using an AI-based channel estimation module to process the pilot signal received by the receiver. FIG. 8 illustrates a process of channel estimation based on a channel estimation module. Referring to FIG. 8, the pilot signal received by the receiver 800 is taken as an input to the channel estimation module 810, and accordingly, the channel estimation module 810 processes the input pilot signal to output channel information. In addition, in some implementations, in addition to the pilot signal, other auxiliary information may also be added, to enhance the accuracy of the channel information output by the channel estimation module. For example, an original sequence of the pilot signal that is pre-stored by the receiver 800, an energy level at which the receiver 800 receives the pilot signal, a transmission delay when transmitting the pilot signal or noise when transmitting the pilot signal, etc., may also be input to the channel estimation module 810.

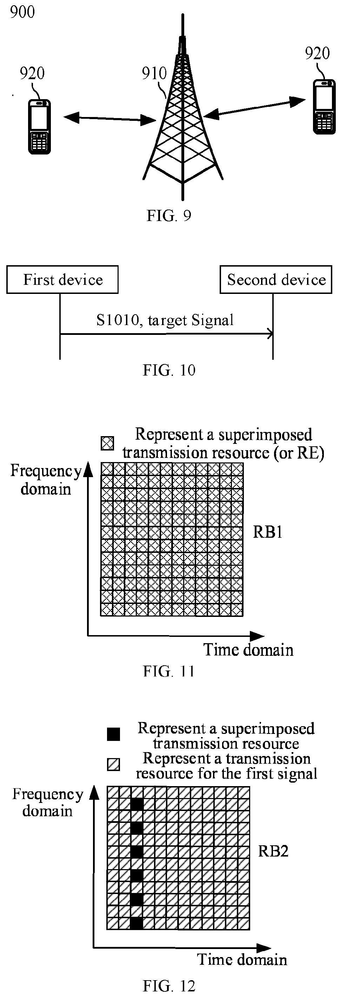

The communication processes and terms involved in the embodiments of the present disclosure are introduced above in conjunction with FIG. 1 to FIG. 8, and a communication system applicable to the embodiments of the present disclosure is introduced below in conjunction with FIG. 9.

FIG. 9 is a wireless communication system 900 applicable to the embodiments of the present disclosure. The wireless communication system 900 may include a network device 910. The network device 910 may be a device in communication with a terminal device 920. The network device 910 may provide communication coverage for a specific geographic area and may communicate with terminal devices 920 within the coverage area.

FIG. 9 exemplarily illustrates a network device 910 and two terminal devices 920, and optionally, the wireless communication system 900 may include a plurality of network devices and may include other numbers of terminal devices within the coverage range of each of the network devices, which is not limited in the embodiments of the present disclosure.

Optionally, the wireless communication system 900 may also include other network entities such as a network controller, a mobility management entity, etc., which is not limited in the embodiments of the present disclosure.

Optionally, the terminal devices 920 may also communicate directly with each other, e.g., two terminal devices 920 may communicate with each other via a device-to-device (D2D) link.

It should be noted that in the following introduction, a first device and a second device are taken as an example for explanation. In some implementations, the first device may be the above-described network device 910, accordingly, the second device may be the above-mentioned terminal device 920. In some other implementations, the first device may be the above-mentioned terminal device 920, accordingly, the second device may be the above-mentioned network device 910. In some other implementations, the first device may be the above-mentioned terminal device 920, accordingly, the second device may be the above-described terminal device 920. The embodiments of the present disclosure are not specifically limited thereto.

It should be understood that the technical solutions of the embodiments of the present disclosure may be applied to various communication systems, such as: a 5th generation (5G) system, or a new radio (NR), long term evolution (LTE) system, an LTE frequency division duplex (FDD) system, an LTE time division duplex (TDD) system, or the like. The technical solutions provided by the present disclosure may also be applied to future communication systems, such as a 6th generation mobile communication system, a satellite communication system, or the like.

The terminal device in the embodiments of the present disclosure may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent or a user apparatus. The terminal device in the embodiments of the present disclosure may refer to a device that provides voice and/or data connectivity to a user and may be used to connect people, objects, and machines, such as a handheld device or vehicle-mounted device with a wireless connection function, etc. The terminal device in the embodiments of the present disclosure may be a mobile phone, a pad, a laptop computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, etc. Optionally, the UE may be used to act as a base station. For example, the UE may act as a scheduling entity, that provides sidelink signals between UEs in V2X or D2D, or the like. For example, a cellular phone and a car communicate with each other by using the sidelink signals. The cellular phone and a smart home device communicate with each other without relaying the communication signal via a base station.

The network device in the embodiments of the present disclosure may be a device for communicating with the terminal device, and the network device may also be referred to as an access network device or a wireless access network device, e.g., the network device may be a base station. The network device in the embodiments of the present disclosure may refer to a radio access network (RAN) node (or device) that accesses the terminal device to a wireless network. The base station may broadly cover the following various names, or be replaced with the following names, such as: node B (NodeB), evolved base station (evolved NodeB, eNB), next generation base station next generation NodeB, gNB), relay station, access point, transmission point (transmitting and receiving point, TRP), transmitting point (TP), master station MeNB, secondary station SeNB, multi-standard radio (MSR) node, home base station, network controller, access node, wireless node, access point (AP), transmission node, transceiver node, base band unit (BBU), remote radio unit (Remote Radio Unit, RRU), active antenna unit (AAU), remote radio head (RRH), central unit (CU), distributed unit (DU), positioning node, or the like. The base station may be a macro base station, a micro base station, a relay node, a donor node, or the like, or a combination thereof. The base station may also refer to a communication module, a modem or a chip for being set within the above device or apparatus. The base station may also be a mobile switching center, and a device that undertakes a base station function in device-to-device D2D, vehicle-to-everything (V2X), machine-to-machine (M2M) communications, a network-side device in a 6G network, a device that undertakes a base station function in future communication systems, or the like. The base station may support networks with the same or different access technologies. The embodiments of the present disclosure do not limit the specific technology and the specific device form used for the network device.

The base station may be fixed or mobile. For example, a helicopter or drone may be configured to act as a mobile base station, and one or more cells may be moved according to the position of the mobile base station. In other examples, the helicopter or drone may be configured to be used as a device for communicating with another base station.

In some deployments, the network device in the embodiments of the present disclosure may refer to a CU or a DU, or, the network device includes a CU and a DU. The gNB may also include an AAU.

The network device and the terminal device may be deployed on land, including indoor or outdoor, handheld or in-vehicle; or deployed on water; or deployed on airborne aircrafts, balloons, and satellites. The scenarios in which the network device and the terminal device are located are not limited in the embodiments of the present disclosure.

It should be understood that the communication device involved in the present disclosure may be a network device or may also be a terminal device. For example, the first communication device is a network device and the second communication device is a terminal device. For another example, the first communication device is a terminal device and the second communication device is a network device. For another example, both the first communication device and the second communication device are network devices, or both are terminal devices.

It should also be understood that all or a part of functions of the communication device in the present disclosure may also be implemented through a software function running on hardware, or implemented through a virtualized function instantiated on a platform (e.g., a cloud platform).

Currently, in known communication systems, in order to improve the reliability of the transmitted signals, the signals transmitted on a plurality of transmission resources are transmitted in an orthogonal transmission mode, where the orthogonal transmission may be understood as that the signals transmitted on the plurality of transmission resources are processed into signals orthogonal to each other and then transmitted, where the orthogonal signals are transmitted independently of each other and do not interfere with each other. In the orthogonal transmission scenario, for a certain transmission resource, it can only be used to transmit one signal at a certain time instant, resulting in a low utilization ratio of the transmission resource. On the other hand, in a case of a fixed total amount of transmission resources, if a number of transmission resources occupied by a certain signal (hereinafter also referred to as a "first signal") increases, it means that a number of transmission resources available for transmitting another signal (hereinafter also referred to as a "second signal") decreases, which may result in the another signal not being transmitted in time.

Taking the first signal as a pilot signal and the second signal as a data signal as an example, the pilot signal and the data signal are transmitted orthogonally on different transmission resources. That is, for a certain transmission resource, it can only be used to transmit either the data signal or the pilot signal at a certain time instant, resulting in a low utilization ratio of the transmission resource. On the other hand, in a case of a fixed total amount of transmission resources, if a number of transmission resources occupied by the pilot signal increases, it means that a number of transmission resources available for transmitting the data signal decreases, which may result in the data signal not being transmitted in time. Alternatively, if a number of transmission resources occupied by the data signal increases, it means that a number of transmission resources available for transmitting the pilot signal decreases, which may result in reduced accuracy in channel estimation based on the pilot signal.

Therefore, in response to the above problems, the embodiments of the present disclosure provide a wireless communication method, and in the method, a first signal and a second signal may be transmitted in a non-orthogonal manner on a same transmission resource (also referred to as a "target transmission resource"), to improve the utilization ratio of the transmission resource. The wireless communication method of the embodiments of the present disclosure is introduced below in conjunction with FIG. 10. The wireless communication method shown in FIG. 10 includes step S1010.

In step S1010, a first device transmits a target signal to a second device on a target transmission resource.

In some implementations, the above-described target signal includes a first signal and a second signal that are non-orthogonal. That is, the target signal includes the first signal and the second signal transmitted in a non-orthogonal manner, or the second signal and the first signal are transmitted in a non-orthogonal manner on the target transmission resource.

Based on the above introduction, it can be seen that the first signal and the second signal transmitted in the non-orthogonal manner may be transmitted through the target transmission resource at the same time, which may be understood that the first signal and the second signal are transmitted on the target transmission resource in a superimposed manner, and therefore, in the embodiments of the present disclosure, the above-described target transmission resource may also be referred to as a "superimposed transmission resource". The superimposition mode of the first signal and the second signal will be introduced below in conjunction with FIG. 11 to FIG. 58, which will not be repeated herein for the sake of brevity.

In the embodiments of the present disclosure, the first signal and the second signal described above may be different types of signals. For example, the second signal may include a data signal, and accordingly, the first signal may include a pilot signal. The pilot signal is also referred to as a reference signal, and for example, the reference signal may be a CSI-RS, a DMRS, a phase-tracking reference signal (PT-RS), a sounding reference signal (SRS), an SSB synchronization signal block (SS/PBCH block), positioning reference signal (PRS), etc. Of course, in the embodiments of the present disclosure, the above-described first signal and second signal may also be other different types of signals.

It should be noted that the solutions of the embodiments of the present disclosure are also applicable to a plurality of different types of signals being transmitted in a non-orthogonal manner on the target transmission resource. The first signal and the second signal described above may be understood to be two signals of the plurality of different types of signals. The solutions of the embodiments of the present disclosure do not limit the number of the plurality of different types of signals described above.

In some implementations, the first signal and the second signal may be data for the same user, and in this case, the target transmission resource may include transmission resources of a single stream. In some other implementations, the first signal and the second signal may be data for different users, and in this case, the target transmission resource may include transmission resources of multiple streams.

The embodiments of the present disclosure do not limit the transmission resource (e.g., the target transmission resource). In some implementations, the transmission resource may include one or more of: a time-domain resource, a frequency-domain resource, or a code-domain resource. Taking the transmission resource including the time-domain resource as an example, the target transmission resource may be a symbol (also referred to as "time-domain symbol"), a slot, a subframe, or a frame, etc. Taking the transmission resource including the frequency-domain resource as an example, the transmission resource may include a subcarrier, a bandwidth part, a frequency band, etc. Taking the target transmission resource including the code-domain resource as an example, the target transmission resource may include a codeword. Taking the target transmission resource including the time-domain resource and the frequency-domain resource as an example, the target transmission resource may include a resource element (RE) or a resource block (RB).

In some implementations, the above-described target transmission resource belongs to a transmission resource set, where the transmission resource set may include one or more transmission resources. All of the transmission resources in the transmission resource set may be used to transmit the second signal, and accordingly, some or all of the transmission resources in the transmission resource set may be used to transmit the first signal. That is, some or all of the transmission resources in the transmission resource set are the target transmission resource described above. The transmission resource set may, for example, be an RB, and the transmission resources may, for example, be REs in the RB.

In some implementations, all of the transmission resources in the transmission resource set described above may be used to transmit the second signal, and accordingly, all of the transmission resources in the transmission resource set may be used to transmit the first signal. Alternatively, all of the transmission resources for transmitting the second signal are used to transmit the first signal, or, the first signal and the second signal are transmitted in a non-orthogonal transmission mode on all of the transmission resources for transmitting the second signal.

To facilitate understanding, the following introduces the transmission mode of the first signal and the second signal in an embodiment of the present disclosure in conjunction with FIG. 11, taking an example of all of the transmission resources in the transmission resource set being used to transmit the first signal and the second signal. Referring to FIG. 11, it is assumed that the transmission resource set is RB1, RB1 includes 12 subcarriers in the frequency domain, and RB1 includes 14 symbols in the time domain. All REs in RB1 are used to transmit the first signal and the second signal, that is, the first signal and the second signal are transmitted in a superimposed manner in a non-orthogonal manner on all REs in RB1. Therefore, all REs in RB1 may also be referred to as superimposed transmission resources.

In the embodiments of the present disclosure, the solution of transmitting the first signal on all of the transmission resources for transmitting the second signal, or, transmitting the first signal and the second signal on all of the transmission resources in the transmission resource set, helps to avoid signaling interaction(s) required for a uniformity between the second device and the transmitting end as to which transmission resources are superimposed transmission resources, as compared to the solution of transmitting the first signal on some of the transmission resources for transmitting the second signal. For example, the first device may no longer indicate the superimposed transmission resources to the second device.

In some other implementations, some of the transmission resources in the transmission resource set described above may be used to transmit the second signal, and accordingly, some of the transmission resources in the transmission resource set may be used to transmit the first signal. Alternatively, the some transmission resources for transmitting the second signal are used to transmit the first signal, or, the first signal and the second signal are transmitted in a non-orthogonal transmission mode on the some transmission resources for transmitting the second signal.

To facilitate understanding, the following introduces the transmission mode of the first signal and the second signal in another embodiment of the present disclosure in conjunction with FIG. 12, taking an example of some of the transmission resources in the transmission resource set being used to transmit the first signal and the second signal. Referring to FIG. 12, it is assumed that the transmission resource set is RB2 and RB2 includes 12 subcarriers in the frequency domain and RB2 includes 14 symbols in the time domain. Accordingly, among a plurality of REs corresponding to a symbol 2 of RB, the first signal is carried on RE0, RE2, RE4, RE6, RE8, and RE10. That is, the first signal and the second signal are transmitted in a non-orthogonal manner in a superimposed manner on RE0, RE2, RE4, RE6, RE8, and RE10 in RB2. Thus, RE0, RE2, RE4, RE6, RE8, and RE10 may be referred to as superimposed transmission resources.

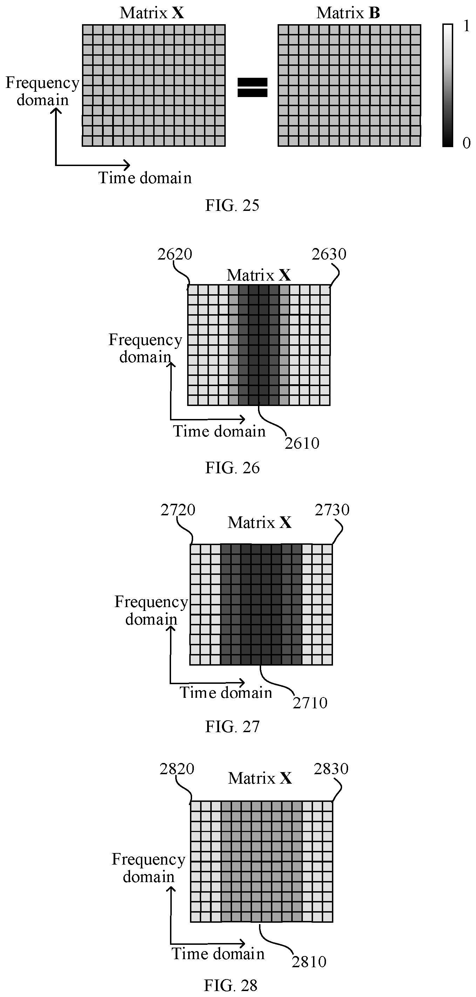

In the embodiments of the present disclosure, there is no limitation on the positions of the transmission resources for transmitting the first signal, and taking the first signal being the pilot signal as an example, the positions of the transmission resources for transmitting the first signal may be determined based on a transmission pattern of the pilot signal, where the transmission pattern of the pilot signal may, for example, be any one of the patterns introduced above. Of course, in the embodiments of the present disclosure, the determination of the positions of the transmission resources for the first signal may also be based on patterns introduced below in conjunction with FIG. 25 to FIG. 58.

In the embodiments of the present disclosure, the first signal does no longer need to occupy all of the transmission resources for transmitting the second signal, which helps to improve the flexibility of transmitting the first signal.

As introduced above, the first signal and the second signal may be transmitted in a non-orthogonal manner on the target transmission resource. In the embodiments of the present disclosure, the non-orthogonal transmission may be divided into a non-orthogonal transmission based on linear superimposition and a non-orthogonal transmission based on non-linear superimposition. The following introduces in conjunction with a non-orthogonal transmission mode 1 and a non-orthogonal transmission mode 2, respectively.

**In a non-orthogonal transmission mode 1,** the first signal and the second signal are transmitted in a non-orthogonal manner in a linear superimposition mode on the target transmission resource, or, the target signal is generated based on the linear superimposition of the first signal and the second signal. In the embodiments of the present disclosure, the non-orthogonal transmission based on the linear superimposition mode helps to simplify the complexity of the non-orthogonal transmission, on the one hand. On the other hand, the non-orthogonal transmission based on the linear superimposition mode helps simplify the complexity of the second device in identifying the multiple types of signals transmitted in a non-orthogonal manner.

In some scenarios, when transmitting a signal on the transmission resource, there is generally some limitations on the energy of the transmitted signal, and therefore, in the embodiments of the present disclosure, in a case of transmitting the superimposed first signal and second signal through the target transmission resource, the energy of the signal transmitted on the target transmission resource may be adjusted by a first parameter and/or a second parameter (or the power of the signal transmitted on the target transmission resource may be adjusted by a first parameter and/or a second parameter). That is, parameters associated with the above-described linear superimposition mode are determined based on the first parameter and/or the second parameter.

It should be noted that the parameters associated with the above-described linear superimposition mode are determined based on the first parameter and/or the second parameter, which may be understood as that the parameters associated with the linear superimposition mode include the first parameter and/or the second parameter, or the parameters associated with the linear superimposition mode are obtained by calculating the first parameter and/or the second parameter, which is not limited in the embodiments of the present disclosure.

In some implementations, the first parameter described above is used to adjust the energy of the first signal transmitted on the target transmission resource. For example, the first parameter is used to increase the energy of the first signal transmitted on the target transmission resource. For another example, the first parameter is used to decrease the energy of the first signal transmitted on the target transmission resource.

In some implementations, the second parameter described above is used to adjust the energy of the second signal transmitted on the target transmission resource. For example, the second parameter is used to increase the energy of the second signal transmitted on the target transmission resource. For another example, the second parameter is used to decrease the energy of the second signal transmitted on the target transmission resource.

It is specified in some scenarios that the signal energy of the signal transmitted on the transmission resource is less than or equal to an energy threshold (e.g., 1) corresponding to the transmission resource. Accordingly, in some implementations, the parameters (e.g., the first parameter and/or the second parameter) associated with the linear superimposition mode described above are used to adjust a sum of the energy of the first signal and the energy of the second signal transmitted on the target transmission resource to be less than or equal to the energy threshold corresponding to the target transmission resource.

In some implementations, the value of the first parameter may be smaller than the value of the second parameter, and taking the first signal being the pilot signal and the second signal being the data signal as an example, the value of the first parameter is smaller than the value of the second parameter, which helps to reduce the influence of the pilot signal on the data signal, to improve the success ratio of transmitting the data signal. For example, the value of the first parameter may be 0.1 to 0.5, and accordingly, the value of the second parameter may be 0.6 to 0.975.

In the embodiments of the present disclosure, there is no limitation on the above-described energy threshold. In some implementations, the above-described energy threshold may be determined based on an average energy corresponding to the target transmission resource. For example, the above-described energy threshold may be equal to the average energy corresponding to the target transmission resource. For example, the above-described energy threshold may be less than the average energy corresponding to the target transmission resource.

In the embodiments of the present disclosure, the above-described energy threshold may be predefined, and for example, it may be predefined by a communication protocol. Of course, the above-described energy threshold may also be pre-configured, e.g., may be configured by a network device. The embodiments of the present disclosure are not limited thereto.

To facilitate understanding, the non-orthogonal transmission solution based on linear superimposition in the embodiments of the present disclosure is introduced below in conjunction with the first parameter and the second parameter. As described above, the target transmission resource belongs to a transmission resource set, and target signals transmitted on one or more target transmission resources in the transmission resource set are represented by a matrix $\mathbf{S}$, and accordingly, the matrix $\mathbf{S}$ is determined by a formula $\mathbf{S} = \mathbf{V} \odot \mathbf{D} + \mathbf{X} \odot \mathbf{P}$, or, the matrix $\mathbf{S}$ satisfies $\mathbf{V} \odot \mathbf{D} + \mathbf{X} \odot \mathbf{P}$. The matrix $\mathbf{V}$ represents second parameters associated with target transmission resources in the transmission resource set; the matrix $\mathbf{X}$ represents first parameters associated with target transmission resources in the transmission resource set; the matrix $\mathbf{D}$ represents second signals transmitted on the target transmission resources in the transmission resource set; the matrix $\mathbf{P}$ represents first signals transmitted on the target transmission resources in the transmission resource set; and $\odot$ represents a hadamard product.

In some implementations, assuming that an energy threshold corresponding to the target transmission resource is 1, the matrix $\mathbf{V}$ is determined based on a formula $\mathbf{V} = sqrt(\mathbf{A})$ and the matrix $\mathbf{X}$ is determined based on a formula $\mathbf{X} = sqrt(1 - \mathbf{A})$, where the matrix $\mathbf{A} \in [0,1]$, and $sqrt()$ denotes a square root calculation.

It should be noted that in the embodiments of the present disclosure, there is no limitation on the number of target transmission resources included in the transmission resource set, and accordingly, the dimensions of the matrices (e.g., matrix $\mathbf{S}$, matrix $\mathbf{V}$, matrix $\mathbf{D}$, matrix $\mathbf{P}$, matrix $\mathbf{A}$, matrix $\mathbf{V}$, and matrix $\mathbf{X}$, etc.) involved above are associated with the dimensions (or the number) of target transmission resources in the transmission resource set. For example, each element in the matrix may correspond to a transmission resource in the transmission resource set, and in some implementations, the dimensions of the matrix are the same as the dimensions of the target transmission resources in the transmission resource set. Taking the transmission resource set being an RB as an example, the RB may be represented as including N rows and M columns of REs, and all of the REs in the RB are superimposed transmission resources. Accordingly, the matrix involved above may be a matrix with N rows and M columns, where M and N are positive integers.

Generally, the dimensions of the above-described matrix change when the target transmission resource allocated by the system changes. For example, if the target transmission resource allocated by the system is 2 RBs, the dimensions of the matrix are the same as the dimensions of REs in the 2 RBs. Assuming that the RB may be represented as including N rows and M columns of REs, the 2 RBs include 2N rows and 2M columns of REs, and the dimension corresponding to the 2 RBs is 2N rows and 2M columns. In this case, if all the REs in the 2 RBs are superimposed transmission resources, the dimension of the matrix involved above may be a matrix with 2N rows and 2M columns.

The above introduces the solution for determining the parameter associated with the linear superimposition mode based on the first parameter and/or the second parameter in the embodiments of the present disclosure. In some other implementations, the parameter associated with the linear superimposition mode described above may be determined according to a set of symbols corresponding to the first signal; and a set of symbols corresponding to the second signal.

The set of symbols associated with the first signal described above may include one or more symbols that may be used to transmit the first signal. In some scenarios, the first signal may be modulated, in order to improve the transmission performance of the first signal. Accordingly, the above-described set of symbols associated with the first signal may include modulated symbols associated with modulation constellation points of the first signal. The modulation constellation points of the first signal are associated with the modulation mode of the first signal.

As described above, if the first signal is modulated, accordingly, the amplitude of the first signal indicated in the matrix $\mathbf{P}$ associated with the first signal may be a modulated amplitude, and/or the phase of the first signal indicated in the matrix $\mathbf{P}$ associated with the first signal may be a modulated phase. In this case, the matrix $\mathbf{P}$ associated with the first signal belongs to a set of modulation constellation points associated with the modulation mode of the first signal. Taking the modulation mode of the first signal being BPSK as an example, a set $\mathbf{B}$ of modulation constellation points associated with BPSK may be represented as $\mathbf{B} = \{-1, 1\}$, and accordingly, the matrix associated with the first signal is $\mathbf{P} \in \mathbf{B}$.

The set of symbols associated with the second signal described above may include one or more symbols that may be used to transmit the second signal. In some scenarios, the second signal may be modulated, in order to improve the transmission performance of the second signal. Accordingly, the above-described set of symbols associated with the second signal may include modulated symbols associated with modulation constellation points of the second signal. The modulation constellation points of the second signal are associated with the modulation mode of the second signal.

As described above, if the second signal is modulated, accordingly, the amplitude of the second signal indicated in the matrix **D** associated with the second signal may be a modulated amplitude, and/or the phase of the second signal indicated in the matrix **D** associated with the second signal may be a modulated phase. In this case, the matrix **D** associated with the second signal belongs to a set of modulation constellation points associated with the modulation mode of the second signal. Taking the modulation mode of the second signal being 4QAM as an example, a set **C** of modulation constellation points associated with 4QAM may be represented as **C** = {0.707 + 0.707j, 0.707 - 0.707j, - 0.707 + 0.707j, - 0.707 - 0.707j} , and accordingly, the matrix associated with the second signal is $D \in C$.

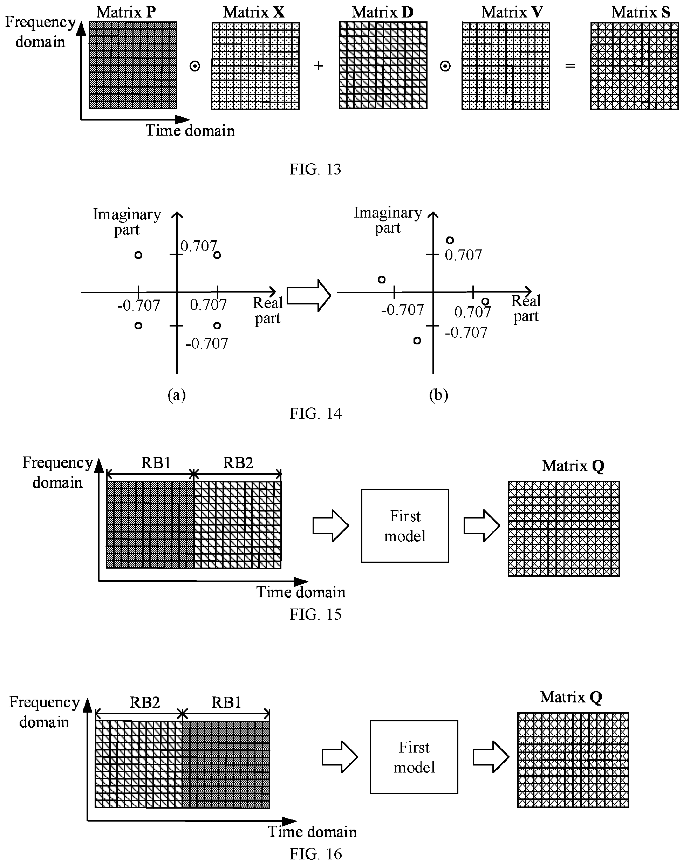

Of course, in the embodiments of the present disclosure, the linear superimposition may be performed based on the first parameter, the second parameter, the set of symbols corresponding to the first signal, and the set of symbols corresponding to the second signal. For ease of understanding, a solution for transmitting the first signal and the second signal based on the linear superimposition mode provided in the embodiments of the present disclosure is introduced below in conjunction with FIG. 13. It is assumed that the second signal is a data signal, the first signal is a pilot signal, and the first signal and the second signal are transmitted in a linear superimposition mode in a non-orthogonal manner, on all the REs within the RB.

Referring to FIG. 13, if the dimension of REs in the RB may be denoted as N × M, the matrix **P** associated with the pilot signal and the matrix **D** associated with the data signal may be represented as matrices of N × M, and the first parameter may be represented as a matrix **X** of N × M, and the second parameter may be a matrix **V** of N × M. Accordingly, the signal transmitted on each RE in the RB may be represented as a matrix **S** of N × M.

From the perspective of a formula, it may be described that the matrix **S** is determined by the formula: $S = V \odot D + X \odot P$, where the matrix $V = sqrt(A) \in [0, 1]^{N \times M}$, the matrix $X = sqrt(1 - A) \in [0, 1]^{N \times M}$, $A \in [0, 1]^{N \times M}$, the matrix $D \in C^{N \times M}$, and the matrix $P \in B^{N \times M}$.

In the embodiments of the present disclosure, in order to improve the transmission performance of the first signal, the set of symbols associated with the first signal may be associated with a transmission condition of the first signal. Taking the set of symbols associated with the first signal being a set of modulated symbols associated with the first signal as an example, the set of modulated symbols associated with the first signal may be associated with the transmission condition of the first signal. Alternatively, modulation constellation points associated with the set of modulated symbols associated with the first signal may be associated with the transmission condition of the first signal.

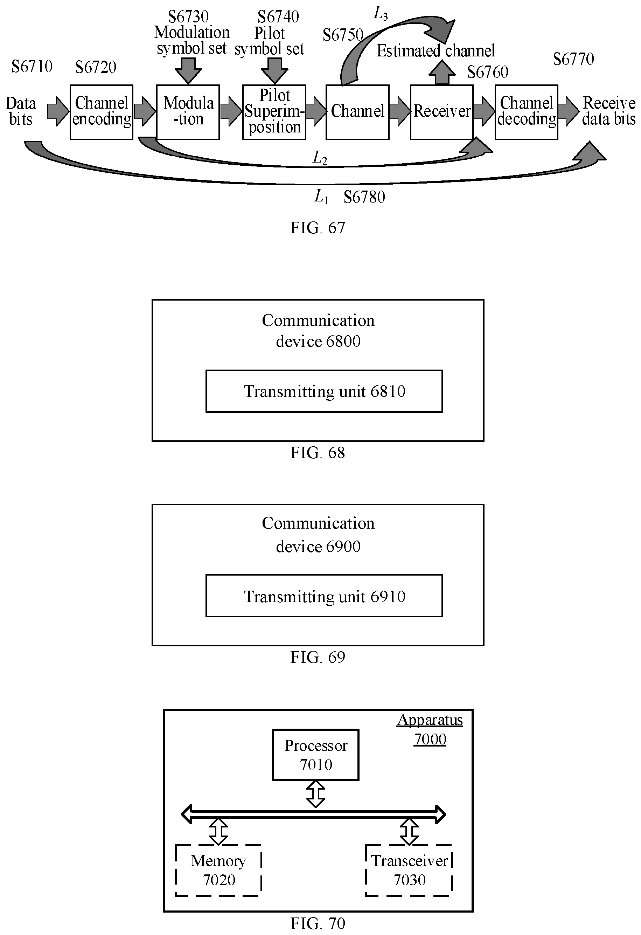

In the embodiments of the present disclosure, there is no limitation on the association relationship between the set of symbols of the first signal and the transmission condition of the first signal. For example, the set of symbols associated with the transmission condition of the first signal may be obtained by adjusting (or learning) based on a preset initial set of symbols in a training process for the AI receiver. The training process may refer to FIG. 67, and will not be repeated herein for the sake of brevity. In addition, if the set of symbols associated with the first signal is not related to the transmission condition, the set of symbols associated with the first signal may be preset.

In addition, in order to improve the transmission performance of the second signal, the set of symbols associated with the second signal may be associated with a transmission condition of the second signal. Taking the set of symbols associated with the second signal being a set of modulated symbols associated with the second signal as an example, the set of modulated symbols associated with the second signal may be associated with the transmission condition of the second signal. Alternatively, modulation constellation points associated with the set of modulated symbols associated with the second signal may be associated with the transmission condition of the second signal. Of course, in the embodiments of the present disclosure, in order to simplify the complexity of the linear superimposition, the set of symbols associated with the second signal described above may also not be related to the transmission condition.

In the embodiments of the present disclosure, there is no limitation on the association relationship between the set of symbols of the second signal and the transmission condition of the second signal. For example, the set of symbols associated with the transmission condition of the second signal may be obtained by adjusting (or learning) based on a preset initial set of symbols in a training process for the model-based receiver. The training process may refer to FIG. 67, and will not be repeated herein for the sake of brevity. In addition, if the set of symbols associated with the second signal is not related to the transmission condition, the set of symbols associated with the second signal may be preset.

In the embodiments of the present disclosure, there is no limitation on the transmission condition involved above. In some implementations, the transmission condition is associated with one or more of: a number of antennas used for transmitting a signal; a channel condition for transmitting a signal; a characteristic of a radio frequency device for transmitting a signal; or a transmission configuration for a signal. The signal may be the first signal and/or the second signal as described above.

In some implementations, the transmission configuration for the signal may include a number of antennas used for transmitting the signal. Of course, in the embodiments of the present disclosure, the transmission configuration of the signal may further include other configurations.

In some other implementations, the characteristic of the radio frequency device for transmitting the signal may affect the frequency of the signal, the transmission power of the signal, etc., which is not specifically limited in the embodiments of the present disclosure.

For ease of understanding, taking the adjustment of the modulation constellation points associated with the second signal as an example, a solution in the embodiments of the present disclosure is introduced below in conjunction with FIG. 14. Referring to FIG. 14, it is assumed that the modulation mode of the second signal is 4QAM modulation, and accordingly, referring to FIG. 14 (a), an initial set of modulation constellation points associated with the second signal may be represented as $C = \{0.707 + 0.707j, 0.707 - 0.707j, - 0.707 + 0.707j, - 0.707 - 0.707j\}$. Accordingly, through learning, a learned set of modulation constellation points associated with the second signal may be represented as $C' = \{(0.707 + x_1) + (0.707 + x_2)j, (0.707 + x_3) - (0.707 + x_4)j, - (0.707 + x_5) + (0.707 - x_6)j, - (0.707 + x_7) - (0.707 + x_8)j\}$, referring to FIG. 14(b).

Referring to FIG. 14(a) to FIG. (b), the optimization for the set of modulation constellation points of the second signal may be understood as a shaping optimization for the initial set of modulation constellation points, which helps to improve the transmission performance of the second signal.

In some scenarios, the transmission conditions may be associated with the learning precision of the initial set of symbols described above. In some implementations, if the transmission condition is better, it means a relatively good transmission performance of the signal, and in this case, the learning precision of the initial set of symbols associated with the signal may be lower. Conversely, if transmission conditions is poor, it means a relatively poor transmission performance of the signal, and in this case, the learning precision of the initial set of symbols associated with the signal may be higher, which helps to improve the transmission performance of the signal.

Taking the transmission condition including the number of antennas used for transmitting the signal as an example, if the higher the number of antennas used for transmitting the signal is, it means that the transmission performance of the signal is relatively good, and in this case, the learning precision of the initial set of symbols corresponding to the signal may be lower. Conversely, if the less the number of antennas used for transmitting the signal is, it means that the transmission performance of the signal is relatively poor, and in this case, the learning precision of the initial set of symbols corresponding to the signal may be higher, which helps to improve the transmission performance of the signal.

Taking the transmission condition including the channel condition used for transmitting the signal as an example, if the better the channel condition used for transmitting the signal is, it means that the transmission performance of the signal is relatively good, and in this case, the learning precision of the initial set of symbols corresponding to the signal may be lower. Conversely, if the worse the channel condition used for transmitting the signal is, it means that the transmission performance of the signal is relatively poor, and in this case, the learning precision of the initial set of symbols corresponding to the signal may be higher, which helps to improve the transmission performance of the signal.

Taking the transmission condition including the characteristic of the radio frequency device for transmitting the signal as an example, if the characteristic of the radio frequency device for transmitting the signal causes the transmission performance of the signal to be relatively good, in this case, the learning precision of the initial set of symbols corresponding to the signal may be lower. Conversely, if the characteristic of the radio frequency device for transmitting the signal causes the transmission performance of the signal to be relatively poor, in this case, the learning precision of the initial set of symbols corresponding to the signal may be higher, which helps to improve the transmission performance of the signal.

Taking the transmission condition including the transmission configuration for the signal as an example, if the better the transmission configuration of the signal is, it means that the transmission performance of the signal is relatively good, and in this case, the learning precision of the initial set of symbols corresponding to the signal may be lower. Conversely, if the worse the transmission configuration of the signal is, it means that the transmission performance of the signal is relatively poor, and in this case, the learning precision of the initial set of symbols corresponding to the signal may be higher, which helps to improve the transmission performance of the signal.

**In a non-orthogonal transmission mode 2,** the first signal and the second signal are transmitted in a non-orthogonal manner in a non-linear superimposition mode on the target transmission resource, or the target signal is generated based on the first signal and the second signal that are non-linearly superimposed. In the embodiments of the present disclosure, generating the target signal based on the non-linear superimposition mode, helps to improve the flexibility of the superimposition of the first signal and the second signal.

In some implementations, the non-linear superimposition may be obtained by non-linearly superimposing the first signal and the second signal based on a first model, or alternatively, the first model is used to non-linearly superimpose the first signal and the second signal. The first model may be, for example, an AI model or a machine learning model. Taking the first model being an AI model as an example, the embodiments of the present disclosure do not limit the field to which the AI model is adapted.

Generally, weights of the first model may be updated based on a transmission condition of the wireless communication, and accordingly, the non-linear superimposition for the first signal and the second signal by using the first model with updated weights, helps to improve the matching between the target signal and the wireless transmission condition, and helps to improve the probability of the target signal being correctly transmitted.

In some implementations, the above-described non-linear superimposition for the first signal and the second signal by using the first model, may include non-linearly superimposing the first signal and the second signal that are spliced, by using the first model.

In the embodiments of the present disclosure, the mode of splicing is not specifically limited. In some implementations, the mode of splicing may include splicing the first signal and the second signal in the time domain, or alternatively, splicing transmission resources occupied by the first signal and transmission resources occupied by the second signal in the time domain dimension, or alternatively, splicing transmission resources used for transmitting the first signal and transmission resources used for transmitting the second signal in the time domain dimension.

For example, splicing in the time domain dimension may include that: a last time-domain resource corresponding to the transmission resources occupied by the first signal is earlier than a first time-domain resource corresponding to the transmission resources occupied by the second signal, and the last time-domain resource corresponding to the first signal is adjacent to the first time-domain resource corresponding to the second signal in the time domain. Alternatively, the transmission resources occupied by the first signal are consecutive in the time domain with the transmission resources occupied by the second signal, and the last time-domain resource of the transmission resources occupied by the first signal is earlier than the first time-domain resource corresponding to the transmission resources occupied by the second signal.

Referring to FIG. 15, taking a time-domain resource being a symbol corresponding to an RE as an example, the transmission resources occupied by the first signal include RB1, and the transmission resources occupied by the second signal include RB2, and accordingly, splicing the transmission resources occupied by the first signal and the transmission resources occupied by the second signal in the time domain, may be understood as splicing REs within RB1 and REs within RB2 in the time domain. That is, a last symbol in RB1 is spliced with a first symbol in RB2, such that the last symbol in RB1 is a last adjacent symbol of the first symbol in RB2.

For another example, splicing in the time domain dimension may include that: a last time-domain resource corresponding to the transmission resources occupied by the first signal is earlier than a first time-domain resource corresponding to the transmission resources occupied by the second signal, and the last time-domain resource corresponding to the first signal is adjacent to the first time-domain resource corresponding to the second signal. Alternatively, the transmission resources occupied by the first signal are consecutive in the time domain with the transmission resources occupied by the second signal, and the last time-domain resource of the transmission resources occupied by the second signal is earlier than the first time-domain resource corresponding to the transmission resources occupied by the first signal.

Referring to FIG. 16, taking a time-domain resource being a symbol corresponding to an RE as an example, the transmission resources occupied by the first signal include RB1, and the transmission resources occupied by the second signal include RB2, and accordingly, splicing the transmission resources occupied by the first signal and the transmission resources occupied by the second signal in the time domain, may be understood as splicing REs within RB2 and REs within RB1 in the time domain. That is, a last symbol in RB2 is spliced with a first symbol in RB1, such that the last symbol in RB2 is a last adjacent symbol of the first symbol in RB1.

In some other implementations, the above-described splicing mode may include splicing the first signal and the second signal in the frequency domain, or alternatively, splicing the transmission resources occupied by the second signal and the transmission resources occupied by the first signal in the frequency domain dimension.

For example, a first frequency-domain resource in the transmission resources occupied by the first signal is a frequency-domain resource with the highest frequency among the transmission resources occupied by the first signal, and a second frequency-domain resource in the transmission resources occupied by the second signal is a frequency-domain resource with the lowest frequency among the transmission resources occupied by the second signal. Accordingly, splicing in the frequency domain dimension may include the frequency of the first frequency-domain resource being lower than the frequency of the second frequency-domain resource, and the frequency of the first frequency-domain resource being consecutive with the frequency of the second frequency-domain resource.

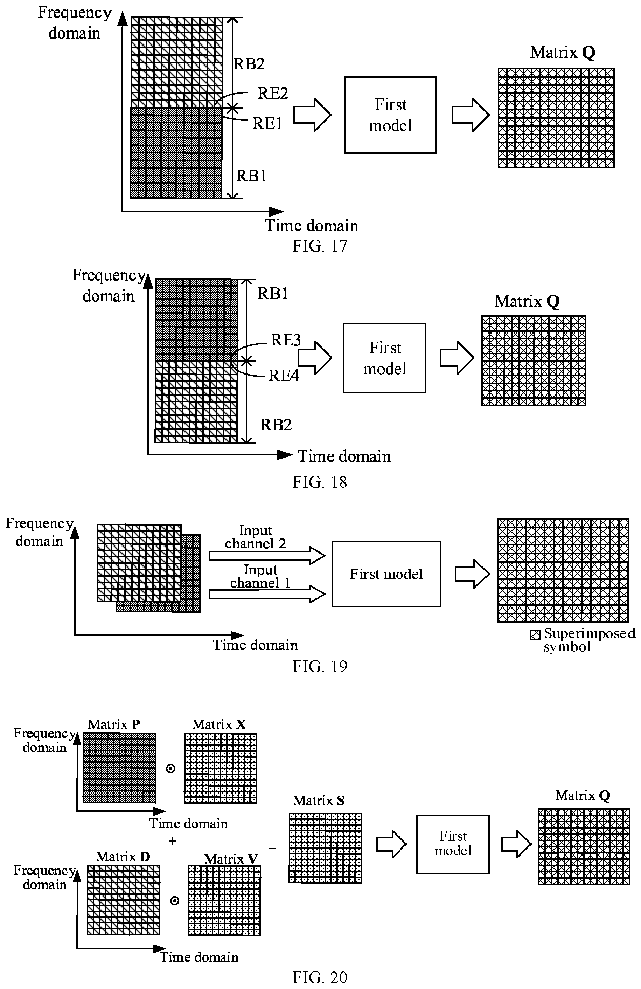

Referring to FIG. 17, the transmission resources occupied by the first signal include RB1, and the first frequency-domain resource is RE1 with the highest frequency in RB1. The transmission resources occupied by the second signal include RB2, and the second frequency-domain resource is RE2 with the lowest frequency in RB2. Accordingly, splicing the transmission resources occupied by the first signal with the transmission resources occupied by the second signal in the frequency domain, may be understood as splicing RE1 and RE2 in the frequency domain, such that the spliced RE1 and RE2 are consecutive in the frequency domain and the frequency corresponding to RE1 is lower than the frequency corresponding to RE2.

For another example, a third frequency-domain resource in the transmission resources occupied by the first signal is a frequency-domain resource with the lowest frequency among the transmission resources occupied by the first signal, and a fourth frequency-domain resource in the transmission resources occupied by the second signal is a frequency-domain resource with the highest frequency among the transmission resource occupied by the second signal. Accordingly, splicing in the frequency domain dimension may include the frequency of the third frequency-domain resource being higher than the frequency of the fourth frequency-domain resource and the frequency of the third frequency-domain resource being consecutive with the frequency of the fourth frequency-domain resource.

Referring to FIG. 18, the transmission resources occupied by the first signal include RB1, and the third frequency-domain resource is RE3 with the lowest frequency in RB1. The transmission resources occupied by the second signal include RB2, and the fourth frequency-domain resource is RE4 with the highest frequency in RB2. Accordingly, splicing the transmission resources occupied by the first signal and the transmission resources occupied by the second signal in the frequency domain, may be understood as splicing RE3 and RE4 in the frequency domain, such that the spliced RE3 and RE4 are consecutive in the frequency domain and the frequency corresponding to RE3 is higher than the frequency corresponding to RE4.

In some other implementations, the above-described splicing mode may include splicing based on an input channel of the first signal and an input channel of the second signal, where the input channel is an input channel of the first model. That is, the first model may include the input channel of the first signal and the input channel of the second signal, and accordingly, the above-described splicing mode may include splicing the first signal input through the input channel of the first signal and the second signal input through the input channel of the second signal.

It should be noted that in the above process of splicing based on the input channels, the signals input through different input channels may be associated with different weights, and of course, the signals input through different input channels may be associated with the same weights, which is not limited in the embodiments of the present disclosure. Taking a weight associated with the input channel of the first signal being weight 1 and a weight associated with the input channel of the second signal being weight 2 as an example, the spliced signal may be determined based on the weight associated with the input channel 1, the first signal, the weight associated with the input channel 2, and the second signal. For example, the spliced signal may be determined based on a sum of the processed first signal and the processed second signal, where the processed first signal may be determined based on the first weight and the first signal, and the processed second signal may be determined based on the second weight and the second signal.

Referring to FIG. 19, the first signal may be input into the first model through input channel 1 and the second signal may be input into the first model through input channel 2. Accordingly, before non-linearly superimposing the first signal and the second signal by using the first model, the first signal and the second signal may be spliced based on the input channels to obtain the spliced signal.

In the embodiments of the present disclosure, the splicing mode based on the input channels is not specifically limited. In some implementations, the spliced signal may be determined based on a sum of the processed first signal and the processed second signal, where the processed first signal may be determined based on a first weight associated with a first input channel and the first signal, and the processed second signal may be determined based on a second weight associated with a second input channel and the second signal.

In the embodiments of the present disclosure, the generating mode of the spliced signal is not specifically limited. For example, the spliced signal may be equal to the sum of the processed first signal and the processed second signal. For another example, the spliced signal may be obtained by processing the sum of the processed first signal and the processed second signal.

In addition, the processed first signal described above is determined based on the first weight and the first signal, which may include, for example, the processed first signal being equal to a product of the first weight and the first signal. For another example, it may include the processed first signal being obtained by processing the product of the first weight and the first signal. Accordingly, the processed second signal described above is determined based on the second weight and the second signal, which may include, for example, the processed second signal being equal to a product of the second weight and the second signal. For another example, it may include, for example, the processed second signal being obtained by processing the product of the second weight and the second signal.

The above introduces the solution of non-linear superimposition for the spliced first signal and second signal by using the first model. In the embodiments of the present disclosure, the first model may also be used to perform the non-linear superimposition on the first signal and the second signal that have been linearly superimposed. A solution of the linear superimposition may refer to the solution in the non-orthogonal transmission mode 1 described above, which will not be repeated herein for the sake of brevity.

Referring to FIG. 20, assuming that the dimension of REs in the RB may be represented as $N \times M$, the matrix **P** associated with the pilot signal and the matrix **D** associated with the data signal may be represented as matrices of $N \times M$, and the first parameter may be denoted as a matrix **X** of $N \times M$ and the second parameter may be a matrix **V** of $N \times M$. Accordingly, the linearly superimposed matrix **S** may be represented as being determined based on $S = V \odot D + X \odot P$, where the matrix $V = sqrt(A) \in [0, 1]^{N \times M}$, the matrix $X = sqrt(1 - A) \in [0, 1]^{N \times M}$, $A \in [0, 1]^{N \times M}$, the matrix $D \in C^{N \times M}$, the matrix $P \in B^{N \times M}$. Then, the matrix **S** is input into the first model, to nonlinearly superimpose the linearly superimposed matrix **S,** to obtain a matrix **Q** representing the target signal.

As introduced above, after the non-linear superimposition of the first signal and the second signal based on the first model, the size of the transmission resource set may be exceeded, or the dimension of the first signal and the second signal that have been non-linear superimposed is larger than the dimension corresponding to the transmission resource set. Therefore, the first model may process the first signal and the second signal to match the size of the transmission resource set. In some implementations, the first model may include a downsampling computation process, and accordingly, the first model may use the downsampling computation process to process the first signal and the second signal, to match the size of the transmission resource set. For example, if the first model is a CNN, the first model may use the downsampling computation process, in a convolutional processing process performed on the first signal and the second signal, such that a nonlinear superimposition result of the first signal and the second signal that is output by the first model matches the size of the transmission resource set. For another example, if the first model is a CNN and the first signal and the second signal are spliced with each other based on the input channels, in this case, the number of convolutional channels in the first model may be adjusted such that the nonlinear superimposition result of the first signal and the second signal that is output by the first model matches the size of the transmission resource set.

In order to improve the adaptability between the signals to be transmitted and the wireless environment characteristics, in some implementations, a second model may be used to pre-process the first signal, before the linear superimposition or nonlinear superimposition based on the first signal. The second model is used to adjust the set of symbols of the first signal. Taking the set of symbols being a set of modulation constellation points as an example, the second model may be used to adjust the modulation constellation points of the first signal.

In the embodiments of the present disclosure, there is no limitation on the acquiring mode of parameters in the second model. For example, the parameters in the second model may be obtained by learning based on modulation constellation points of different signals in the training phase. For another example, the parameters in the second model may be obtained by learning based on correlations between different signals in the time domain and/or the frequency domain in the training phase. This will be introduced below specifically in conjunction with the training process of the embodiments of the present disclosure, which is not limited here for the sake of brevity.

In some other implementations, the second signal may be pre-processed by using a third model, before the linear superimposition or non-linear superimposition based on the second signal. The third model is used to adjust the set of symbols of the second signal. Taking the set of symbols being a set of modulation constellation points as an example, the third model may be used to adjust the modulation constellation points of the second signal.

In the embodiments of the present disclosure, there is no limitation on the acquiring mode of parameters in the third model. For example, the parameters in the third model may be obtained by learning based on modulation constellation points of different signals in the training phase. For another example, the parameters in the third model may be obtained by learning based on correlations between different signals in the time domain and/or the frequency domain in the training phase. This will be introduced below specifically in conjunction with the training process of the embodiments of the present disclosure, which is not limited here for the sake of brevity.

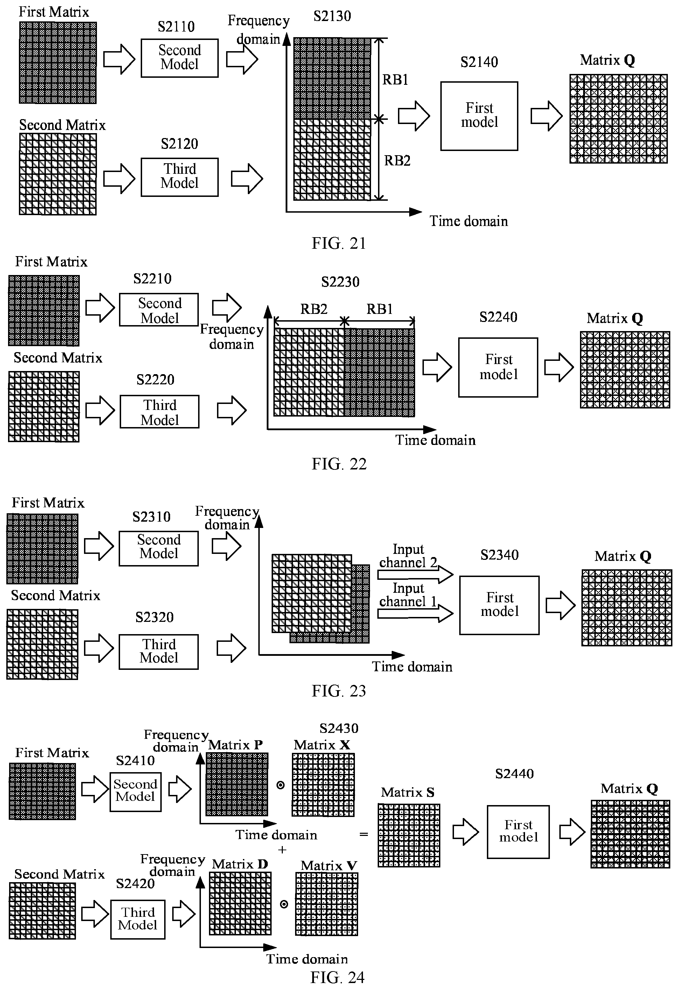

Of course, in the embodiments of the present disclosure, in order to improve the adaptability of the first signal and the second signal transmitted in a non-orthogonal manner to the wireless communication environment, the above-described second model may be used in combination with the third model. That is, the set of symbols corresponding to the first signal is processed by using the second model to obtain the processed first signal; the set of symbols corresponding to the second signal is processed by using the third model to obtain the processed second signal; and the first model is used to perform the nonlinear superimposition, based on the processed first signal and the processed second signal. For ease of understanding, solutions for pre-processing the signals based on the second model and the third model in the embodiments of the present disclosure are introduced below in conjunction with FIG. 21 to FIG. 25.

Referring to FIG. 21, it is assumed that a first matrix represents the first signal transmitted on each RE in RB1, and a second matrix represents the second signal transmitted on each RE in RB2. Referring to step S2110, the first matrix is input into the second model to adjust constellation modulation points of the first matrix, and then, the second model outputs the adjusted first matrix. Referring to step S2120, the second matrix is input into the third model to adjust constellation modulation points of the second matrix, and then, the third model outputs the adjusted second matrix. Referring to step S2130, the adjusted first matrix and the adjusted second matrix are spliced in the frequency domain to obtain the spliced matrix. Referring to step S2140, the spliced matrix is input into the first model for the nonlinear superimposition, to output the superimposed matrix **Q,** where the superimposed matrix **Q** is used to represent the first signal and the second signal superimposed on each RE in the RB.

Referring to FIG. 22, it is assumed that a first matrix represents the first signal transmitted on each RE in RB1, and a second matrix represents the second signal transmitted on each RE in RB2. Referring to step S2210, the first matrix is input into the second model to adjust constellation modulation points of the first matrix, and then, the second model outputs the adjusted first matrix. Referring to step S2220, the second matrix is input into the third model to adjust constellation modulation points of the second matrix, and then, the third model outputs the adjusted second matrix. Referring to step S2230, the adjusted first matrix and the adjusted second matrix are spliced in the time domain to obtain the spliced matrix. Referring to step S2240, the spliced matrix is input into the first model for the nonlinear superimposition, to output the superimposed matrix **Q,** where the superimposed matrix **Q** is used to represent the first signal and the second signal superimposed on each RE in the RB.

Referring to FIG. 23, it is assumed that a first matrix represents the first signal transmitted on each RE in RB1, and a second matrix represents the second signal transmitted on each RE in RB2. Referring to step S2310, the first matrix is input into the second model to adjust constellation modulation points of the first matrix, and then, the second model outputs the adjusted first matrix. Referring to step S2320, the second matrix is input into the third model to adjust constellation modulation points of the second matrix, and then, the third model outputs the adjusted second matrix. Referring to step S2330, the adjusted first matrix and the adjusted second matrix are spliced based on the input channels of the first model to obtain the spliced matrix. Referring to step S2340, the spliced matrix is input to the first model for the nonlinear superimposition, to output the superimposed matrix **Q,** where the superimposed matrix **Q** is used to represent the first signal and the second signal superimposed on each RE in the RB.

Referring to FIG. 24, it is assumed that a first matrix represents the first signal transmitted on each RE in RB1, and a second matrix represents the second signal transmitted on each RE in RB2. Referring to step S2410, the first matrix is input into the second model to adjust constellation modulation points of the first matrix, and then, the second model outputs the adjusted first matrix. Referring to step S2420, the second matrix is input into the third model to adjust constellation modulation points of the second matrix, and then, the third model outputs the adjusted second matrix. Referring to step S2430, the adjusted first matrix and the adjusted second matrix are linearly superimposed based on the matrix associated with the first parameter and the matrix associated with the second parameter, to obtain the linearly superimposed matrix **S**. Referring to step S2440, the spliced matrix **S** is input into the first model for the nonlinear superimposition, to output the superimposed matrix **Q,** where the superimposed matrix **Q** is used to represent the first signal and the second signal superimposed on each RE in the RB.

The non-orthogonal transmission mode 1 and the non-orthogonal transmission mode 2 in the embodiments of the present disclosure are introduced above in conjunction with FIG. 11 to FIG. 24. Of course, other non-orthogonal transmission modes may also be used in the embodiment of the present disclosure, which are introduced below based on the first parameter in conjunction with a non-orthogonal transmission mode 3 to a non-orthogonal transmission mode 6.

In some implementations, a first parameter is associated with the target transmission resource, and used to adjust energy of the first signal on the target transmission resource. Alternatively, the first parameter is used to adjust power of the first signal on the target transmission resource. For example, the first parameter may be the first parameter in non-orthogonal transmission mode 1 as above.

**In a non-orthogonal transmission mode 3,** first parameters associated with multiple target transmission resources within a same time-domain unit in the first resource set are same, where the first resource set may include one or more target transmission resources.

In some implementations, the first resource set may include one or more time-domain units. If the first resource set includes a plurality of time-domain units, the first parameters associated with the target transmission resources within each time-domain unit of the plurality of time-domain units may be the same.

In the embodiments of the present disclosure, there is no limitation on the range of values of the first parameters. In some implementations, the range of values of the first parameters may be between 0 and 1. For example, the value of the first parameter may be 0.05, the value of the first parameter may be 0.1, the value of the first parameter may be 0.2, and the value of the first parameter may be 0.4. For another example, the first parameter may be set such that the energy of the target signal transmitted on the target transmission resource is less than an energy threshold associated with the target transmission resource. In some other implementations, the first parameter may be set such that the power of the target signal transmitted on the target transmission resource is less than a power threshold associated with the target transmission resource.

The time-domain unit is not limited in the embodiments of the present disclosure. For example, the time-domain unit may be a symbol, a slot, a mini slot, a subframe, etc. Taking the time-domain unit being a symbol as an example, REs within the symbol may be taken as an example of the above-described target transmission resources.

For ease of understanding, the first parameter associated with the target transmission resource in the first resource set in the embodiments of the present disclosure is introduced below in conjunction with FIG. 25. Referring to FIG. 25, assuming that the first resource set is an RB and each RE in the RB is a target transmission resource, the target transmission resource in the first resource set may be represented as a matrix of N × M.

Accordingly, the first parameter associated with the target transmission resource in the first resource set may be represented as a matrix $\mathbf{X}$ of N × M, where all the elements in the matrix $\mathbf{X}$ are equal, i.e., $\mathbf{X}_{k,i} = \mathbf{X}_{k,j} = Y$ ($i \neq j$, $i,j \in [1,M]$, $k \in [1,N]$), and $\mathbf{X}_{k,i}$ represents an element of a $k$-th row and an $i$-th column of the matrix $\mathbf{X}$, $\mathbf{X}_{k,j}$ represents an element of the $k$-th row and a $j$-th column of the matrix $\mathbf{X}$. Matrix $\mathbf{X}$ is determined based on a matrix $\mathbf{B}$, where $\mathbf{B}_{k,i} = \mathbf{B}_{k,j} = Y$ ($i \neq j$, $i,j \in [1,M]$, $k \in [1,N]$), $\mathbf{B}_{k,i}$ represents an element of a $k$-th row and an $i$-th column of the matrix $\mathbf{B}$, and $\mathbf{B}_{k,j}$ represents an element of the $k$-th row and a $j$-th column of the matrix $\mathbf{B}$.

In some implementations, the setting mode of the first parameter described above may be determined based on a pattern. For example, the first parameter shown in FIG. 25 may be taken as a pattern for determining the first parameter associated with the target transmission resource in the first resource set.

The setting mode of the first parameter involved in the embodiments of the present disclosure is simple and helps to reduce the overhead of transmitting configuration parameters required to configure the first parameter. In addition, since configuration parameters required to configure the first parameter are few, the setting mode of the first parameter in the embodiments of the present disclosure may be applicable to high-speed moving scenarios.

**In a non-orthogonal transmission mode 4,** first parameters associated with a plurality of target transmission resources within different time-domain units in the first resource set are partially or completely different, where the first resource set may include one or more target transmission resources.

For example, the first resource set may include a time-domain unit 1 and a time-domain unit 2, and the first parameters associated with the target transmission resources in the time-domain unit 1 are different from the first parameters associated with the target transmission resources in the time-domain unit 2. The time-domain unit 1 and the time-domain unit 2 are two certain time-domain units in the first resource set, or, the time-domain unit 1 and the time-domain unit 2 are any two time-domain units in the first resource set.

For another example, the first resource set may include a time-domain unit 1 to a time-domain unit 5, the first parameters associated with the target transmission resources in the time-domain unit 1 are different from the first parameters associated with the target transmission resources in the time-domain unit 5, and additionally, the first parameters associated with the target transmission resources in the time-domain units 2 to 4 are the same.

In the embodiments of the present disclosure, there is no limitation on the change mode of the first parameters associated with the target transmission resources in different time-domain units in the first resource set. The following introduces the change rule of the first parameters in the embodiments of the present disclosure based on a first time-domain position and a second time-domain position, in conjunction with Example 4-1 to Example 4-4. The first time-domain position and the second time-domain position are two different time-domain positions among time-domain positions in which the target transmission resources in the first resource set are located.

In some implementations, the first time-domain position may be an earliest time-domain position in the first resource set in the time domain, or the first time-domain position is earlier in the time domain than other time-domain positions other than the first time-domain position in the first resource set, and taking the first resource set as an RB, the first time-domain position may be a time-domain position of a first symbol in the RB. Of course, in the embodiments of the present disclosure, the first time-domain position may be a latest time-domain position in the first resource set in the time domain, or the first time-domain position is not earlier in the time domain than other time-domain positions other than the first time-domain position in the first resource set. The first resource set is taken as an RB, and the first time-domain position may be a time-domain position of a last symbol in the RB.

In some other implementations, the second time-domain position is a center time-domain position in the first resource set. The center time-domain position may include one or more time-domain units. If the first resource set includes RE1, RE2, and RE3 that are consecutive in the time domain, the center time-domain position of the first resource set may be a time-domain position of RE2. Taking the first resource set including RE1, RE2, RE3, RE4, and RE5 that are consecutive in the time domain as an example, the center time-domain position of the first resource set may be time-domain positions of RE2 to RE4.

Of course, in the embodiments of the present disclosure, the second time-domain position may be the earliest time-domain position in the first resource set in the time domain, or the second time-domain position is earlier in the time domain than other time-domain positions other than the second time-domain position in the first resource set, and taking the first resource set as an RB, the second time-domain position may be the time-domain position of the first symbol in the RB. Of course, in the embodiments of the present disclosure, the second time-domain position may be the latest time-domain position in the first resource set in the time domain, or the second time-domain position is not earlier in the time domain than other time-domain positions other than the second time-domain position in the first resource set. The first resource set is taken as an RB, and the second time-domain position may be a time-domain position of a last symbol in the RB.

In the embodiments of the present disclosure, there is no limitation on the combination mode between the first time-domain position and the second time-domain position. For example, the first time-domain position is the earliest time-domain position in the first resource set in the time domain, and the second time-domain position may be the latest time-domain position in the first resource set in the time domain. For another example, the first time-domain position is the earliest time-domain position in the first resource set in the time domain, and the second time-domain position may be the center time-domain position of the first resource set. For another example, the first time-domain position is the latest time-domain position in the first resource set in the time domain, and the second time-domain position may be the center time-domain position of the first resource set.

In some implementations, if the second time-domain position is the center time-domain position, a trend of change in the first parameters in the first resource set may be axisymmetric, where the axisymmetric may be understood as being axisymmetric with the center time-domain position as a center axis, that is, if the second time-domain position is the center frequency-domain position, the trend of change in the first parameters associated with the target transmission resources on two sides of the second time-domain position is opposite. Of course, in the embodiments of the present disclosure, if the second time-domain position is the center time-domain position, the trend of change in the first parameters associated with the target transmission resources on two sides of the second time-domain position may also be the same, which is not limited in the embodiments of the present disclosure.

**In Example 4-1,** target transmission resources between the first time-domain position and the second time-domain position satisfy Rule 4-1.

In some implementations, Rule 4-1 includes a first parameter associated with each target transmission resource increasing, in order of time-domain units from early to late in the time domain. For example, if a time-domain unit 1 is earlier in the time domain than a time-domain unit 2, the value of the first parameter associated with the target transmission resource in the time-domain unit 1 is less than the value of the first parameter associated with the target transmission resource in the time-domain unit 2.

In some implementations, if the above Rule 4-1 is combined with the change in the first parameters in the first resource set being the axisymmetric change trend as introduced above, referring to the following in conjunction with FIG. 26, the trend of change in the first parameters associated with the target transmission resources in the first resource set is decreasing from the center time-domain position to edge time-domain positions. This trend of change in the first parameters may be applicable to scenarios in which the communication device is moving at a low speed.

It should be noted that the first parameters associated with the target transmission resources within the same time-domain unit in the first resource set described above may be the same, or the first parameters associated with the target transmission resources corresponding to different frequencies within the same time-domain unit described above may be the same. Of course, in the embodiments of the present disclosure, the first parameters associated with the target transmission resources within the same time-domain unit in the first resource set described above may also be partially or completely different.

In the embodiments of the present disclosure, there is no limitation on the mode in which the first parameter increases. For example, the first parameters associated with the first resource set may increase according to a fixed step size, where the fixed step size may be a fixed value (e.g., 0.05) or a fixed proportional value (e.g., 0.5%). For another example, the first parameters associated with the first resource set may increase according to variable step sizes.

For ease of understanding, the change mode of the first parameters in the embodiments of the present disclosure is introduced below in conjunction with FIG. 26. Assuming that the first resource set is an RB, the target transmission resources in the first resource set may be represented as $N \times M$ REs.

Referring to FIG. 26, the second time-domain position 2610 is a center time-domain position of the RB, and the first time-domain position 2620 is a time-domain position of an earliest RE in the RB. Accordingly, the first parameters associated with the target transmission resources between the second time-domain position 2610 and the first time-domain position 2620 satisfy the above Rule 4-1, i.e., the first parameter associated with each target transmission resource increasing in order of time-domain units from early to late in the time domain. In addition, the trend of change in the first parameters associated with the time-domain units in the first resource set is axisymmetric, that is, a trend of change in first parameters associated with target transmission resources between an RE with the latest time-domain position in the first resource set (referring to 2630) and the second time-domain position is opposite to the trend of change in the first parameters associated with the target transmission resources between the second time-domain position 2610 and the first time-domain position 2620. In this case, it can be understood that the trend of change in the first parameters associated with the target transmission resources in the first resource set is decreasing from the center time-domain position to the edge time-domain positions.

**In Example 4-2,** target transmission resources between the first time-domain position and the second time-domain position satisfy Rule 4-2.

In some implementations, Rule 4-2 includes a first parameter associated with a target transmission resource increasing at every interval of $q$ time-domain units, in order of time-domain units from early to late in the time domain, where $q$ is a positive integer greater than or equal to 0. It should be understood that if the value of $q$ is 0, the trend of the change in the first parameters associated with the target transmission resources in the first resource set may refer to the related introduction in Example 4-1, and will not be repeated herein for the sake of brevity.

In some implementations, the value of q described above may be a fixed value. Of course, in some other implementations, the value of q described above may be variable, for example, the value of q may be randomly variable.

In addition, in the embodiments of the present disclosure, there is no limitation on the change mode of the first parameters. In some implementations, the first parameter may change according to a first proportion. For example, the change mode of the first parameters may include changing once according to a proportion coefficient $r$ at every interval of $q$ time-domain units. In some other implementations, the first parameters may change according to a first step size. For another example, the change mode of the first parameters may include changing once at every interval of $q$ time-domain units according to a first step size.

In some implementations, if the above-described Rule 4-2 is combined with the change in the first parameters in the first resource set being the axisymmetric change trend as introduced above, referring to the following in conjunction with FIG. 27 or FIG. 28, the trend of change in the first parameters associated with the target transmission resources in the first resource set is decreasing from the center time-domain position to the edge time-domain positions. This trend of change in the first parameters may be applicable to scenarios in which the communication device is moving at a low speed.

It should be noted that the first parameters associated with the target transmission resources within the same time-domain unit in the first resource set described above may be the same, or the first parameters associated with the target transmission resources corresponding to different frequencies within the same time-domain unit described above may be the same. Of course, in the embodiments of the present disclosure, the first parameters associated with the target transmission resources within the same time-domain unit in the first resource set described above may also be partially or completely different.

In the embodiments of the present disclosure, there is no limitation on the mode in which the first parameters increase. For example, the first parameters associated with the first resource set may increase according to a fixed step size, where the fixed step size may be a fixed value (e.g., 0.05) or a fixed proportional value (e.g., 0.5%). For another example, the first parameters associated with the first resource set may increase according to variable step sizes.

For ease of understanding, the change mode of the first parameters in the embodiments of the present disclosure is introduced below in conjunction with FIG. 27 and FIG. 28. Assuming that the first resource set is an RB, the target transmission resources in the first resource set may be represented as N × M REs.

Referring to FIG. 27, it is assumed that the value of q is 2, the second time-domain position 2710 is the center time-domain position of the RB, and the first time-domain position 2720 is a time-domain position of an earliest RE in the RB. Accordingly, the first parameters associated with the target transmission resources between the second time-domain position 2710 and the first time-domain position 2720 satisfy the above Rule 4-2, i.e., the first parameters associated with the target transmission resources increasing at every interval of 2 time-domain units in order of time-domain units from early to late in the time domain. In addition, the trend of change in the first parameters associated with the time-domain units in the first resource set is axisymmetric, that is, a trend of change in first parameters associated with target transmission resources between an RE (referring to 2730) with the latest time-domain position in the first resource set and the second time-domain position is opposite to the trend of change in the first parameters associated with the target transmission resources between the second time-domain position 2710 and the first time-domain position 2720. In this case, it can be understood that the trend of change in the first parameters associated with the target transmission resources in the first resource set is decreasing from the center time-domain position to the edge time-domain positions.

Referring to FIG. 28, it is assumed that the value of q is 4, the second time-domain position 2810 is the center time-domain position of the RB, and the first time-domain position 2820 is a time-domain position of an earliest RE in the RB. Accordingly, the first parameters associated with the target transmission resources between the second time-domain position 2810 and the first time-domain position 2820 satisfy the above Rule 4-2, i.e., the first parameters associated with the target transmission resources increasing at every interval of 4 time-domain units in order of time-domain units from early to late in the time domain. In addition, the trend of change in the first parameters associated with the time-domain units in the first resource set is axisymmetric, that is, a trend of change in first parameters associated with target transmission resources between an RE with the latest time-domain position in the first resource set (referring to 2830) and the second time-domain position is opposite to the trend of change in the first parameters associated with the target transmission resources between the second time-domain position 2810 and the first time-domain position 2820. In this case, it can be understood that the trend of change in the first parameters associated with the target transmission resources in the first resource set is decreasing from the center time-domain position to the edge time-domain positions.

In some scenarios, the trend of change in the first parameters introduced above in conjunction with Example 4-1 and Example 4-2 may be represented by two parameters (a parameter 1 and a parameter 2), where the parameter 1 represents an initial value of the first parameter associated with each target transmission resource in the first resource set. The parameter 2 represents an adjusted value of the first parameter associated with the target transmission resource in the first resource set. The parameter 2 may be set such that the change in the first parameters associated with the target transmission resources in the first resource set satisfies being conformed with the above-described Rule 4-1 and/or Rule 4-2. That is, the first parameter is obtained by adjusting according to the adjusted value indicated by the parameter 2, on the basis of the initial value indicated by the parameter 1. Thus, it can be seen that the trend of change in the first parameters associated with the target transmission resources in the first resource set is determined based on a trend of change in the adjusted value in the parameter 2, or the trend of change in the first parameters associated with the target transmission resources in the first resource set is matched with the trend of change in the adjusted value in the parameter 2, for example, the trend of change in the first parameters associated with the target transmission resources in the first resource set is the same as the trend of change in the adjusted value in the parameter 2.

Taking the target transmission resource contained in the first resource set being represented as a matrix of N × M as an example, the first parameter associated with the target transmission resource in the first resource set may be represented as a matrix **X**. The above-described parameter 1 and parameter 2 may be represented by a matrix **B** of N × M and a matrix **G** of N × M, respectively. Accordingly, the matrix **X** is obtained by adjusting according to the adjusted value indicated by the matrix **G,** on the basis of the initial value indicated by the matrix **B.** For example, the matrix **X** = matrix **B** + matrix **G.** Thus, the matrix **B** may also be referred to as a base matrix and the matrix **G** may also be referred to as a gradual matrix.

In some implementations, the initial values of the first parameters associated with the target transmission resources in the first resource set may be the same, which helps to simplify the process of configuring the initial values. Taking the matrix **B** an example, the matrix **B** satisfies $B_{k,i} = B_{k,j} = Y(i \neq j, i,j \in [1,M], k \in [1,N])$. Of course, the initial values of the first parameters may be different, in the embodiments of the present disclosure.

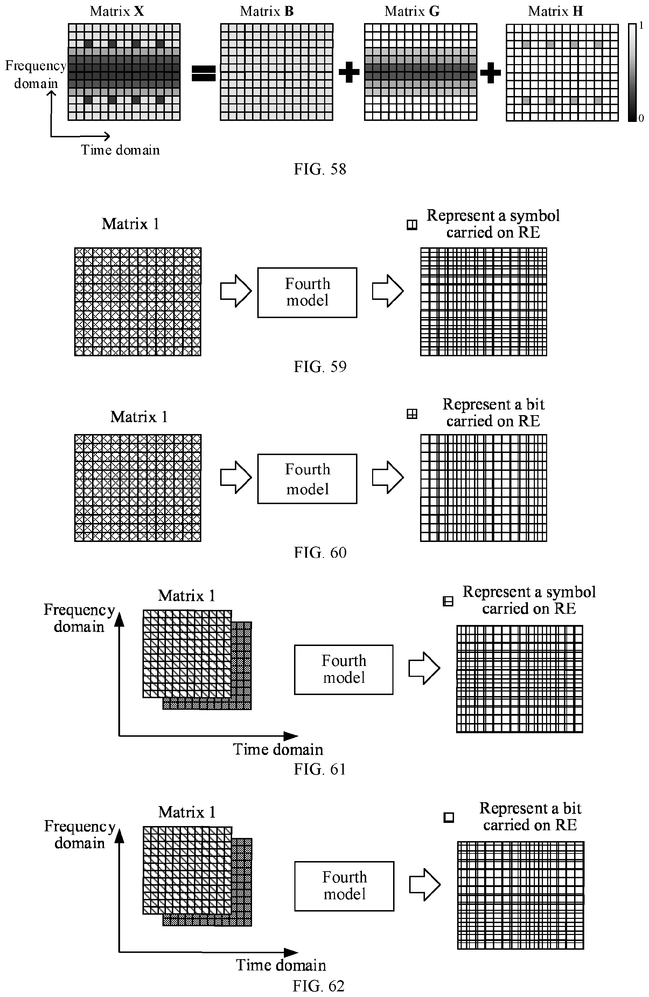

For ease of understanding, the trend of change in the first parameters in the first resource set is introduced below in terms of the matrix **X,** matrix **B,** and matrix **G,** in conjunction with FIG. 58 to FIG. 60. It should be understood that since the first parameters associated with the target transmission resources increasing in the order of time-domain units from early to late in the time domain is combined with the trend of change in the first parameters being axisymmetric as above, the trend of change in the first parameters may be replaced with decreasing in the matrix **X** from a center position in the matrix **X** to edge positions in the matrix **X**. Accordingly, the trend of change in the adjustment values in the matrix **G** may be decreasing from a center position of the matrix **G** to edge positions of the matrix **G.** For ease of description, the following introduces an example of the trend of change replaced as above.

It is assumed that the matrix **X** is generated by summing the matrix **B** and the matrix **G,** i.e., matrix **X** = matrix **B** + matrix **G.** The initial values of the first parameters indicated in the matrix **B** are the same, i.e., the matrix **B** satisfies $B_{k,i} = B_{k,j} = Y(i \neq j, i,j \in [1,M], k \in [1,N])$. The trend of the change in the adjustment values in the matrix **G** is the same as the trend of the change in the first parameters in the matrix **X,** i.e., the change in the adjustment values in the matrix **G** satisfies the following conditions that: the adjustment values of the target transmission resources at different frequency-domain positions associated within the same time-domain unit in the matrix **G** are the same, and the adjustment values of the target transmission resources within different time-domain units associated on the same frequency-domain position are different. The adjustment values in the matrix **G** located at the left and right ends of the matrix are less than or equal to an adjustment value located at the center position of the matrix, and the trend of change in the adjustment values in the matrix **G** is axisymmetric with an adjustment value associated with the center time-domain position as the center axis. Accordingly, the change in the adjustment values in the matrix **G** may be represented as: $G_{k,i} = G_{k,M-i+1}$ ($i \in [1,M]$, $k \in [1,N]$), $G_{k,i} \leq G_{k,i+1}$ ( $i \in [1, \lceil M/2 \rceil]$ , $k \in [1,N]$) and if M is odd,

$$G_{k,\lceil M/2 \rceil} = P \quad (k \in [1,N]),$$ and if M is even, $G_{k,M/2} = G_{k,M/2+1} = P(k \in [1,N])$, and P represents the value of the adjustment value located at the center axis in the matrix **G**. In addition, the adjusted values in the matrix **G** decrease from the center axis to the edges of the matrix **G** according to a Rule F, and the remaining time-domain units are set to zero after S ( $S \leq \lfloor M/2 \rfloor$ ) time-domain units are decreased. The Rule F may include decreasing once at every interval of $q$ time-domain units by a proportion coefficient $r$ ($r<1$) and decreasing once at every interval of $q$ time-domain units by a first step size $t$ (

$$t \lceil S/q \rceil \leq 1$$ ), where ⌊ ⌋ represents rounding down.

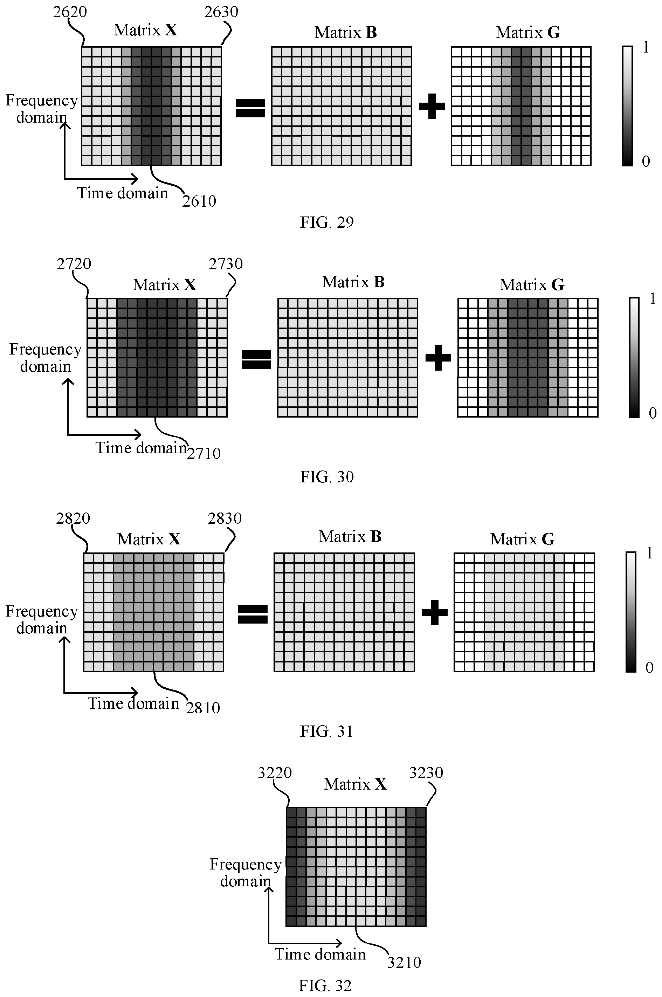

Solutions for constructing the matrix **X** in the embodiments of the present disclosure are introduced below in conjunction with FIG. 29 to FIG. 31. It should be noted that the embodiments of the present disclosure do not specifically limit parameters involved below, and in some cases, the process of constructing the matrix **X** may include some parameters of the parameters involved below. In addition, the parameters involved below may be replaced with other parameters that have the similar functions.

Referring to FIG. 29, the matrix **X** shown in FIG. 26 may be constructed by a formula: matrix **X** = matrix **B** + matrix **G,** where $Y = 0.1$, $S = 3$, $P = 0.6$, $q = 1$, $r = 0.5$, and the Rule F includes decreasing once at every interval of $q=1$ time-domain unit by a proportion coefficient $r = 0.5$ and the values of the remaining columns are zero after S=3 columns is decreased. That is, the initial values of the first parameters in the matrix **B** are 0.1. The change rule of the adjusted values in the matrix **G** includes $G_{k,i} = G_{k,M-i+1}$ ($i \in [1,M]$, $k \in [1,N]$), $G_{k,i} \leq G_{k,i+1}$ ( $i \in [1,[M/2]]$, $k \in [1,N]$); $G_{k,M/2} = G_{k,M/2+1} = P = 0.6$ ($k \in [1,N]$), i.e., in a case where the value of M is 14, the adjusted values of the 7-th column and the 8-th column in the matrix **G** are 0.6; and after 3 columns are decreased according to the Rule F starting from the 7-th column to the left side of the matrix **G** (i.e., the 7-th column to the 5-th column decreases), the adjusted values in the remaining columns are 0; and after 3 columns are decreased according to the Rule F starting from the 8-th column to the right side of the matrix **G** (i.e., the 8-th column to the 10-th column decreases), the adjusted values in the remaining columns are 0.

Accordingly, continuing to refer to FIG. 29, the trend of change in the matrix **X** obtained from the superimposition of the matrix **B** and the matrix **G** described above may satisfy: $X_{k,i} = X_{k,M-i+1}$ ($i \in [1,M]$, $k \in [1,N]$), $X_{k,i} \leq X_{k,i+1}$ ( $i \in [1,[M/2]]$, $k \in [1,N]$); $X_{k,M/2} = X_{k,M/2+1} = P+Y = 0.7$ ($k \in [1,N]$), i.e., in a case where the value of M is 14, the values of the first parameters of the 7-th column and the 8-th column in the matrix **X** is 0.7; and after 3 columns are decreased according to the Rule F starting from the 7-th column to the left side of the matrix **X** (the 7-th column to the 5-th column decreases), the values of the first parameters in the remaining columns are 0; and after 3 columns are decreased according to the Rule F starting from the 8-th column to the right side of the matrix **X** (the 8-th column to the 10-th column decreases), the values of the first parameters in the remaining columns are 0.

Referring to FIG. 30, the matrix **X** shown in FIG. 27 may be constructed by a formula: matrix **X** = matrix **B** + matrix **G,** where $Y = 0.1$, $S = 4$, $P = 0.6$, $q = 2$, $r = 0.4$, and the Rule F includes decreasing once at every interval of $q$=2 time-domain units by a proportion coefficient $r = 0.4$ and the values of the remaining columns are zero after S=4 columns is decreased. That is, the initial values of the first parameters in the matrix **B** are 0.1. The change rule of the adjusted values in the matrix **G** includes $G_{k,i} = G_{k,M-i+1}$ ($i \in [1,M]$, $k \in [1,N]$), $G_{k,i} \leq G_{k,i+1}$ ( $i \in [1,[M/2]]$, $k \in [1,N]$); $G_{k,M/2} = G_{k,M/2+1} = P = 0.6$ ($k \in [1,N]$), i.e., in a case where the value of M is 14, the adjusted values of the 7-th column and the 8-th column in the matrix **G** are 0.6; and after 4 columns are decreased according to the Rule F starting from the 7-th column to the left side of the matrix **G** (i.e., the 7-th column to the 4-th column decreases), the adjusted values in the remaining columns are 0; and after 4 columns are decreased according to the Rule F starting from the 8-th column to the right side of the matrix **G** (i.e., the 8-th column to the 11-th column decreases), the adjusted values in the remaining columns are 0.

Accordingly, continuing to refer to FIG. 30, the trend of change in the matrix **X** obtained from the superimposition of the matrix **B** and the matrix **G** described above may satisfy: $X_{k,i} = X_{k,M-i+1}$ ($i \in [1,M]$, $k \in [1,N]$), $X_{k,i} \leq$ $X_{k,i+1}$ ( $i \in [1,[M/2]]$, $k \in [1,N]$); $X_{k,M/2} = X_{k,M/2+1} = P+Y = 0.7$ ($k \in [1,N]$), i.e., in a case where the value of M is 14, the values of the first parameters of the 7-th column and the 8-th column in the matrix **X** is 0.7; and after 4 columns are decreased according to the Rule F starting from the 7-th column to the left side of the matrix **X** (the 7-th column to the 4-th column decreases), the values of the first parameters in the remaining columns are 0; and after 4 columns are decreased according to the Rule F starting from the 8-th column to the right side of the matrix **4** (the 8-th column to the 11-th column decreases), the values of the first parameters in the remaining columns are 0.

Referring to FIG. 31, the matrix **X** shown in FIG. 28 may be constructed by a formula: matrix **X** = matrix **B** + matrix **G,** where $Y = 0.1$, $S = 4$, $P = 0.6$, $q = 4$, and the Rule F includes decreasing once at every interval of $q$=4 time-domain unit by a first step size $t$=1 and the values of the remaining columns are zero after S=4 columns is decreased. That is, the initial values of the first parameters in the matrix **B** are 0.1. The change rule of the adjusted values in the matrix **G** includes $G_{k,i} = G_{k,M-i+1}$ ($i \in [1,M]$, $k \in [1,N]$), $G_{k,i} \leq G_{k,i+1}$ ( $i \in [1,[M/2]]$, $k \in [1,N]$); $G_{k,M/2} = G_{k,M/2+1} = P = 0.6$ ($k \in [1,N]$), i.e., in a case where the value of M is 14, the adjusted values of the 7-th column and the 8-th column in the matrix **G** are 0.6; and after 4 columns are decreased according to the Rule F starting from the 7-th column to the left side of the matrix **G** (i.e., the 7-th column to the 4-th column decreases), the adjusted values in the remaining columns are 0; and after 4 columns are decreased according to the Rule F starting from the 8-th column to the right side of the matrix **G** (i.e., the 8-th column to the 11-th column decreases), the adjusted values in the remaining columns are 0.

Accordingly, continuing to refer to FIG. 31, the trend of change in the matrix **X** obtained from the superimposition of the matrix **B** and the matrix **G** described above may satisfy: $X_{k,i} = X_{k,M-i+1}$ ($i \in [1,M]$, $k \in [1,N]$), $X_{k,i} =$ $X_{k,i+1}$ ( $i \in [1,[M/2]]$, $k \in [1,N]$); $X_{k,M/2} = X_{k,M/2+1} = P+Y = 0.7$ ($k \in [1,N]$), i.e., in a case where the value of M is 14, the values of the first parameters of the 7-th column and the 8-th column in the matrix **X** is 0.7; and after 4 columns are decreased according to the Rule F starting from the 7-th column to the left side of the matrix **X** (the 7-th column to the 4-th column decreases), the values of the first parameters in the remaining columns are 0; and after 4 columns are decreased according to the Rule F starting from the 8-th column to the right side of the matrix **4** (the 8-th column to the 11-th column decreases), the values of the first parameters in the remaining columns are 0.

**In Example 4-3,** target transmission resources between the first time-domain position and the second time-domain position satisfy Rule 4-3.

In some implementations, Rule 4-3 includes a first parameter associated with each target transmission resource decreasing, in order of time-domain units from early to late in the time domain. For example, if a time-domain unit 1 is earlier in the time domain than a time-domain unit 2, the value of the first parameter associated with the target transmission resource in the time-domain unit 1 is greater than the value of the first parameter associated with the target transmission resource in the time-domain unit 2.

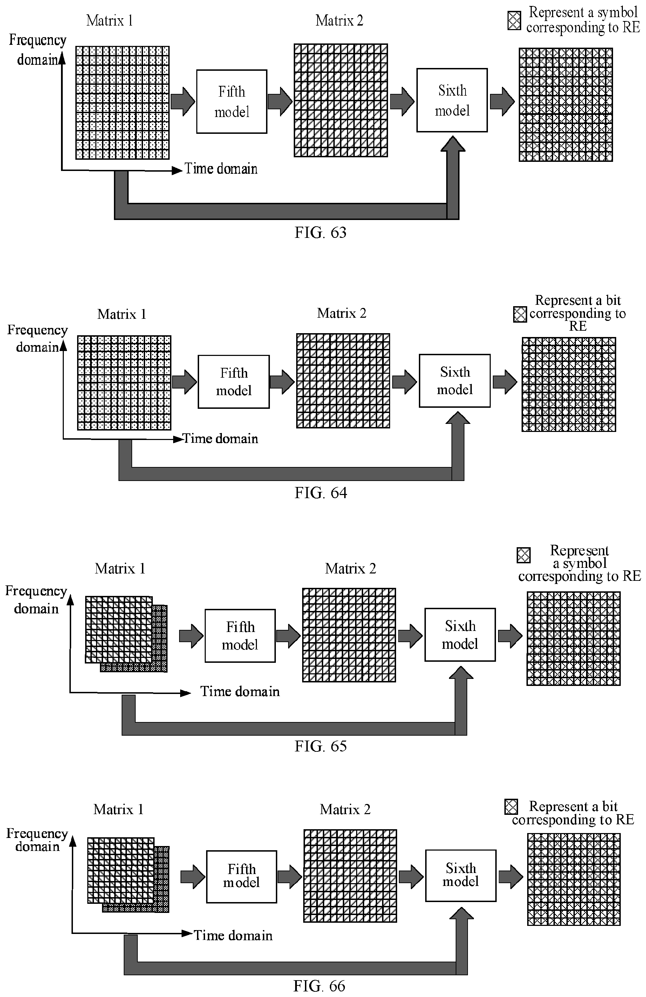

In some implementations, if the above Rule 4-3 is combined with the change in the first parameters in the first resource set being the axisymmetric change trend as introduced above, referring to the following in conjunction with FIG. 64, the trend of change in the first parameters associated with the target transmission resources in the first resource set is increasing from the center time-domain position to edge time-domain positions, or decreasing from the edge time-domain positions to the center time-domain position. This trend of change in the first parameters may be applicable to scenarios in which the communication device is moving at a low speed.

It should be noted that the first parameters associated with the target transmission resources within the same time-domain unit in the first resource set described above may be the same, or the first parameters associated with the target transmission resources corresponding to different frequencies within the same time-domain unit described above may be the same. Of course, in the embodiments of the present disclosure, the first parameters associated with the target transmission resources within the same time-domain unit in the first resource set described above may also be partially or completely different.

In the embodiments of the present disclosure, there is no limitation on the mode in which the first parameter changes. For example, the first parameters associated with the first resource set may decrease according to a fixed step size, where the fixed step size may be a fixed value (e.g., 0.05) or a fixed proportional value (e.g., 0.5%). For another example, the first parameters associated with the first resource set may decrease according to variable step sizes.

For ease of understanding, the change mode of the first parameters in the embodiments of the present disclosure is introduced below in conjunction with FIG. 64. Assuming that the first resource set is an RB, the target transmission resources in the first resource set may be represented as N × M REs.

Referring to FIG. 32, the second time-domain position 3210 is a center time-domain position of the RB, and the first time-domain position 3220 is a time-domain position of an earliest RE in the RB. Accordingly, the first parameters associated with the target transmission resources between the second time-domain position 3210 and the first time-domain position 3220 satisfy the above Rule 4-3, i.e., the first parameter associated with each target transmission resource decreasing in order of time-domain units from early to late in the time domain. In addition, the trend of change in the first parameters associated with the time-domain units in the first resource set is axisymmetric, that is, a trend of change in first parameters associated with target transmission resources between an RE with the latest time-domain position in the first resource set (referring to 3230) and the second time-domain position is opposite to the trend of change in the first parameters associated with the target transmission resources between the second time-domain position 3210 and the first time-domain position 3220. In this case, it can be understood that the trend of change in the first parameters associated with the target transmission resources in the first resource set is decreasing from the edge time-domain positions to the center time-domain position.

**In Example 4-4,** target transmission resources between the first time-domain position and the second time-domain position satisfy Rule 4-4.

In some implementations, Rule 4-4 includes a first parameter associated with a target transmission resource decreasing at every interval of $q$ time-domain units, in order of time-domain units from early to late in the time domain, where $q$ is a positive integer greater than or equal to 0. It should be understood that if the value of $q$ is 0, the trend of the change in the first parameters associated with the target transmission resources in the first resource set may refer to the related introduction in Example 4-3, and will not be repeated herein for the sake of brevity.

In some implementations, the value of q described above may be a fixed value. Of course, in some other implementations, the value of q described above may be variable, for example, the value of q may be randomly variable.

In addition, in the embodiments of the present disclosure, there is no limitation on the change mode of the first parameters. In some implementations, the first parameter may change according to a first proportion. For example, the adjustment mode of the first parameters may include changing once according to a proportion coefficient $r$ at every interval of $q$ time-domain units. In some other implementations, the first parameters may change according to a first step size. For another example, the change mode of the first parameters may include changing once at every interval of $q$ time domain units according to a first step size.

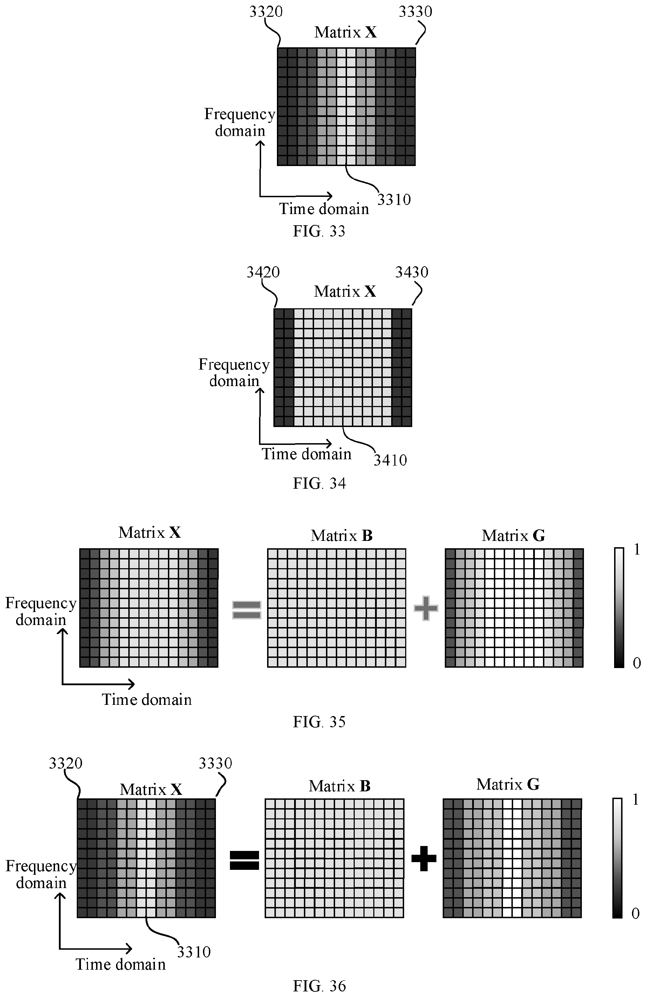

In some implementations, if the above-described Rule 4-4 is combined with the change in the first parameters in the first resource set being the axisymmetric change trend as introduced above, referring to the following in conjunction with FIG. 33 or FIG. 34, the trend of change in the first parameters associated with the target transmission resources in the first resource set is decreasing from the edge time-domain positions to the center time-domain position. This trend of change in the first parameters may be applicable to scenarios in which the communication device is moving at a low speed.

It should be noted that the first parameters associated with the target transmission resources within the same time-domain unit in the first resource set described above may be the same, or the first parameters associated with the target transmission resources corresponding to different frequencies within the same time-domain unit described above may be the same. Of course, in the embodiments of the present disclosure, the first parameters associated with the target transmission resources within the same time-domain unit in the first resource set described above may also be partially or completely different.

In the embodiments of the present disclosure, there is no limitation on the adjustment mode of the first parameters. For example, the first parameters associated with the first resource set may increase according to a fixed step size, where the fixed step size may be a fixed value (e.g., 0.05) or a fixed proportional value (e.g., 0.5%). For another example, the first parameters associated with the first resource set may increase according to variable step sizes.

For ease of understanding, the change mode of the first parameters in the embodiments of the present disclosure is introduced below in conjunction with FIG. 33 and FIG. 34. Assuming that the first resource set is an RB, the target transmission resources in the first resource set may be represented as N × M REs.

Referring to FIG. 33, it is assumed that the value of q is 2, the second time-domain position 3310 is the center time-domain position of the RB, and the first time-domain position 3320 is a time-domain position of an earliest RE in the RB. Accordingly, the first parameters associated with the target transmission resources between the second time-domain position 3310 and the first time-domain position 3320 satisfy the above Rule 4-4, i.e., the first parameters associated with the target transmission resources decreasing at every interval of 2 time-domain units in order of time-domain units from early to late in the time domain. In addition, the trend of change in the first parameters associated with the time-domain units in the first resource set is axisymmetric, that is, a trend of change in first parameters associated with target transmission resources between an RE with the latest time-domain position in the first resource set (referring to 3330) and the second time-domain position is opposite to the trend of change in the first parameters associated with the target transmission resources between the second time-domain position 3310 and the first time-domain position 3320. In this case, it can be understood that the trend of change in the first parameters associated with the target transmission resources in the first resource set is decreasing from the edge time-domain positions to the center time-domain position.

Referring to FIG. 34, it is assumed that the value of q is 2, the second time-domain position 3410 is the center time-domain position of the RB, and the first time-domain position 3420 is a time-domain position of an earliest RE in the RB. Accordingly, the first parameters associated with the target transmission resources between the second time-domain position 3410 and the first time-domain position 3420 satisfy the above Rule 4-4, i.e., the first parameters associated with the target transmission resources decreasing at every interval of 2 time-domain units in order of time-domain units from early to late in the time domain. In addition, the trend of change in the first parameters associated with the time-domain units in the first resource set is axisymmetric, that is, a trend of change in first parameters associated with target transmission resources between an RE with the latest time-domain position in the first resource set (referring to 3430) and the second time-domain position is opposite to the trend of change in the first parameters associated with the target transmission resources between the second time-domain position 3410 and the first time-domain position 3420. In this case, it can be understood that the trend of change in the first parameters associated with the target transmission resources in the first resource set is decreasing from the edge time-domain positions to the center time-domain position.

In some scenarios, the trend of change in the first parameters introduced above in conjunction with Example 4-3 and Example 4-4 may be represented by two parameters (a parameter 1 and a parameter 2), where the parameter 1 represents an initial value of the first parameter associated with each target transmission resource in the first resource set. The parameter 2 represents an adjusted value of the first parameter associated with the target transmission resource in the first resource set. The parameter 2 may be set such that the change in the first parameters associated with the target transmission resources in the first resource set satisfies being conformed with the above-described Rule 4-3 and/or Rule 4-4. That is, the first parameter is obtained by adjusting according to the adjusted value indicated by the parameter 2, on the basis of the initial value indicated by the parameter 1. Thus, it can be seen that the trend of change in the first parameters associated with the target transmission resources in the first resource set is determined based on a trend of change in the adjusted value in the parameter 2, or the trend of change in the first parameters associated with the target transmission resources in the first resource set is matched with the trend of change in the adjusted value in the parameter 2, for example, the trend of change in the first parameters associated with the target transmission resources in the first resource set is the same as the trend of change in the adjusted value in the parameter 2.

Taking the target transmission resource contained in the first resource set being represented as a matrix of N × M as an example, the first parameter associated with the target transmission resource in the first resource set may be represented as a matrix **X**. The above-described parameter 1 and parameter 2 may be represented by a matrix **B** of N × M and a matrix **G** of N × M, respectively. Accordingly, the matrix **X** is obtained by adjusting according to the adjusted value indicated by the matrix **G**, on the basis of the initial value indicated by the matrix **B**. For example, the matrix **X** = matrix **B** + matrix **G**. Thus, the matrix **B** may also be referred to as a base matrix and the matrix **G** may also be referred to as a gradual matrix.

In some implementations, the initial values of the first parameters associated with the target transmission resources in the first resource set may be the same, which helps to simplify the process of configuring the initial values. Taking the matrix **B** an example, the matrix **B** satisfies $\mathbf{B}_{k,i} = \mathbf{B}_{k,j} = Y (i \neq j, i,j \in [1,M], k \in [1,N])$. Of course, the initial values of the first parameters may be different, in the embodiments of the present disclosure.

For ease of understanding, the trend of change in the first parameters in the first resource set is introduced below in terms of the matrix **X,** matrix **B,** and matrix **G,** in conjunction with FIG. 67 to FIG. 69. It should be understood that since the first parameters associated with the target transmission resources increasing in the order of time-domain units from early to late in the time domain is combined with the trend of change in the first parameters being axisymmetric as above, the trend of change in the first parameters includes decreasing in the matrix **X** from edge positions in the matrix **X** to a center position in the matrix **X**. Accordingly, the trend of change in the adjustment values in the matrix **G** may be decreasing from edge positions of the matrix **G** to a center position of the matrix **G**. For ease of description, the following introduces an example of the trend of change replaced as above.

It is assumed that the matrix **X** is generated by summing the matrix **B** and the matrix **G,** i.e., matrix **X** = matrix **B** + matrix **G**. The initial values of the first parameters indicated in the matrix **B** are the same, i.e., the matrix **B** satisfies $\mathbf{B}_{k,i} = \mathbf{B}_{k,j} = Y (i \neq j, i,j \in [1,M], k \in [1,N])$. The trend of the change in the adjustment values in the matrix **G** is the same as the trend of the change in the first parameters in the matrix **X,** i.e., the change in the adjustment values in the matrix **G** satisfies the following conditions that: the adjustment values of the target transmission resources at different frequency-domain positions associated within the same time-domain unit in the matrix **G** are the same, and the adjustment values of the target transmission resources within different time-domain units associated on the same frequency-domain position are different. The adjustment values in the matrix **G** located at the left and right ends of the matrix are less than or equal to an adjustment value located at the center position of the matrix, and the trend of change in the adjustment values in the matrix **G** is axisymmetric with an adjustment value associated with the center time-domain position as the center axis. Accordingly, the change in the adjustment values in the matrix **G** may be represented as: $\mathbf{G}_{k,i} = \mathbf{G}_{k,M-i+1}$ ($i \in [1,M]$, $k \in [1,N]$), $\mathbf{G}_{k,i} \geq \mathbf{G}_{k,i+1}$ ( $i \in [1, \lfloor M/2 \rfloor]$, $k \in [1,N]$) and $\mathbf{G}_{k,1} = \mathbf{G}_{k,M} = P$ ($k \in [1,N]$), and P represents the values of the adjustment values located at the matrix edge columns in the matrix **G**. In addition, the adjusted values in the matrix **G** decreases from the edge columns of the matrix to the center column of the matrix **G** according to a Rule F, and the remaining time-domain units are set to zero after S ( $S \leq \lfloor M/2 \rfloor$ ) time-domain units are decreased. The Rule F may include decreasing once at every interval of $q$ time-domain units by a proportion coefficient $r$ ($r<1$) and decreasing once at every interval of $q$ time-domain units by a first step size $t$ ( $t \lceil S/q \rceil \leq 1$ ), where $\lfloor \ \rfloor$ represents rounding down.

Solutions for constructing the matrix **X** in the embodiments of the present disclosure are introduced below in conjunction with FIG. 35 to FIG. 37. It should be noted that the embodiments of the present disclosure do not specifically limit parameters involved below, and in some cases, the process of constructing the matrix **X** may include some parameters of the parameters involved below. In addition, the parameters involved below may be replaced with other parameters that have the similar functions.

Referring to FIG. 35, the matrix **X** shown in FIG. 32 may be constructed by a formula: matrix **X** = matrix **B** + matrix **G**, where $Y = 0.1$, $S = 4$, $P = 0.6$, $q = 1$, $r = 0.5$, and the Rule F includes decreasing once at every interval of $q=1$ time-domain unit by a proportion coefficient $r = 0.5$ and the values of the remaining columns are zero after S=4 columns is decreased. That is, the initial values of the first parameters in the matrix **B** are 0.1. The change rule of the adjusted values in the matrix **G** includes $\mathbf{G}_{k,i} = \mathbf{G}_{k,M-i+1}$ ($i \in [1,M]$, $k \in [1,N]$), $\mathbf{G}_{k,i} \geq \mathbf{G}_{k,i+1}$ ( $i \in [1, \lfloor M/2 \rfloor]$, $k \in [1,N]$); $\mathbf{G}_{k,1} = \mathbf{G}_{k,M} = P$ ($k \in [1,N]$), i.e., the adjusted values of the 1-st column and the 14-th column in the matrix **G** are 0.6; and after 4 columns are decreased according to the Rule F starting from the 14-th column to the left side of the matrix **G** (i.e., the 14-th column to the 11-th column decreases), the adjusted values in the remaining columns are 0; and after 4 columns are decreased according to the Rule F starting from the 1-st column to the right side of the matrix **G** (i.e., the 1-st column to the 4-th column decreases), the adjusted values in the remaining columns are 0.

Accordingly, continuing to refer to FIG. 35, the trend of change in the matrix **X** obtained from the superimposition of the matrix **B** and the matrix **G** described above may satisfy: $\mathbf{X}_{k,i} = \mathbf{X}_{k,M-i+1}$ ($i \in [1,M]$, $k \in [1,N]$), $\mathbf{X}_{k,i} \geq \mathbf{X}_{k,i+1}$ ( $i \in [1, \lfloor M/2 \rfloor]$, $k \in [1,N]$); $\mathbf{X}_{k,1} = \mathbf{X}_{k,M} = P+Y=0.7$ ($k \in [1,N]$), i.e., the values of the first parameters of the 1-st column and the 14-th column in the matrix **X** is 0.7; and after 4 columns are decreased according to the Rule F starting from the 14-th column to the left side of the matrix **X** (the 14-th column to the 11-th column decreases), the values of the first parameters in the remaining columns are 0; and after 4 columns are decreased according to the Rule F starting from the 1-st column to the right side of the matrix **X** (the 1-st column to the 4-th column decreases), the values of the first parameters in the remaining columns are 0.

Referring to FIG. 36, the matrix **X** shown in FIG. 33 may be constructed by a formula: matrix **X** = matrix **B** + matrix **G,** where $Y = 0.1$, $S = 6$, $P = 0.6$, $q = 2$, $r = 0.5$, and the Rule **F** includes decreasing once at every interval of $q=2$ time-domain units by a proportion coefficient $r = 0.4$ and the values of the remaining columns are zero after $S=6$ columns is decreased. That is, the initial values of the first parameters in the matrix **B** are 0.1. The change rule of the adjusted values in the matrix **G** includes $\mathbf{G}_{k,i} = \mathbf{G}_{k,M-i+1}$ ($i \in [1,M]$, $k \in [1,N]$), $\mathbf{G}_{k,i} \geq \mathbf{G}_{k,i+1}$ ( $i \in [1, \lceil M/2 \rceil]$, $k \in [1,N]$); $\mathbf{G}_{k,l} = \mathbf{G}_{k,M} = P = 0.6$ ($k \in [1,N]$), i.e., the adjusted values of the 1-st column and the 14-th column in the matrix **G** are 0.6; and after 6 columns are decreased according to the Rule F starting from the 14-th column to the left side of the matrix **G** (i.e., the 14-th column to the 9-th column decreases), the adjusted values in the remaining columns are 0; and after 6 columns are decreased according to the Rule F starting from the 1-st column to the right side of the matrix **G** (i.e., the 1-st column to the 6-th column decreases), the adjusted values in the remaining columns are 0.

Accordingly, continuing to refer to FIG. 36, the trend of change in the matrix **X** obtained from the superimposition of the matrix **B** and the matrix **G** described above may satisfy: $\mathbf{X}_{k,i} = \mathbf{X}_{k,M-i+1}$ ($i \in [1,M]$, $k \in [1,N]$), $\mathbf{X}_{k,i} \geq \mathbf{X}_{k,i+1}$ ( $i \in [1, \lceil M/2 \rceil]$, $k \in [1,N]$); $\mathbf{X}_{k,l} = \mathbf{X}_{k,M} = P+Y = 0.7$ ($k \in [1,N]$), i.e., the values of the first parameters of the 1-st column and the 14-th column in the matrix **X** is 0.7; and after 6 columns are decreased according to the Rule F starting from the 14-th column to the left side of the matrix **X** (the 14-th column to the 9-th column decreases), the values of the first parameters in the remaining columns are 0; and after 6 columns are decreased according to the Rule F starting from the 1-st column to the right side of the matrix **X** (the 1-st column to the 6-th column decreases), the values of the first parameters in the remaining columns are 0.

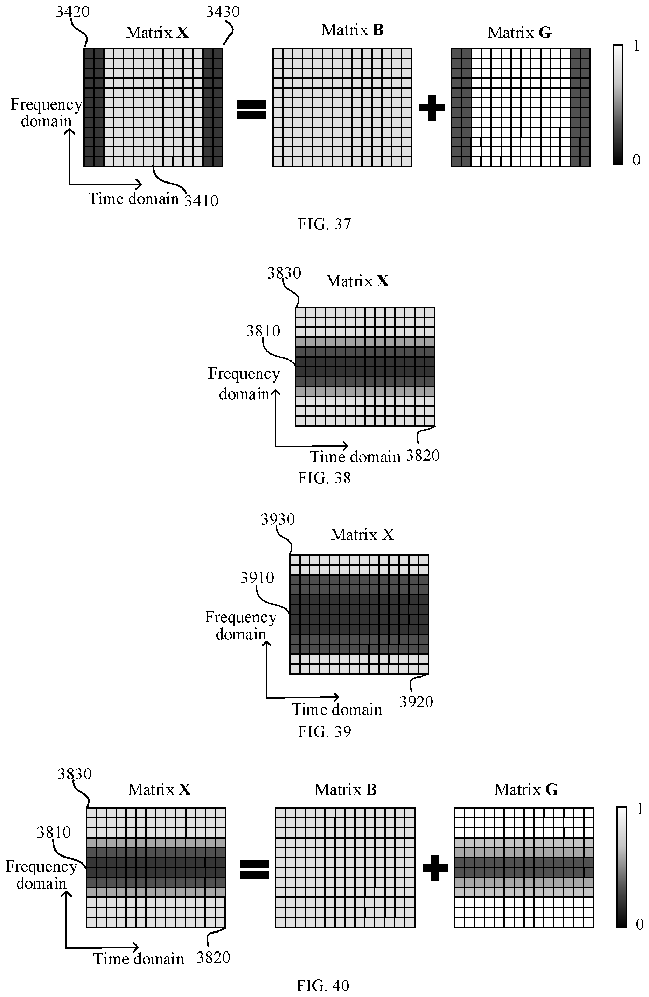

Referring to FIG. 37, the matrix **X** shown in FIG. 34 may be constructed by a formula: matrix **X** = matrix **B** + matrix **G,** where $Y = 0.1$, $S = 2$, $P = 0.6$, $q=2$, and the Rule F includes decreasing once at every interval of $q=2$ time-domain unit by a first step size $t = 1$ and the values of the remaining columns are zero after $S=2$ columns are decreased. That is, the initial values of the first parameters in the matrix **B** are 0.1. The change rule of the adjusted values in the matrix **G** includes $\mathbf{G}_{k,i} = \mathbf{G}_{k,M-i+1}$ ($i \in [1,M]$, $k \in [1,N]$), $\mathbf{G}_{k,i} \geq \mathbf{G}_{k,i+1}$ ( $i \in [1, \lceil M/2 \rceil]$, $k \in [1,N]$); $\mathbf{G}_{k,l} = \mathbf{G}_{k,M} = P = 0.6$ ($k \in [1,N]$), i.e., the adjusted values of the 1-st column and the 14-th column in the matrix **G** are 0.6; and after 2 columns are decreased according to the Rule F starting from the 14-th column to the left side of the matrix **G** (i.e., the 14-th column to the 13-th column decreases), the adjusted values in the remaining columns are 0; and after 2 columns are decreased according to the Rule F starting from the 1-st column to the right side of the matrix **G** (i.e., the 1-st column to the 2-nd column decreases), the adjusted values in the remaining columns are 0.

Accordingly, continuing to refer to FIG. 37, the trend of change in the matrix **X** obtained from the superimposition of the matrix **B** and the matrix **G** described above may satisfy: $\mathbf{X}_{k,i} = \mathbf{X}_{k,M-i+1}$ ($i \in [1,M]$, $k \in [1,N]$), $\mathbf{X}_{k,i} \geq \mathbf{X}_{k,i+1}$ ( $i \in [1, \lceil M/2 \rceil]$, $k \in [1,N]$); $\mathbf{X}_{k,l} = \mathbf{X}_{k,M} = P+Y = 0.7$ ($k \in [1,N]$), i.e., the values of the first parameters of the 1-st column and the 14-th column in the matrix **X** is 0.7; and after 2 columns are decreased according to the Rule F starting from the 14-th column to the left side of the matrix **X** (the 14-th column to the 13-th column decreases), the values of the first parameters in the remaining columns are 0; and after 2 columns are decreased according to the Rule F starting from the 1-st column to the right side of the matrix **X** (the 1-st column to the 2-nd column decreases), the values of the first parameters in the remaining columns are 0.

**In a non-orthogonal transmission mode 5,** first parameters associated with a plurality of target transmission resources within different frequency-domain units in the second resource set are partially or completely different, where the second resource set may include one or more target transmission resources.

For example, the second resource set may include a frequency-domain unit 1 and a frequency-domain unit 2, and the first parameters associated with the target transmission resources in the frequency-domain unit 1 are different from the first parameters associated with the target transmission resources in the frequency-domain unit 2. The frequency-domain unit 1 and the frequency-domain unit 2 are two certain frequency-domain units in the second resource set, or, the frequency-domain unit 1 and the frequency-domain unit 2 are any two frequency-domain units in the second resource set.

For another example, the second resource set may include a frequency-domain unit 1 to a frequency-domain unit 5, the first parameters associated with the target transmission resources in the frequency-domain unit 1 are different from the first parameters associated with the target transmission resources in the frequency-domain unit 5, and additionally, the first parameters associated with the target transmission resources in the frequency-domain units 2 to 4 are the same.

In the embodiments of the present disclosure, there is no limitation on the change mode of the first parameters associated with the target transmission resources in different time-domain units in the second resource set. The following introduces the change rule of the first parameters in the embodiments of the present disclosure based on a first frequency-domain position and a second frequency-domain position, in conjunction with Example 5-1 to Example 5-4. The first frequency-domain position and the second frequency-domain position are two different frequency-domain positions among frequency-domain positions in which the target transmission resources in the second resource set are located.

In some implementations, the first frequency-domain position may be a frequency-domain position with the lowest frequency domain within a frequency range corresponding to the second resource set, or the frequency corresponding to the first frequency-domain position in the frequency domain is smaller than that of other frequency-domain positions other than the first frequency-domain position in the second resource set, and taking the second resource set as an RB, the first frequency-domain position may be a frequency-domain position of an RE with the lowest frequency (or an RE with an index of 0) in the RB. Indexes of REs in the RB are sequentially numbered in the direction of frequency from low to high. Of course, in the embodiments of the present disclosure, the first frequency-domain position may be a frequency-domain position with the highest frequency domain within the frequency range corresponding to the second resource set, or the frequency corresponding to the first frequency-domain position in the frequency domain is higher than that of other frequency-domain positions other than the first frequency-domain position in the second resource set. Taking the second resource set as an RB, the first frequency-domain position may be a frequency-domain position of an RE with the highest frequency (or an RE with the largest index) in the RB. Indexes of REs in the RB are sequentially numbered in the direction of frequency from low to high.

In some other implementations, the second frequency-domain position is a center frequency-domain position in the second resource set. The center frequency-domain position may include one or more frequency-domain units. If the second resource set includes RE1, RE2, and RE3 that are consecutive in the frequency domain, the center frequency-domain position of the second resource set may be a frequency-domain position of RE2. Taking the second resource set including RE1, RE2, RE3, RE4, and RE5 that are consecutive in the frequency domain as an example, the center frequency-domain position of the second resource set may be frequency-domain positions of RE2 to RE4.

Of course, in the embodiments of the present disclosure, the second frequency-domain position may be the frequency-domain position with the lowest frequency domain within the frequency range corresponding to the second resource set, or the frequency corresponding to the second frequency-domain position in the frequency domain is smaller than that of other frequency-domain positions other than the second frequency-domain position in the second resource set, and taking the second resource set as an RB, the second frequency-domain position may be the frequency-domain position of the RE with the lowest frequency (or the RE with the index of 0) in the RB. The indexes of REs in the RB are sequentially numbered in the direction of frequency from low to high. Alternatively, the second frequency-domain position may be the frequency-domain position with the highest frequency domain within the frequency range corresponding to the second resource set, or the frequency corresponding to the second frequency-domain position in the frequency domain is higher than that of other frequency-domain positions other than the second frequency-domain position in the second resource set. Taking the second resource set as an RB, the second frequency-domain position may be the frequency-domain position of the RE with the highest frequency (or the RE with the largest index) in the RB. The indexes of REs in the RB are sequentially numbered in the direction of frequency from low to high.

In the embodiments of the present disclosure, there is no limitation on the combination mode between the first frequency-domain position and the second frequency-domain position. For example, the first frequency-domain position is a frequency-domain position with the lowest frequency domain within the frequency range corresponding to the second resource set, and the second frequency-domain position may be a frequency-domain position with the highest frequency domain within the frequency range corresponding to the second resource set. For another example, the first frequency-domain position is a frequency-domain position with the lowest frequency domain within the frequency range corresponding to the second resource set, and the second frequency-domain position may be a center frequency-domain position of the second resource set. For another example, the first frequency-domain position is a frequency-domain position with the highest frequency domain within the frequency range corresponding to the second resource set, and the second frequency-domain position may be a center frequency-domain position of the second resource set.

In some implementations, if the second frequency-domain position is the center frequency-domain position, a trend of change in the first parameters in the second resource set may be axisymmetric, where the axisymmetric may be understood as being axisymmetric with the center frequency-domain position as a center axis, that is, if the second frequency-domain position is the center frequency-domain position, the trend of change in the first parameters associated with the target transmission resources on two sides of the second frequency-domain position is opposite. Of course, in the embodiments of the present disclosure, if the second frequency-domain position is the center frequency-domain position, the trend of change in the first parameters associated with the target transmission resources on two sides of the second frequency-domain position may be the same, which is not limited in the embodiments of the present disclosure.

**In Example 5-1,** target transmission resources between a first frequency-domain position and a second frequency-domain position satisfy Rule 5-1.

In some implementations, Rule 5-1 includes a first parameter associated with each target transmission resource increasing, in order of frequency-domain units from low to high in the frequency domain. For example, if the frequency of a frequency-domain unit 1 in the frequency domain is lower than the frequency of a frequency-domain unit 2, the value of the first parameter associated with the target transmission resource in the frequency-domain unit 1 is less than the value of the first parameter associated with the target transmission resource in the frequency-domain unit 2.

In some implementations, if the above Rule 4-1 is combined with the change in the first parameters in the second resource set being the axisymmetric change trend as introduced above, referring to the following in conjunction with FIG. 38 to FIG. 39, the trend of change in the first parameters associated with the target transmission resources in the second resource set is decreasing from the center frequency-domain position to edge frequency-domain positions.

It should be noted that the first parameters associated with the target transmission resources within the same time-domain unit in the second resource set described above may be the same, or the first parameters associated with the target transmission resources corresponding to different time-domain units within the same frequency-domain unit described above may be the same. Of course, in the embodiments of the present disclosure, the first parameters associated with the target transmission resources within the same frequency-domain unit in the second resource set described above may also be partially or completely different.

In the embodiments of the present disclosure, there is no limitation on the mode in which the first parameter increases. For example, the first parameters associated with the second resource set may increase according to a fixed step size, where the fixed step size may be a fixed value (e.g., 0.05) or a fixed proportional value (e.g., 0.5%). For another example, the first parameters associated with the second resource set may increase according to variable step sizes.

For ease of understanding, the change mode of the first parameters in the embodiments of the present disclosure is introduced below in conjunction with FIG. 38. Assuming that the second resource set is an RB, the target transmission resources in the second resource set may be represented as N × M REs.

Referring to FIG. 38, the second frequency-domain position 3810 is a center frequency-domain position of the RB, and the first frequency-domain position 3820 is a frequency-domain position corresponding to an RE with the lowest frequency in the RB. Accordingly, the first parameters associated with the target transmission resources between the second frequency-domain position 3810 and the first frequency-domain position 3820 satisfy the above Rule 5-1, i.e., the first parameter associated with each target transmission resource increasing in order of the frequency from low to high in the frequency domain. In addition, the trend of change in the first parameters associated with the frequency-domain units in the second resource set is axisymmetric, that is, a trend of change in first parameters associated with target transmission resources between an RE with the highest frequency-domain in the second resource set (referring to 3830) and the second frequency-domain position is opposite to the trend of change in the first parameters associated with the target transmission resources between the second frequency-domain position 3810 and the first frequency-domain position 3820. In this case, it can be understood that the trend of change in the first parameters associated with the target transmission resources in the second resource set is decreasing from the center frequency-domain position to the edge frequency-domain positions.

**In Example 5-2,** target transmission resources between the first frequency-domain position and the second frequency-domain position satisfy Rule 5-2.

In some implementations, Rule 5-2 includes a first parameter associated with a target transmission resource increasing at every interval of $q$ frequency-domain units, in order of frequency-domain units from low to high in the frequency domain, where q is a positive integer greater than or equal to 0. It should be understood that if the value of $q$ is 0, the trend of the change in the first parameters associated with the target transmission resources in the second resource set may refer to the related introduction in Example 5-1, and will not be repeated herein for the sake of brevity.

In some implementations, the value of q described above may be a fixed value. Of course, in some other implementations, the value of q described above may be variable, for example, the value of q may be randomly variable.

In addition, in the embodiments of the present disclosure, there is no limitation on the change mode of the first parameters. In some implementations, the first parameter may change according to a first proportion. For example, the change mode of the first parameters may include changing once according to a proportion coefficient r at every interval of $q$ frequency-domain units. In some other implementations, the first parameters may change according to a first step size. For another example, the change mode of the first parameters may include changing once at every interval of $q$ frequency-domain units according to a first step size.

In some implementations, if the above-described Rule 5-2 is combined with the change in the first parameters in the second resource set being the axisymmetric change trend as introduced above, referring to the following in conjunction with FIG. 39, the trend of change in the first parameters associated with the target transmission resources in the second resource set is decreasing from the center frequency-domain position to the edge frequency-domain positions.

It should be noted that the first parameters associated with the target transmission resources within the same frequency-domain unit in the second resource set described above may be the same, or the first parameters associated with the target transmission resources corresponding to different time-domain units within the same frequency-domain unit described above may be the same. Of course, in the embodiments of the present disclosure, the first parameters associated with the target transmission resources within the same frequency-domain unit in the second resource set described above may also be partially or completely different.

In the embodiments of the present disclosure, there is no limitation on the mode in which the first parameters increase. For example, the first parameters associated with the second resource set may increase according to a fixed step size, where the fixed step size may be a fixed value (e.g., 0.05) or a fixed proportional value (e.g., 0.5%). For another example, the first parameters associated with the second resource set may increase according to variable step sizes.

For ease of understanding, the change mode of the first parameters in the embodiments of the present disclosure is introduced below in conjunction with FIG. 38. Assuming that the second resource set is an RB, the target transmission resources in the second resource set may be represented as N × M REs.

Referring to FIG. 39, it is assumed that the value of q is 2, the second frequency-domain position 3910 is the center frequency-domain position of the RB, and the first frequency-domain position 3920 is a frequency-domain position of an RE with the lowest frequency in the RB. Accordingly, the first parameters associated with the target transmission resources between the second frequency-domain position 3910 and the first frequency-domain position 3920 satisfy the above Rule 5-2, i.e., the first parameters associated with the target transmission resources increasing at every interval of 2 frequency-domain units in order of frequency-domain units from low to high in the frequency domain. In addition, the trend of change in the first parameters associated with the frequency-domain units in the second resource set is axisymmetric, that is, a trend of change in first parameters associated with target transmission resources between an RE (referring to 3930) with the latest frequency-domain position in the second resource set and the second frequency-domain position is opposite to the trend of change in the first parameters associated with the target transmission resources between the second frequency-domain position 3910 and the first frequency-domain position 3920. In this case, it can be understood that the trend of change in the first parameters associated with the target transmission resources in the second resource set is decreasing from the center frequency-domain position to the edge frequency-domain positions.

In some scenarios, the trend of change in the first parameters introduced above in conjunction with Example 5-1 and Example 5-2 may be represented by two parameters (a parameter 1 and a parameter 2), where the parameter 1 represents an initial value of the first parameter associated with each target transmission resource in the second resource set. The parameter 2 represents an adjusted value of the first parameter associated with the target transmission resource in the second resource set. The parameter 2 may be set such that the change in the first parameters associated with the target transmission resources in the second resource set satisfies being conformed with the above-described Rule 5-1 and/or Rule 5-2. That is, the first parameter is obtained by adjusting according to the adjusted value indicated by the parameter 2, on the basis of the initial value indicated by the parameter 1. Thus, it can be seen that the trend of change in the first parameters associated with the target transmission resources in the second resource set is determined based on a trend of change in the adjusted value in the parameter 2, or the trend of change in the first parameters associated with the target transmission resources in the second resource set is matched with the trend of change in the adjusted value in the parameter 2, for example, the trend of change in the first parameters associated with the target transmission resources in the second resource set is the same as the trend of change in the adjusted value in the parameter 2.

Taking the target transmission resource contained in the second resource set being represented as a matrix of N × M as an example, the first parameter associated with the target transmission resource in the second resource set may be represented as a matrix **X.** The above-described parameter 1 and parameter 2 may be represented by a matrix **B** of N × M and a matrix **G** of N × M, respectively. Accordingly, the matrix **X** is obtained by adjusting according to the adjusted value indicated by the matrix **G,** on the basis of the initial value indicated by the matrix **B.** For example, the matrix **X** = matrix **B** + matrix **G.** Thus, the matrix **B** may also be referred to as a base matrix and the matrix **G** may also be referred to as a gradual matrix.

In some implementations, the initial values of the first parameters associated with the target transmission resources in the second resource set may be the same, which helps to simplify the process of configuring the initial values. Taking the matrix **B** as an example, the matrix **B** satisfies $B_{k,i} = B_{k,j} = Y$ ($i \neq j$, $i, jE$ [1,$M$], $k \in$ [1,$N$]). Of course, the initial values of the first parameters may be different, in the embodiments of the present disclosure.

For ease of understanding, the trend of change in the first parameters in the second resource set is introduced below in terms of the matrix **X,** matrix **B,** and matrix **G,** in conjunction with FIG. 69 to FIG. 38. It should be understood that since the first parameters associated with the target transmission resources increasing in the order of frequency-domain units from low to high in the frequency domain is combined with the trend of change in the first parameters being axisymmetric as above, the trend of change in the first parameters may be replaced with decreasing in the matrix **X** from a center position in the matrix **X** to edge positions in the matrix **X.** Accordingly, the trend of change in the adjustment values in the matrix **G** may be decreasing from a center position of the matrix **G** to edge positions of the matrix **G.** For ease of description, the following introduces an example of the trend of change replaced as above.

It is assumed that the matrix **X** is generated by summing the matrix **B** and the matrix **G,** i.e., matrix **X** = matrix **B** + matrix **G**. The initial values of the first parameters indicated in the matrix **B** are the same, i.e., the matrix **B** satisfies $\mathbf{B}_{k,i} = \mathbf{B}_{k,j}=Y$ *(i#j, i,j∈[1,M], k∈[1,N])*. The trend of the change in the adjustment values in the matrix **G** is the same as the trend of the change in the first parameters in the matrix **X,** i.e., the change in the adjustment values in the matrix **G** satisfies the following conditions that: the adjustment values of the target transmission resources at different time-domain positions associated within the same frequency-domain unit in the matrix **G** are the same, and the adjustment values of the target transmission resources within different frequency-domain units associated on the same time-domain position are different. The adjustment values in the matrix **G** located at the upper and lower ends of the matrix are less than or equal to an adjustment value located at the center position of the matrix, and the trend of change in the adjustment values in the matrix **G** is axisymmetric with the center frequency-domain position as the center. Accordingly, the change in the adjustment values in the matrix **G** may be represented as: $\mathbf{G}_{k,i}= \mathbf{G}_{N-k+1,i}$ *(i∈[1,M], kE [1,N])*, $\mathbf{G}_{k,i} \leq \mathbf{G}_{k+1,i}$ *(i∈ [1, [M]], k∈[1,N/2])*, and if N is odd, $\mathbf{G}_{[N/2[,i} = P$ *(k∈[1,M])*, and if M is even, $\mathbf{G}_{N/2,i}=\mathbf{G}_{N/2+1,i}= P$ *(iE [1,M])*, and P represents the value of the adjustment value located at the center axis in the matrix **G.** In addition, the adjusted values in the matrix **G** decrease from the center axis to the edges of the matrix **G** according to a Rule F, and the remaining frequency-domain units are set to zero after S ($S \leq \lfloor N/2 \rfloor$) frequency-domain units are decreased. The Rule F may include decreasing once at every interval of *q* time-domain units by a proportion coefficient *r (r<1)* and decreasing once at every interval of *q* time-domain units by a first step size *t (t[S/q[≤ 1)*, where ⌊ ⌋ represents rounding down.

Solutions for constructing the matrix **X** in the embodiments of the present disclosure is introduced below in conjunction with FIG. 40 to FIG. 41. It should be noted that the embodiments of the present disclosure do not specifically limit parameters involved below, and in some cases, the process of constructing the matrix **X** may include some parameters of the parameters involved below. In addition, the parameters involved below may be replaced with other parameters that have the similar functions.

Referring to FIG. 40, the matrix **X** shown in FIG. 38 may be constructed by a formula: matrix **X** = matrix **B** + matrix **G,** where *Y = 0.1, S = 3, P* = 0.6, *q* = 1, *r* = 0.5, and the Rule F includes decreasing once at every interval of q=1 frequency-domain unit by a proportion coefficient r = 0.5 and the values of the remaining rows are zero after S=3 rows is decreased. That is, the initial values of the first parameters in the matrix **B are** 0.1. The change rule of the adjusted values in the matrix **G** includes: $\mathbf{G}_{k,i}= \mathbf{G}_{N-k+1,i}$ *(i∈ [1,M], k∈[1,N])*, $\mathbf{G}_{k,i} \leq \mathbf{G}_{k+1,i}$ ($i \in [1,\lceil M \rceil], k \in$

[1,*N/2*]); $\mathbf{G}_{N/2,i}=\mathbf{G}_{N/2+1,i}= P=0.6$ *(i∈[1,M])*, i.e., in a case where the value of N is 12, the adjusted values of the 6-th row and the 7-th row in the matrix **G** are 0.6; and after 3 rows are decreased according to the Rule F starting from the 6-th row to the lower side of the matrix **G** (i.e., the 7-th row to the 5-th row decreases), the adjusted values in the remaining rows are 0; and after 3 rows are decreased according to the Rule F starting from the 8-th row to the upper side of the matrix **G** (i.e., the 8-th row to the 10-th row decreases), the adjusted values in the remaining rows are 0.

Accordingly, continuing to refer to FIG. 40, the trend of change in the matrix **X** obtained from the superimposition of the matrix **B** and the matrix **G** described above may satisfy: $\mathbf{X}_{k,i}= \mathbf{X}_{N-k+1,i}$ *(i∈[1,M], k∈[1,N])*, $\mathbf{X}_{k,i} \leq \mathbf{X}_{k+1,i}$ ($i \in [1,\lceil M \rceil]$, *k*∈[1,*N/2*]); $\mathbf{X}_{N/2,i}=\mathbf{X}_{N/2+1,i}= P+Y=0.7$ *(i∈[1,M])*, i.e., in a case where the value of N is 12, the values of the first parameters of the 6-th row and the 7-th row in the matrix **X** is 0.6; and after 3 rows are decreased according to the Rule F starting from the 6-th row to the lower side of the matrix **G** (the 7-th row to the 5-th row decreases), the values of the first parameters in the remaining rows are 0; and after 3 rows are decreased according to the Rule F starting from the 8-th row to the upper side of the matrix **G** (the 8-th row to the 10-th row decreases), the values of the first parameters in the remaining rows are 0.

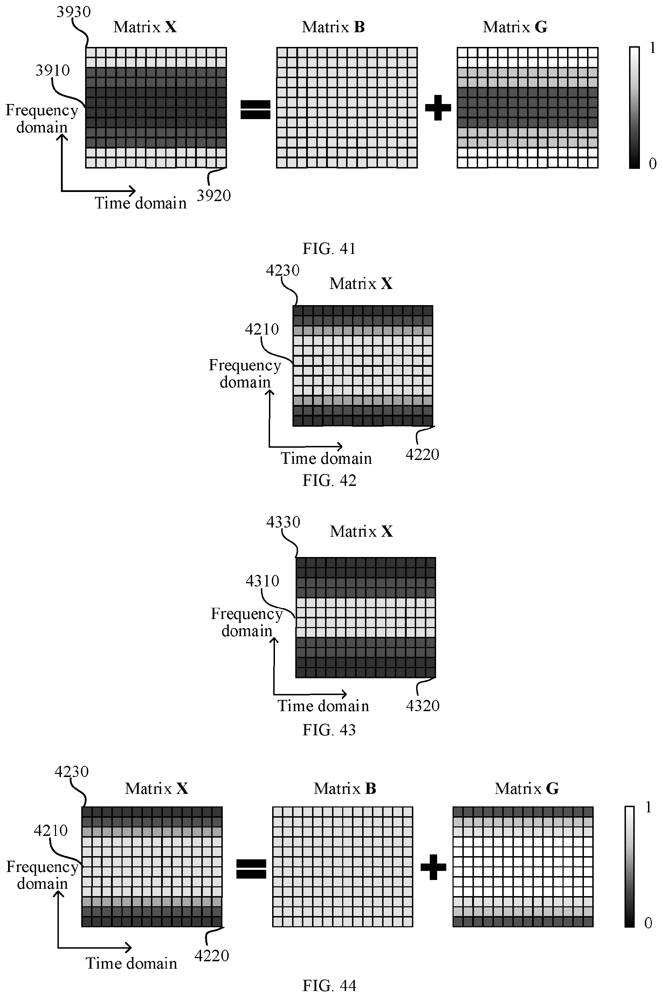

Referring to FIG. 41, the matrix **X** shown in FIG. 27 may be constructed by a formula: matrix **X** = matrix **B** + matrix **G,** where *Y* = 0.1, *S* = 4, *P* = 0.6, *q* = 2, *r* = 0.5, and the Rule F includes decreasing once at every interval of *q*=2 frequency-domain units by a proportion coefficient *r* = 0.5 and the values of the remaining rows are zero after S=4 rows is decreased. That is, the initial values of the first parameters in the matrix **B are** 0.1. The change rule of the adjusted values in the matrix **G** includes: $\mathbf{G}_{k,i}= \mathbf{G}_{N-k+1,i}$ *(i∈ [1,M], k∈[1,N])*, $\mathbf{G}_{k,i} \leq \mathbf{G}_{k+1,i}$ ($i \in [1,\lceil M \rceil$, *k*∈[1, *N/2*]); $\mathbf{G}_{N/2,i}=\mathbf{G}_{N/2+1,i}= P=0.6$ *(i∈[1,M])*, i.e., in a case where the value of N is 12, the adjusted values of the 6-th row and the 7-th row in the matrix **G** are 0.6; and after 4 rows are decreased according to the Rule F starting from the 6-th row to the lower side of the matrix **G** (i.e., the 7-th row to the 4-th row decreases), the adjusted values in the remaining rows are 0; and after 4 rows are decreased according to the Rule F starting from the 8-th row to the upper side of the matrix **G** (i.e., the 8-th row to the 11-th row decreases), the adjusted values in the remaining rows are 0.

Accordingly, continuing to refer to FIG. 41, the trend of change in the matrix **X** obtained from the superimposition of the matrix **B** and the matrix G described above may satisfy: $\mathbf{X}_{k,i}= \mathbf{X}_{N-k+1,i}$ *(i∈[1,M], k∈[1,N])*, $\mathbf{X}_{k,i} \leq \mathbf{X}_{k+1,i}$ ($i \in [1,\lceil M \rceil]$, *k*∈[1,*N/2*]); $\mathbf{X}_{N/2,i}=\mathbf{X}_{N/2+1,i}= P+Y=0.7$ *(i∈[1,M])*, i.e., in a case where the value of N is 12, the values of the first parameters of the 6-th row and the 7-th row in the matrix **X** are 0.6; and after 4 rows are decreased according to the Rule F starting from the 6-th row to the lower side of the matrix **G** (the 7-th row to the 4-th row decreases), the values of the first parameters in the remaining rows are 0; and after 4 rows are decreased according to the Rule F starting from the 8-th row to the upper side of the matrix **G** (the 8-th row to the 11-th row decreases), the values of the first parameters in the remaining rows are 0.

**In Example 5-3,** target transmission resources between a first frequency-domain position and a second frequency-domain position satisfy Rule 5-3.

In some implementations, Rule 5-3 includes a first parameter associated with each target transmission resource decreasing, in order of frequency-domain units from low to high in the frequency domain. For example, if the frequency of a frequency-domain unit 1 in the frequency domain is less than the frequency of a frequency-domain unit 2, the value of the first parameter associated with the target transmission resource in the frequency-domain unit 1 is greater than the value of the first parameter associated with the target transmission resource in the frequency-domain unit 2.

In some implementations, if the above Rule 5-3 is combined with the change in the first parameters in the second resource set being the axisymmetric change trend as introduced above, referring to the following in conjunction with FIG. 42, the trend of change in the first parameters associated with the target transmission resources in the second resource set is decreasing from edge frequency-domain positions to the center frequency-domain position, or increasing from the center frequency-domain position to the edge frequency-domain positions.

It should be noted that the first parameters associated with the target transmission resources within the same time-domain unit in the second resource set described above may be the same, or the first parameters associated with the target transmission resources corresponding to different time-domain positions within the same frequency-domain unit described above may be the same. Of course, in the embodiments of the present disclosure, the first parameters associated with the target transmission resources within the same frequency-domain unit in the second resource set described above may also be partially or completely different.

In the embodiments of the present disclosure, there is no limitation on the mode in which the first parameter changes. For example, the first parameters associated with the second resource set may change according to a fixed step size, where the fixed step size may be a fixed value (e.g., 0.05) or a fixed proportional value (e.g., 0.5%). For another example, the first parameters associated with the second resource set may change according to variable step sizes.

For ease of understanding, the change mode of the first parameters in the embodiments of the present disclosure is introduced below in conjunction with FIG. 42. Assuming that the second resource set is an RB, the target transmission resources in the second resource set may be represented as $N \times M$ REs.

Referring to FIG. 42, the second frequency-domain position 4210 is a center frequency-domain position of the RB, and the first frequency-domain position 4220 is a frequency-domain position of an RE with the lowest frequency in the RB. Accordingly, the first parameters associated with the target transmission resources between the second frequency-domain position 4210 and the first frequency-domain position 4220 satisfy the above Rule 5-3, i.e., the first parameter associated with each target transmission resource decreasing in order of the frequency-domain units from low to high in the frequency domain. In addition, the trend of change in the first parameters associated with the frequency-domain units in the second resource set is axisymmetric, that is, a trend of change in first parameters associated with target transmission resources between an RE with the highest frequency-domain in the second resource set (referring to 4230) and the second frequency-domain position is opposite to the trend of change in the first parameters associated with the target transmission resources between the second frequency-domain position 4210 and the first frequency-domain position 4220. In this case, it can be understood that the trend of change in the first parameters associated with the target transmission resources in the second resource set is decreasing from the edge frequency-domain positions to the center frequency-domain position.

**In Example 5-4,** target transmission resources between the first frequency-domain position and the second frequency-domain position satisfy Rule 5-4.

In some implementations, rule 5-4 includes a first parameter associated with a target transmission resource decreasing at every interval of q frequency-domain units, in order of frequency-domain units from low to high in the frequency domain, where q is a positive integer greater than or equal to 0. It should be understood that if the value of $q$ is 0, the trend of the change in the first parameters associated with the target transmission resources in the second resource set may refer to the related introduction in Example 5-3, and will not be repeated herein for the sake of brevity.

In some implementations, the value of q described above may be a fixed value. Of course, in some other implementations, the value of q described above may be variable, for example, the value of q may be randomly variable.

In addition, in the embodiments of the present disclosure, there is no limitation on the change mode of the first parameters. In some implementations, the first parameter may change according to a first proportion. For example, the adjustment mode of the first parameters may include changing once according to a proportion coefficient r at every interval of $q$ frequency-domain units. In some other implementations, the first parameters may change according to a first step size. For another example, the change mode of the first parameters may include changing once at every interval of q frequency-domain units according to a first step size.

In some implementations, if the above-described Rule 5-4 is combined with the change in the first parameters in the second resource set being the axisymmetric change trend as introduced above, referring to the following in conjunction with FIG. 43, the trend of change in the first parameters associated with the target transmission resources in the second resource set is decreasing from the edge frequency-domain positions to the center frequency-domain position, or the trend of change in the first parameters associated with the target transmission resources in the second resource set is decreasing from the center frequency-domain position to the edge frequency-domain positions. This trend of change in the first parameters may be applicable to a scenario in which the communication device moves at a low speed.

It should be noted that the first parameters associated with the target transmission resources within the same frequency-domain unit in the second resource set described above may be the same, or the first parameters associated with the target transmission resources corresponding to different time-domain positions within the same frequency-domain unit described above may be the same. Of course, in the embodiments of the present disclosure, the first parameters associated with the target transmission resources within the same frequency-domain unit in the second resource set described above may also be partially or completely different.

In the embodiments of the present disclosure, there is no limitation on the adjustment mode of the first parameters. For example, the first parameters associated with the second resource set may be adjusted according to a fixed step size, where the fixed step size may be a fixed value (e.g., 0.05) or a fixed proportional value (e.g., 0.5%). For another example, the first parameters associated with the second resource set may be adjusted according to variable step sizes.

For ease of understanding, the change mode of the first parameters in the embodiments of the present disclosure is introduced below in conjunction with FIG. 43. Assuming that the second resource set is an RB, the target transmission resources in the second resource set may be represented as $N \times M$ REs.

Referring to FIG. 43, it is assumed that the value of q is 2, the second frequency-domain position 4310 is the center frequency-domain position of the RB, and the first frequency-domain position 4320 is a frequency-domain position of an RE with the lowest frequency in the RB. Accordingly, the first parameters associated with the target transmission resources between the second frequency-domain position 4310 and the first frequency-domain position 4320 satisfy the above Rule 5-4, i.e., the first parameters associated with the target transmission resources decreasing at every interval of 2 frequency-domain units in order of frequency-domain units from low to high in the frequency domain. In addition, the trend of change in the first parameters associated with the frequency-domain units in the second resource set is axisymmetric, that is, a trend of change in first parameters associated with target transmission resources between an RE (referring to 4330) with the highest frequency-domain position in the second resource set and the second frequency-domain position is opposite to the trend of change in the first parameters associated with the target transmission resources between the second frequency-domain position 4310 and the first frequency-domain position 4320. In this case, it can be understood that the trend of change in the first parameters associated with the target transmission resources in the second resource set is decreasing from the edge frequency-domain positions to the center frequency-domain position.

In some scenarios, the trend of change in the first parameters introduced above in conjunction with Example 5-3 and Example 5-4 may be represented by two parameters (a parameter 1 and a parameter 2), where the parameter 1 represents an initial value of the first parameter associated with each target transmission resource in the second resource set. The parameter 2 represents an adjusted value of the first parameter associated with the target transmission resource in the second resource set. The parameter 2 may be set such that the change in the first parameters associated with the target transmission resources in the second resource set satisfies being conformed with the above-described Rule 5-3 and/or Rule 5-4. That is, the first parameter is obtained by adjusting according to the adjusted value indicated by the parameter 2, on the basis of the initial value indicated by the parameter 1. Thus, it can be seen that the trend of change in the first parameters associated with the target transmission resources in the second resource set is determined based on a trend of change in the adjusted value in the parameter 2, or the trend of change in the first parameters associated with the target transmission resources in the second resource set is matched with the trend of change in the adjusted value in the parameter 2, for example, the trend of change in the first parameters associated with the target transmission resources in the second resource set is the same as the trend of change in the adjusted value in the parameter 2.

Taking the target transmission resource contained in the second resource set being represented as a matrix of $N \times M$ as an example, the first parameter associated with the target transmission resource in the second resource set may be represented as a matrix **X.** The above-described parameter 1 and parameter 2 may be represented by a matrix **B** of $N \times M$ and a matrix **G** of $N \times M$, respectively. Accordingly, the matrix **X** is obtained by adjusting according to the adjusted value indicated by the matrix **G,** on the basis of the initial value indicated by the matrix **B**. For example, the matrix **X** = matrix **B** + matrix **G**. Thus, the matrix **B** may also be referred to as a base matrix and the matrix **G** may also be referred to as a gradual matrix.

In some implementations, the initial values of the first parameters associated with the target transmission resources in the second resource set may be the same, which helps to simplify the process of configuring the initial values. Taking the matrix **B** an example, the matrix **B** satisfies $\mathbf{B}_{k,i} = \mathbf{B}_{k,j} = Y$ ($i \neq j$, $i,j \in [1,M]$, $k \in [1,N]$). Of course, the initial values of the first parameters may be different, in the embodiments of the present disclosure.

For ease of understanding, the trend of change in the first parameters in the second resource set is introduced below in terms of the matrix **X,** matrix **B,** and matrix **G,** in conjunction with FIG. 43 to FIG. 44. It should be understood that since the first parameters associated with the target transmission resources decreasing in the order of frequency-domain units from low to high in the frequency domain is combined with the trend of change in the first parameters being axisymmetric as above, the trend of change in the first parameters may include decreasing in the matrix **X** from edge positions in the matrix **X** to a center position in the matrix **X.** Accordingly, the trend of change in the adjustment values in the matrix **G** may be decreasing from edge positions of the matrix **G** to a center position of the matrix **G.** For ease of description, the following introduces an example of the trend of change replaced as above.

It is assumed that the matrix **X** is generated by summing the matrix **B** and the matrix **G,** i.e., matrix **X** = matrix **B** + matrix **G.** The initial values of the first parameters indicated in the matrix **B** are the same, i.e., the matrix **B** satisfies $\mathbf{B}_{k,i} = \mathbf{B}_{k,j} = Y$ ($i \neq j$, $i,j \in [1,M]$, $k \in [1,N]$). The trend of the change in the adjustment values in the matrix **G** is the same as the trend of the change in the first parameters in the matrix **X,** i.e., the change in the adjustment values in the matrix **G** satisfies the following conditions that: the adjustment values of the target transmission resources at different time-domain positions associated within the same frequency-domain unit in the matrix **G** are the same, and the adjustment values of the target transmission resources within different frequency-domain units associated on the same time-domain position are different. The adjustment values in the matrix **G** located at the upper and lower ends of the matrix are less than or equal to an adjustment value located at the center position of the matrix, and the trend of change in the adjustment values in the matrix **G** is axisymmetric with the center frequency-domain position as the center axis. Accordingly, the change in the adjustment values in the matrix **G** may be represented as: $\mathbf{G}_{k,i} = \mathbf{G}_{N-k+1,i}$ ($i \in [1, M]$, $k \in [1,N]$), $\mathbf{G}_{k,i} \geq \mathbf{G}_{k+1,i}$ ($i \in [1,M]$, $k \in [1, \lfloor N/2 \rfloor]$), and $\mathbf{G}_{1,i} = \mathbf{G}_{N,i} = P$ ($i \in [1,M]$), and P represents the values of the adjustment values located at the matrix edge rows in the matrix **G**. In addition, the adjusted values in the matrix **G** decrease from the edge rows of the matrix to the center rows of the matrix **G** according to a Rule F, and the remaining frequency-domain units are set to zero after S ( $S \leq \lfloor N/2 \rfloor$ frequency-domain units are decreased. The Rule F may include decreasing once at every interval of $q$ frequency-domain units by a proportion coefficient $r$

($r<1$) and decreasing once at every interval of $q$ frequency-domain units by a first step size $t$ ( $t \lfloor S/q \rfloor \leq 1$ ), where $\lfloor \ \rfloor$ represents rounding down.

Solutions for constructing the matrix **X** in the embodiments of the present disclosure is introduced below in conjunction with FIG. 44 to FIG. 45. It should be noted that the embodiments of the present disclosure do not specifically limit parameters involved below, and in some cases, the process of constructing the matrix **X** may include some parameters of the parameters involved below. In addition, the parameters involved below may be replaced with other parameters that have the similar functions.

Referring to FIG. 44, the matrix **X** shown in FIG. 42 may be constructed by a formula: matrix **X** = matrix **B** + matrix **G**, where Y = *0.1, S = 3, P* = 0.6, $q = 1$, $r = 0.5$, and the Rule F includes decreasing once at every interval of $q=1$ frequency-domain unit by a proportion coefficient $r = 0.5$ and the values of the remaining rows are zero after S=3 rows is decreased. That is, the initial values of the first parameters in the matrix **B are** 0.1. The change rule of the adjusted values in the matrix **G** includes: $\mathbf{G}_{k,i} = \mathbf{G}_{N-k+1,i}$ ($i \in [1,M]$, $k \in [1,N]$), $\mathbf{G}_{k,i} \geq \mathbf{G}_{k+1,i}$ ($i \in [1,M]$, $k \in [1, \lfloor N/2 \rfloor]$ ), and $\mathbf{G}_{1,i} = \mathbf{G}_{N,i} = P=0.6$ ($i \in [1,M]$), i.e., the adjusted values of the 1-st row and the 12-th row in the matrix **G** are 0.6; and after 3 rows are decreased according to the Rule F starting from the 12-th row to the lower side of the matrix **G** (i.e., the 12-th row to the 10-th row decreases), the adjusted values in the remaining rows are 0; and after 3 rows are decreased according to the Rule F starting from the 1-st row to the upper side of the matrix **G** (i.e., the 1-st row to the 3-rd row decreases), the adjusted values in the remaining rows are 0..

Accordingly, continuing to refer to FIG. 44, the trend of change in the matrix **X** obtained from the superimposition of the matrix **B** and the matrix **G** described above may satisfy: $\mathbf{X}_{k,i} = \mathbf{X}_{N-k+1,i}$ ($i \in [1,M]$, $k \in [1,N]$), $\mathbf{X}_{k,i} \geq \mathbf{X}_{k+1,i}$ ($i \in [1,M]$, $k \in [1, \lfloor N/2 \rfloor]$ ), and $\mathbf{X}_{1,i} = \mathbf{X}_{N,i} = P+Y=0.7$ ($i \in [1,M]$), i.e., the values of the first parameters of the 1-st row and the 12-th row in the matrix **X** is 0.7; and after 3 rows are decreased according to the Rule F starting from the 12-th row to the lower side of the matrix **X** (the 12-th row to the 10-th row decreases), the values of the first parameters in the remaining rows are 0; and after 3 rows are decreased according to the Rule F starting from the 1-st row to the upper side of the matrix **X** (the 1-st row to the 3-rd row decreases), the values of the first parameters in the remaining rows are 0.

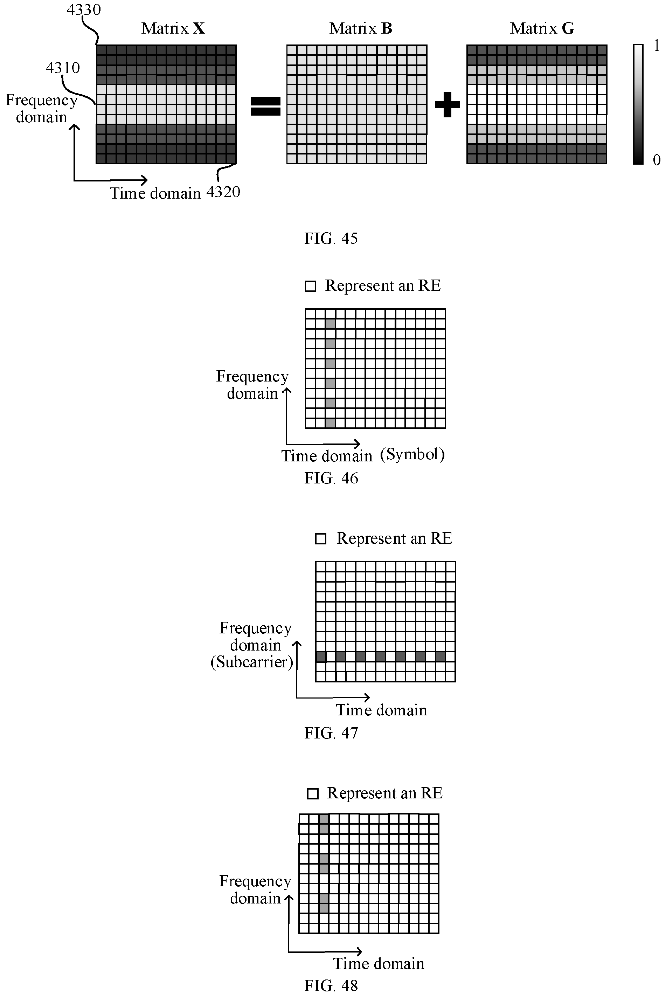

Referring to FIG. 45, the matrix **X** shown in FIG. 43 may be constructed by a formula: matrix **X** = matrix **B** + matrix **G,** where Y = 0.1, S = 4, P = 0.6, $q = 2$, $r = 0.5$, and the Rule F includes decreasing once at every interval of $q=2$ frequency-domain units by a proportion coefficient $r = 0.4$ and the values of the remaining columns are zero after S=4 rows is decreased. That is, the initial values of the first parameters in the matrix **B are** 0.1. The change rule of the adjusted values in the matrix **G** includes: $G_{k,i} = G_{N-k+1,i}$ ($i \in [1,M]$, $k \in [1,N]$), $G_{k,i} \geq G_{k+1,i}$ ($i \in [1,M]$, $k \in [1, \lfloor N/2 \rfloor]$ ), and $G_{1,i} = G_{N,i} = P = 0.6$ ($i \in [1,M]$), i.e., the adjusted values of the 1-st row and the 12-th row in the matrix **G** are 0.6; and after 4 rows are decreased according to the Rule F starting from the 12-th row to the lower side of the matrix **G** (i.e., the 12-th row to the 9-th row decreases), the adjusted values in the remaining rows are 0; and after 4 rows are decreased according to the Rule F starting from the 1-st row to the upper side of the matrix **G** (i.e., the 1-st row to the 4-th row decreases), the adjusted values in the remaining rows are 0.

Accordingly, continuing to refer to FIG. 45, the trend of change in the matrix **X** obtained from the superimposition of the matrix **B** and the matrix **G** described above may satisfy: $G_{k,i} = G_{N-k+1,i}$ ($i \in [1,M]$, $k \in [1,N]$), $G_{k,i} \geq G_{k+1,i}$ ($i \in [1,M]$, $k \in [1, \lfloor N/2 \rfloor]$ ), and $G_{1,i} = G_{N,i} = P+Y=0.7$ ($i \in [1,M]$), i.e., the values of the first parameters of the 1-st row and the 12-th row in the matrix **G** are 0.7; and after 4 rows are decreased according to the Rule F starting from the 12-th row to the lower side of the matrix **G** (the 12-th row to the 9-th row decreases), the values of the first parameters in the remaining rows are 0; and after 4 rows are decreased according to the Rule F starting from the 1-st row to the upper side of the matrix **G** (the 1-st row to the 4-th row decreases), the values of the first parameters in the remaining rows are 0.

The above introduces the change mode of the first parameter in the embodiments of the present disclosure, in conjunction with the non-orthogonal transmission mode 4 and the non-orthogonal transmission mode 5. In the embodiments of the present disclosure, there is no limitation on the change mode of the first parameter. The following is introduced in conjunction with **a non-orthogonal transmission mode 6.**

**In a non-orthogonal transmission mode 6,** first parameters associated with target transmission resources in a third resource set are determined based on a first adjustment value.

In some implementations, the first adjustment value may be used to enlarge the first parameter associated with the corresponding target transmission resource. That is, assuming that transmission resources other than the target transmission resources in the third resource set are other transmission resources, the first parameter associated with the target transmission resource within the third resource set is larger than first parameters associated with the other transmission resources. Of course, in the embodiments of the present disclosure, the first parameter associated with the target transmission resource within the third resource set may be less than the first parameters associated with the other transmission resources. An example of the first parameter associated with the target transmission resource within the third resource set being larger than the first parameters associated with the other transmission resources, will be introduced below in conjunction with FIG. 45 to FIG. 52, and will not be repeated herein for the sake of brevity.

It should be understood that in the embodiments of the present disclosure, the trend of change in the first parameters may be combined with any one trend of change in the first parameters introduced above, for example, it may be combined with the trend of change in the first parameters associated with the first resource set, and in this case, the target transmission resource in the third resource set may be some of the target transmission resources in the first resource set, and in this case, the third resource set may be understood a subset of the first resource set. For another example, it may be combined with the trend of change in the first parameters associated with the second resource set, and in this case, the target transmission resource in the third resource set may be some of the target transmission resources in the second resource set, and in this case, the third resource set may be understood as a subset of the second resource set. Of course, in the embodiments of the present disclosure, the trend of change in the first parameters may be used independently. In this case, the third resource set is an independent resource set. For ease of understanding, the change mode of the first parameters in the third resource set is introduced below in conjunction with the non-orthogonal transmission mode 6.

In some implementations, the target transmission resources in the third resource set are arranged according to a first rule, where the first rule includes one or more of: target transmission resources within a target time-domain unit being arranged at intervals in the frequency domain; target transmission resources within a target frequency-domain unit being arranged at intervals in the frequency domain; target transmission resources within a target time-domain unit belonging to multiple groups of transmission resources, the multiple groups of transmission resources being arranged at intervals in the frequency domain, and target transmission resources within a first group of transmission resources among the multiple groups of transmission resources being consecutive in the frequency domain; or target transmission resources within a target frequency-domain unit belonging to multiple groups of transmission resources, the multiple groups of transmission resources being arranged at intervals in the time domain, and target transmission resources within a second group of transmission resources among the multiple groups of transmission resources being consecutive in the time domain.

If the first rule includes target transmission resources within a target time-domain unit being arranged at intervals in the frequency domain, where the target time-domain unit may include a plurality of frequency-domain units that are consecutive in the frequency domain, and accordingly, the target transmission resources within the plurality of frequency-domain units are arranged at intervals in the frequency domain. Alternatively, the target transmission resources assigned by the first adjustment value associated with the third resource set satisfy: the target transmission resources within the plurality of frequency-domain units being arranged at intervals in the frequency domain.

In the embodiments of the present disclosure, there is no limitation on the mode in which the target transmission resources are arranged at intervals in the frequency domain. For example, being arranged at intervals in the frequency domain described above may be understood as the target transmission resources being separated by a frequency-domain unit, within a plurality of frequency-domain units consecutive in the frequency domain. For another example, being arranged at intervals in the frequency domain described above may be understood as the target transmission resources being separated by multiple frequency-domain units, within a plurality of frequency-domain units consecutive in the frequency domain.

For ease of understanding, the target transmission resources in the embodiments of the present disclosure are introduced below in conjunction with FIG. 46. Referring to FIG. 46, the above-described plurality of frequency-domain resources consecutive in the frequency domain include a plurality of REs within a third symbol in an RB, and the target transmission resources are arranged at intervals of one RE within the plurality of REs. Accordingly, the first adjustment value is assigned to the target transmission resources within the third symbol, to determine the first parameters associated with the target transmission resources within the third symbol.

If the first rule includes target transmission resources within a target time-domain unit being arranged at intervals in the time domain, where the target time-domain unit may include a plurality of time-domain units consecutive in the time domain, accordingly, the target transmission resources within the plurality of time-domain units are arranged at intervals in the time domain. Alternatively, the target transmission resources assigned by the first adjustment value associated with the third resource set satisfy: the target transmission resources within the plurality of time-domain units consecutive in the time domain being arranged at intervals in the time domain.

In the embodiments of the present disclosure, there is no limitation on the mode in which the target transmission resources are arranged at intervals in the time domain. For example, being arranged at intervals in the time domain described above may be understood as the target transmission resources within the plurality of time-domain units consecutive in the time domain are separated by a time-domain unit. For another example, being arranged at intervals in the frequency domain described above may be understood as the target transmission resources within the plurality of time-domain units consecutive in the time domain are separated by multiple time-domain units.

For ease of understanding, the target transmission resources in the embodiments of the present disclosure are introduced below in conjunction with FIG. 47. Referring to FIG. 47, the plurality of frequency-domain resources consecutive in the frequency domain include a plurality of REs within a third subcarrier in an RB, and the target transmission resources are arranged at intervals within the plurality of REs. Accordingly, the first adjustment value is assigned to the target transmission resources within the third subcarrier, to determine the first parameters associated with the target transmission resources within the third symbol.

If the first rule includes target transmission resources within a target time-domain unit belonging to multiple groups of transmission resources, the multiple groups of transmission resources being arranged at intervals in the frequency domain, and target transmission resources within a first group of transmission resources among the multiple groups of transmission resources being consecutive in the frequency domain.

It should be noted that the target transmission resources within a certain group of transmission resources (i.e., the first group of transmission resources) among the multiple groups of transmission resources are consecutive in the frequency domain, or target transmission resources within each group of transmission resource (including the first group of transmission resources) among the multiple groups of transmission resources are consecutive in the frequency domain, which is not limited in the embodiments of the present disclosure.

In addition, the number of target transmission resources included in each group of transmission resources among the multiple groups of transmission resources may be the same, or, the number of target transmission resources included in some or all groups of transmission resources among the multiple groups of transmission resources may be different, which is not limited in the embodiments of the present disclosure.

In the embodiments of the present disclosure, there is no limitation on the mode in which the multiple groups of transmission resources are arranged at intervals in the frequency domain. For example, being arranged at intervals in the frequency domain described above may be understood as the multiple groups of transmission resources being separated by a frequency-domain unit, within the plurality of frequency-domain units consecutive in the frequency domain. For another example, being arranged at intervals in the frequency domain described above may be understood as the multiple groups of transmission resources being separated by multiple frequency-domain units, within the plurality of frequency-domain units consecutive in the frequency domain.

For ease of understanding, the target transmission resources in the embodiments of the present disclosure are introduced below in conjunction with FIG. 48. Referring to FIG. 48, the multiple groups of transmission resources include a transmission resource group 1, a transmission resource group 2, and a transmission resource group 3, and each of the transmission resource groups contains 2 target transmission resources consecutive in the frequency domain. The transmission resource group 1 is separated from the transmission resource group 2 by 2 frequency-domain units in the frequency domain, and the transmission resource group 2 is separated from the transmission resource group 3 by 2 frequency-domain units in the frequency domain. Accordingly, the first adjustment value is assigned to the target transmission resources within the transmission resource group 1, the transmission resource group 2, and the transmission resource group 3, to determine the first parameters associated with the target transmission resources within the third symbol.

If the first rule includes target transmission resources within a target time-domain unit belonging to multiple groups of transmission resources, the multiple groups of transmission resources being arranged at intervals in the time domain, and target transmission resources within a first group of transmission resources among the multiple groups of transmission resources being consecutive in the time domain.

It should be noted that target transmission resources within a certain group of transmission resources (i.e., the second group of transmission resources) among the multiple groups of transmission resources are consecutive in the time domain, or target transmission resources within each group of transmission resources (including the second group of transmission resources) among the multiple groups of transmission resources are consecutive in the time domain, which is not limited in the embodiments of the present disclosure.

In addition, the number of target transmission resources included in each group of transmission resources among the multiple groups of transmission resources may be the same, or, the number of target transmission resources included in some or all groups of transmission resources among the multiple groups of transmission resources may be different, which is not limited in the embodiments of the present disclosure.

In the embodiments of the present disclosure, there is no limitation on the mode in which the multiple groups of transmission resources are arranged at intervals in the time domain. For example, being arranged at intervals in the time domain described above may be understood as the multiple groups of transmission resources being separated by a time-domain unit, within the plurality of time-domain units consecutive in the time domain. For another example, being arranged at intervals in the time domain described above may be understood as the multiple groups of transmission resources being separated by multiple time-domain units, within the plurality of time-domain units consecutive in the time domain.

For ease of understanding, the target transmission resources in the embodiments of the present disclosure are introduced below in conjunction with FIG. 48. Referring to FIG. 48, the multiple groups of transmission resources include a transmission resource group 1, a transmission resource group 2, and a transmission resource group 3, and each of the transmission resource groups contains 2 target transmission resources consecutive in the time domain. The transmission resource group 1 is separated from the transmission resource group 2 by 2 time-domain units in the time domain, and the transmission resource group 2 is separated from the transmission resource group 3 by 2 time-domain units in the time domain. Accordingly, the first adjustment value is assigned to the target transmission resources within the transmission resource group 1, the transmission resource group 2, and the transmission resource group 3, to determine the first parameters associated with the target transmission resources within the third symbol.

In some scenarios, if the first adjustment value is used to adjust the first parameter of the target transmission resource in the target resource set, and the target transmission resource in the target resource set may be represented as a matrix of $N \times M$, and accordingly, the first adjustment value may be represented as a matrix **H** of $N \times M$, where the first adjustment value in the matrix **H** that is associated with the target transmission resource in the third resource set may be a first value and first adjustment values in the matrix **H** that are associated with the other target transmission resources may be a second value. The first value is different from the second value, for example, the first value may be a non-zero value, and accordingly, the second value is 0. For another example, the first value may be 0, and accordingly, the second value is a non-zero value.

In some implementations, the matrix **H** has a gridded feature (also referred to as a "grid matrix"), i.e., the first adjustment value associated with REs corresponding to some of the time-domain units and/or some of the frequency domain units is U, and the first adjustment value associated with the remaining REs is 0. The time-domain units may be selected according to an index set $V \subseteq \{i \mid i \in [1,M]\}$, and the frequency-domain units may be selected according to a starting index $a$ ($a \in [1,N]$), a length $l$ ($l \in [1,N]$), and an interval $d$ ($d \in [1,N]$). The frequency domain units may be sequentially indexed in order of frequency from high to low. In addition, the indexes of the frequency-domain units are indexed starting from 1.

For ease of understanding, taking the matrix **H** as an example, in conjunction with the following Examples 1 to 3, solutions of the non-orthogonal transmission mode 6 combined with the trend of change in the first parameters in other non-orthogonal transmission modes in the embodiments of the present disclosure are introduced below.

**In Example 1,** the matrix **H** is combined with the non-orthogonal transmission method 3 to obtain the matrix **X.**

In some implementations, the matrix **X** may be constructed by a formula: matrix **X** = matrix **B** + matrix **H,** where for the matrix **B**, $\mathbf{B}_{k,i} = \mathbf{B}_{k,j} = Y$ ($i \neq j$, $i,j \in [1,M]$, $k \in [1,$

*N*]). For the matrix **H,** the first adjustment value associated with REs corresponding to some of the time-domain units and/or some of the frequency-domain units is *U,* and the first adjustment value associated with the remaining REs is 0. The time-domain units may be selected according to the index set $V \subseteq \{i \mid i \in [1,M]\}$, and the frequency-domain units may be selected according to the starting index *a* ($a \in [1,N]$), the length of the frequency domain and/or the time domain *l* ($l \in [1,N]$), the interval *d* ($d \in [1,N]$), and for the corresponding selected target transmission resources, their associated first parameters are set based on the first adjusted value.

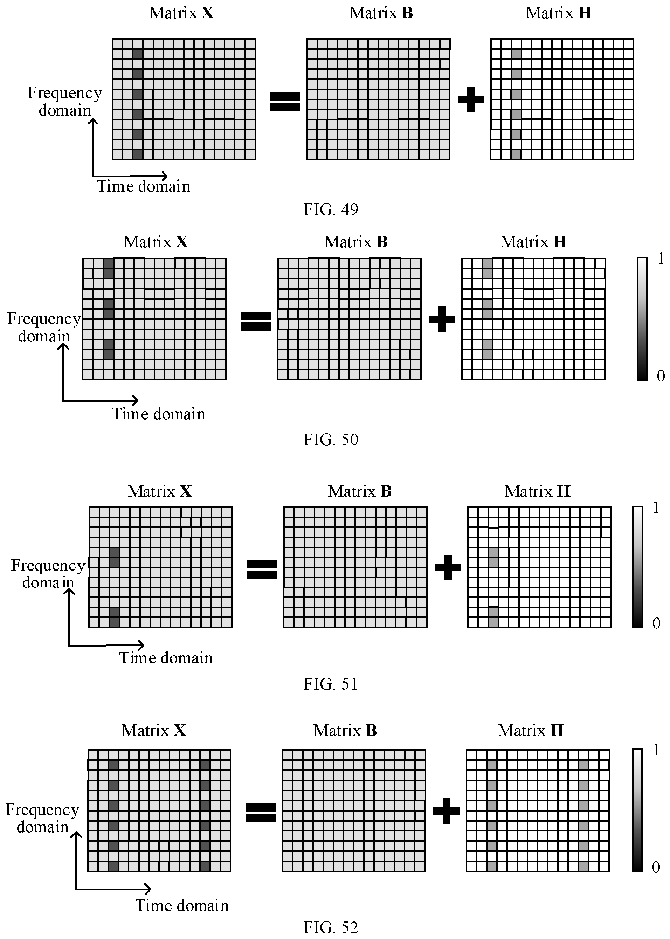

Referring to FIG. 49, the matrix **X** may be constructed by the formula: matrix **X** = matrix B + matrix **H,** where *Y*=0.1, *V*={3}, *U*=0.2, *a*=2, *l*=1, and d=1. That is, the initial value of the first parameter in the matrix **B** is 0.1. The target transmission resources adjusted by the first adjustment value in the matrix **H** satisfy the following conditions that: they are in a time-domain unit with the index of 3, the starting frequency of the corresponding frequency-domain unit is a frequency-domain unit corresponding to a subcarrier with an index *a*=2, the frequency-domain length is *l*=1, and the target transmission resources corresponding to the first adjustment value are separated by d=1 frequency-domain unit. Accordingly, the value of the first adjustment value associated with the above target transmission resources in the matrix **H** is 0.2, and the value of the first adjustment value associated with the other target transmission resources is 0. Accordingly, continuing to refer to FIG. 49, the values of the first parameters associated with the target transmission units satisfying the above conditions in the constructed matrix **X** are *Y+U=0.3,* and the values of the first parameters associated with the target transmission units not satisfying the above conditions are *Y=0.1.*

Referring to FIG. 50, the matrix **X** may be constructed by the formula: matrix **X** = matrix B + matrix **H,** where *Y*=0.1, *V*={3}, *U*=0.2, *a*=1, *l*=2, and *d*=2. That is, the initial value of the first parameter in the matrix **B** is 0.1. The target transmission resources adjusted by the first adjustment value in the matrix **H** satisfy the following conditions that: they are in a time-domain unit with the index of 3, the starting frequency of the corresponding frequency-domain unit is a frequency-domain unit corresponding to a subcarrier with an index *a*=1, the frequency-domain length is *l*=2, and the target transmission resources corresponding to the first adjustment value are separated by *d*=2 frequency-domain unit. Accordingly, the value of the first adjustment value associated with the above target transmission resources in the matrix **H** is 0.2, and the value of the first adjustment value associated with the other target transmission resources is 0. Accordingly, continuing to refer to FIG. 50, the values of the first parameters associated with the target transmission units satisfying the above conditions in the constructed matrix **X** are *Y+U=0.3,* and the values of the first parameters associated with the target transmission units not satisfying the above conditions are *Y=0.1.*

Referring to FIG. 51, the matrix **X** may be constructed by the formula: matrix X = matrix B + matrix **H,** where *Y*=0.1, *V*={3}, *U*=0.2, *a*=5, *l*=2, and *d*=4. That is, the initial value of the first parameter in the matrix **B** is 0.1. The target transmission resources adjusted by the first adjustment value in the matrix **H** satisfy the following conditions that: they are in a time-domain unit with the index of 3, the starting frequency of the corresponding frequency-domain unit is a frequency-domain unit corresponding to a subcarrier with an index *a*=5, the frequency-domain length is *l*=2, and the target transmission resources corresponding to the first adjustment value are separated by *d*=4 frequency-domain unit. Accordingly, the value of the first adjustment value associated with the above target transmission resources in the matrix **H** is 0.2, and the value of the first adjustment value associated with the other target transmission resources is 0. Accordingly, continuing to refer to FIG. 51, the values of the first parameters associated with the target transmission units satisfying the above conditions in the constructed matrix **X** are *Y+U=0.3,* and the values of the first parameters associated with the target transmission units not satisfying the above conditions are *Y=0.1.*

Referring to FIG. 52, the matrix **X** may be constructed by the formula: matrix X = matrix B + matrix **H,** where *Y*=0.1, *V*={3, 12}, *U*=0.2, *a*=2, *l*=1, and d=1. That is, the initial value of the first parameter in the matrix **B** is 0.1. The target transmission resource adjusted by the first adjustment value in the matrix **H** satisfies the following conditions that: they are in time-domain units with the indexes of 3 and 12, the starting frequency of the corresponding frequency-domain unit is a frequency-domain unit corresponding to a subcarrier with an index *a*=2, the frequency-domain length is *l*=1, and the target transmission resources corresponding to the first adjustment value are separated by *d*=1 frequency-domain unit. Accordingly, the value of the first adjustment value associated with the above target transmission resources in the matrix **H** is 0.2, and the value of the first adjustment value associated with the other target transmission resources is 0. Accordingly, continuing to refer to FIG. 52, the values of the first parameters associated with the target transmission units satisfying the above conditions in the constructed matrix **X** are *Y+U=0.3,* and the values of the first parameters associated with the target transmission units not satisfying the above conditions are *Y=0.1.*

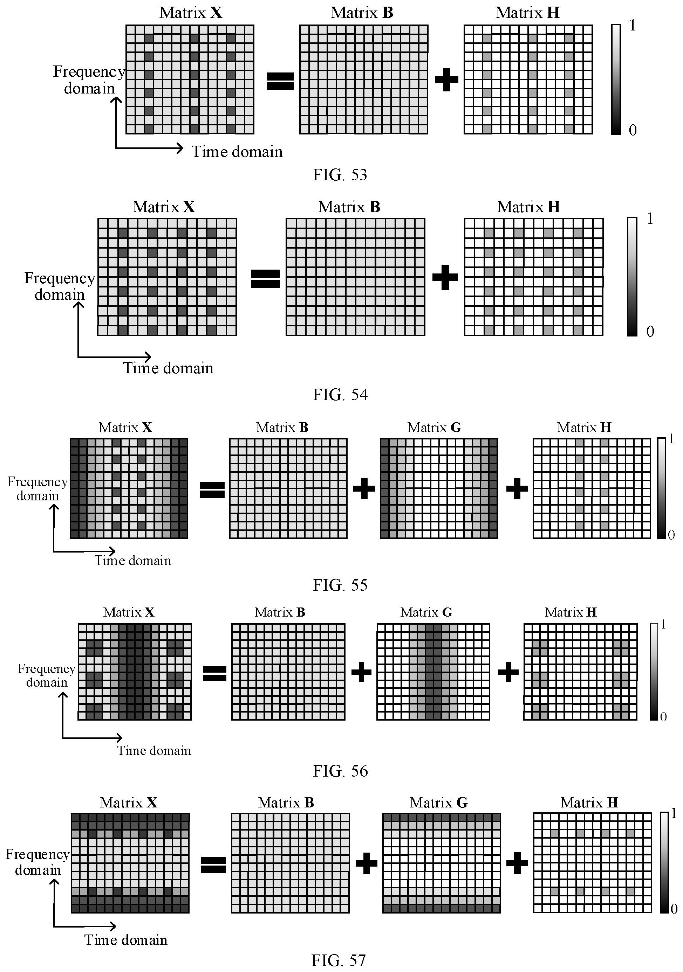

Referring to FIG. 53, the matrix **X** may be constructed by the formula: matrix **X** = matrix B + matrix **H,** where *Y*=0.1, *V*={3, 8, 12}, *U*=0.2, *a*=2, *l*=1, and d=1. That is, the initial value of the first parameter in the matrix **B** is 0.1. The target transmission resource adjusted by the first adjustment value in the matrix **H** satisfies the following conditions that: they are in time-domain units with the indexes of 3, 8 and 12, the starting frequency of the corresponding frequency-domain unit is a frequency-domain unit corresponding to a subcarrier with an index *a*=2, the frequency-domain length is *l*=1, and the target transmission resources corresponding to the first adjustment value are separated by $d$=1 frequency-domain unit. Accordingly, the value of the first adjustment value associated with the above target transmission resources in the matrix **H** is 0.2, and the value of the first adjustment value associated with the other target transmission resources is 0. Accordingly, continuing to refer to FIG. 53, the values of the first parameters associated with the target transmission units satisfying the above conditions in the constructed matrix **X** are $Y+U$=0.3, and the values of the first parameters associated with the target transmission units not satisfying the above conditions are $Y$=0.1.

Referring to FIG. 54, the matrix **X** may be constructed by the formula: matrix **X** = matrix B + matrix **H,** where $Y$=0.1, $V$={3, 6, 9, 12}, $U$=0.2, $a$=2, $l$=1, and d=1. That is, the initial value of the first parameter in the matrix **B** is 0.1. The target transmission resource adjusted by the first adjustment value in the matrix **H** satisfies the following conditions that: they are in time-domain units with the indexes of 3, 6, 9 and 12, the starting frequency of the corresponding frequency-domain unit is a frequency-domain unit corresponding to a subcarrier with an index $a$=2, the frequency-domain length is $l$=1, and the target transmission resources corresponding to the first adjustment value are separated by $d$=1 frequency-domain unit. Accordingly, the value of the first adjustment value associated with the above target transmission resources in the matrix **H** is 0.2, and the value of the first adjustment value associated with the other target transmission resources is 0. Accordingly, continuing to refer to FIG. 54, the values of the first parameters associated with the target transmission units satisfying the above conditions in the constructed matrix **X** are $Y+U$=0.3, and the values of the first parameters associated with the target transmission units not satisfying the above conditions are $Y$=0.1.

**In Example 2,** the matrix **H** is combined with the non-orthogonal transmission method 4 (e.g., the Example 4-4) to obtain the matrix **X.**

In some implementations, the matrix **X** may be constructed by a formula: matrix **X** = matrix **B** + matrix **G** + matrix **H,** where for the matrix **B,** $\mathbf{B}_{k,i} = \mathbf{B}_{k,j}$=$Y$ ($i{\neq}j$, $i,j{\in}[1,M]$, $k{\in}[1,N]$).

For the matrix **G,** the change in adjustment value 2 in the matrix **G** satisfies the following conditions: $\mathbf{G}_{k,i}$= $\mathbf{G}_{k,M\text{-}i+1}$ ($i{\in}[1,M]$, $k{\in}[1,N]$), $\mathbf{G}_{k,i} \geq \mathbf{G}_{k,i+1}$ ( $i\in\left[1,\lfloor M/2\rfloor\right]$ , $k{\in}[1,N]$), and $\mathbf{G}_{k,1} = \mathbf{G}_{k,M}$= $P$ (k$E$ [1,N]), and $P$ represents the value of the adjustment value 2 in edge columns of the matrix in the matrix **G.** In addition, the adjustment value 2 in the matrix **G** decreases according to the Rule F from the edge columns of the matrix toward the center column of the matrix **G,** and after $S$ ( $S\leqslant\lfloor M/2\rfloor$ ) time-domain units are decreased, the remaining time-domain units are set to zero. The Rule F may include decreasing once at every interval of $U$ time-domain units according to the proportion coefficient $r$ (r<1).

For the matrix **H,** the first adjustment value associated with the target transmission resources corresponding to some of the time-domain units and/or some of the frequency-domain units is $U$, and the first adjustment value associated with the remaining target transmission resources is 0. The time-domain units may be selected according to the index set $V{\subseteq}\{i \mid i{\in} [1,M]\}$, and the frequency-domain units may be selected according to the starting index $a$ ($a{\in} [1,N]$), the length of the frequency domain and/or the time domain $l$ ($l{\in}[1,N]$), the interval $d$ ($d {\in} [1,N]$), and for the corresponding selected target transmission resources, their associated first parameters are set based on the first adjusted value.

Referring to FIG. 55, the matrix **X** may be constructed by the formula: matrix **X** = matrix **B** + matrix **G** + matrix **H,** where $Y$=0.1, $S$=4, $P$=0.6, $r$=0.5, $V$={6, 9}, $U$=0.2, $a$=1, $l$=1, $d$=1. That is, the initial value of the first parameter in the matrix **B** is 0.1. The target transmission resources adjusted by the first adjustment value in the matrix **H** satisfy the following conditions that: they are in time-domain units with the indexes of 6 and 9, the starting frequency of the corresponding frequency-domain unit is a frequency-domain unit corresponding to a subcarrier with an index $a$=1, the frequency-domain length $l$ is 1, and the target transmission resources corresponding to the first adjustment value are separated by d=1 frequency-domain unit. Accordingly, the value of the first adjustment value associated with the above target transmission resources in the matrix **H** is 0.2, and the value of the first adjustment value associated with the other target transmission resources is 0. The change in the adjustment value 2 in the matrix **G** may be represented as: $\mathbf{G}_{k,i} = \mathbf{G}_{k,M\text{-}i+1}$ ($i{\in}[1,M]$, $k{\in}[1,N]$), $\mathbf{G}_{k,i} \geq \mathbf{G}_{k,i+1}$ ( $i\in\left[1,\lfloor M/2\rfloor\right]$, $k{\in}[1, N]$), and $\mathbf{G}_{k,1} = \mathbf{G}_{k,M}$= $P$=0.6 (k$E$ [1,N]), and $P$ represents the value of the adjustment value 2 in edge columns of the matrix in the matrix **G.** In addition, the adjustment value 2 in the matrix **G** decreases according to the Rule F from the edge columns of the matrix to the center column of the matrix **G,** and after $S$=4 time-domain units are decreased, the remaining time-domain units are set to zero. The Rule F may include decreasing once at every interval of $U$=1 time-domain unit according to the proportion coefficient $r$=0.5.

Accordingly, continuing to refer to FIG. 55, the values of the first parameters associated with the target transmission units associated with the first adjustment value in the matrix **H,** in the constructed matrix **X,** are $Y+U+P$=0.9, and the values of the first parameters associated with the remaining target transmission units are determined by matrix **B** + matrix **G.**

**In Example 3,** the matrix **H** is combined with the non-orthogonal transmission method 4 (e.g., the Example 4-2) to obtain the matrix **X.**

In some implementations, the matrix **X** may be constructed by a formula: matrix **X** = matrix **B** + matrix **G** + matrix **H,** where for the matrix B, $\mathbf{B}_{k,i} = \mathbf{B}_{k,j}$=$Y$ ($i{\neq}j$, $i,j{\in}[1,M]$,

$k \in [1,N]$).

For the matrix **G**, the change in adjustment value 2 in the matrix **G** satisfies the following conditions: $\mathbf{G}_{k,i}= \mathbf{G}_{k,M-i+1}$ ($i \in [1,M]$, $k \in [1,N]$), $\mathbf{G}_{k,i} \leq \mathbf{G}_{k,i+1}$ ( $i \in [1,\lceil M/2 \rceil]$, $k \in [1,N]$), and if M is odd, $\mathbf{G}_{k,\lceil M/2 \rceil}= P$ ($k \in [1,N]$), and if M is even, $\mathbf{G}_{k,M/2}=\mathbf{G}_{k,M/2+1}= P$ ($k \in [1,N]$), and P represents the value of the adjustment value located at the center axis in the matrix **G**. In addition, the adjusted values in the matrix **G** decrease from the center axis to the edges of the matrix **G** according to the Rule F, and the remaining time-domain units are set to zero after S ( $S \leqslant \lfloor M/2 \rfloor$ ) time-domain units are decreased. The Rule F may include decreasing once at every interval of $U$ time-domain units by a proportion coefficient $r$ ($r$<1).

For the matrix **H**, the first adjustment value associated with the target transmission resources corresponding to some of the time-domain units and/or some of the frequency-domain units is U, and the first adjustment value associated with the remaining target transmission resources is 0. The time-domain units may be selected according to the index set $V \subseteq \{i \mid i \in [1,M]\}$, and the frequency-domain units may be selected according to the starting index $a$ ($a \in [1,N]$), the length of the frequency domain and/or the time domain $l$ ($l \in [1,N]$), the interval $d$ ($d \in [1,N]$), and for the corresponding selected target transmission resources, their associated first parameters are set based on the first adjusted value.

Referring to FIG. 56, the matrix **X** may be constructed by the formula: matrix **X** = matrix **B** + matrix **G** + matrix **H**, where $Y$=0.1, $S$=3, $P$=0.6, $r$=0.5, $V$={2, 3, 12, 13}, $U$=0.2, $a$=3, $l$=2, $d$=2. That is, the initial value of the first parameter in the matrix **B** is 0.1. The target transmission resources adjusted by the first adjustment value in the matrix **H** satisfy the following conditions that: they are in time-domain units with the indexes of 2, 3, 12 and 13, the starting frequency of the corresponding frequency-domain unit is a frequency-domain unit corresponding to a subcarrier with an index $a$=3, the frequency-domain length is $l$=1, and the target transmission resources corresponding to the first adjustment value are separated by $d$=2 frequency-domain unit. Accordingly, the value of the first adjustment value associated with the above target transmission resources in the matrix **H** is 0.2, and the value of the first adjustment value associated with the other target transmission resources is 0. The change in the adjustment value 2 in the matrix **G** may be represented as: $\mathbf{G}_{k,i}= \mathbf{G}_{k,M-i+1}$ ($i \in [1,M]$, $k \in [1,N]$), $\mathbf{G}_{k,i} \geq \mathbf{G}_{k,i+1}$ ( $i \in [1,\lceil M/2 \rceil]$, $k \in [1,N]$), $\mathbf{G}_{k,M/2}=\mathbf{G}_{k,M/2+1}= P$=0.6 ($k \in [1,N]$), and P represents the value of the adjustment value 2 in edge columns of the matrix in the matrix **G**. In addition, the adjustment value 2 in the matrix **G** decreases according to the Rule F from the center column of the matrix to the edge columns of the matrix **G**, and after S=3 time-domain units are decreased, the remaining time-domain units are set to zero. The Rule F may include decreasing once at every interval of $U$=1 time-domain unit according to the proportion coefficient $r$=0.5.

Accordingly, continuing to refer to FIG. 56, the values of the first parameters associated with the target transmission units associated with the first adjustment value in the matrix **H**, in the constructed matrix **X**, are Y+U+P=0.9, and the values of the first parameters associated with the remaining target transmission units are determined by matrix **B** + matrix **G**.

**In Example 4,** the matrix **H** is combined with the non-orthogonal transmission method 5 (e.g., the Example 5-3) to obtain the matrix **X**.

In some implementations, the matrix **X** may be constructed by a formula: matrix **X** = matrix **B** + matrix **G** + matrix **H**, where for the matrix **B**, $\mathbf{B}_{k,i} = \mathbf{B}_{k,j}=Y$ ($i \neq j$, $i,j \in [1,M]$, $k \in [1,N]$).

For matrix **G**, the change in adjustment value 2 in the matrix **G** satisfies the following conditions: $\mathbf{G}_{k,i}= \mathbf{G}_{N-k+1,i}$ ($i \in [1,M]$, $k \in [1,N]$), $\mathbf{G}_{k,i} \geq \mathbf{G}_{k+1,i}$ ($i \in [1,M]$, $k \in [1,\lceil N/2 \rceil]$), and $\mathbf{G}_{1,i} = \mathbf{G}_{N,i}= P$ ($i \in [1,M]$), P represents the value of the adjustment value in edge rows of the matrix in the matrix **G**. In addition, the adjustment value in the matrix **G** decreases according to the Rule F from the edge rows of the matrix toward the center row of the matrix **G**, and after S ( $S \leqslant \lfloor N/2 \rfloor$ ) frequency-domain units are decreased, the remaining frequency-domain units are set to zero. The Rule F may include decreasing once at every interval of $q$ frequency-domain units according to the proportion coefficient $r$ ($r$<1), and $\lfloor \rfloor$ represents rounding down.

For the matrix **H**, the first adjustment value associated with the target transmission resources corresponding to some of the time-domain units and/or some of the frequency-domain units is $U$, and the first adjustment value associated with the remaining target transmission resources is 0. The time-domain units may be selected according to the index set $V \subseteq \{i \mid i \in [1,M]\}$, and the frequency-domain units may be selected according to the starting index $a$ ($a \in [1,N]$), the length of the frequency domain and/or the time domain $l$ ($l \in [1,N]$), the interval $d$ ($d \in [1,N]$), and for the corresponding selected target transmission resources, their associated first parameters are set based on the first adjusted value.

Referring to FIG. 57, the matrix **X** may be constructed by the formula: matrix **X** = matrix **B** + matrix **G** + matrix **H**, where $Y$=0.1, $S$=3, $P$=0.6, $U$=0.2, $r$=0.5, $V$={3, 6, 9, 12}, $a$=3, $l$=1, $d$=6. That is, the initial value of the first parameter in the matrix **B** is 0.1. The target transmission resources adjusted by the first adjustment value in the matrix **H** satisfy the following conditions that: they are in time-domain units with the indexes of 3, 6, 9 and 12, the starting frequency of the corresponding frequency-domain unit is a frequency-domain unit corresponding to a subcarrier with an index $a$=3, the frequency-domain length $l$ is 1, and the target transmission resources corresponding to the first adjustment value are separated by $d$=2 frequency-domain unit. Accordingly, the value of the first adjustment value associated with the above target transmission resources in the matrix **H** is 0.2, and the value of the first adjustment value associated with the other target transmission resources is 0. The change in the adjustment value 2 in the matrix **G** may be represented as: $\mathbf{G}_{k,i}=\mathbf{G}_{k,M-i+1}$ ($i\in[1,M]$, $k\in[1,N]$), $\mathbf{G}_{k,i}\geq\mathbf{G}_{k,i+1}$ ( $i\in\left[1,\right\rceil M/2\right]\right]$ , $k\in[1,N]$), $\mathbf{G}_{k,M/2}=\mathbf{G}_{k,M/2+1}=P$=0.6 ($k\in[1,N]$), and $P$ represents the value of the adjustment value 2 in edge columns of the matrix in the matrix **G.** In addition, the adjustment value 2 in the matrix **G** decreases according to the Rule F from the center column of the matrix to the edge columns of the matrix **G,** and after S=3 time-domain units are decreased, the remaining time-domain units are set to zero. The Rule F may include decreasing once at every interval of $U$=1 time-domain unit according to the proportion coefficient

Accordingly, continuing to refer to FIG. 57, the values of the first parameters associated with the target transmission units associated with the first adjustment value in the matrix **H,** in the constructed matrix **X,** are Y+U+P=0.9, and the values of the first parameters associated with the remaining target transmission units are determined by matrix **B** + matrix **G.**

**In Example 5,** the matrix **H** is combined with the non-orthogonal transmission method 5 (e.g., the Example 5-1) to obtain the matrix **X.**

In some implementations, the matrix **X** may be constructed by a formula: matrix **X** = matrix **B** + matrix **G** + matrix **H,** where for the matrix **B**, $\mathbf{B}_{k,i}=\mathbf{B}_{k,j}=Y$ ($i\neq j$, $i,j\in[1,M]$, $k\in[1,N]$).

For matrix **G**, the change in adjustment value 2 in the matrix **G** satisfies the following conditions: $\mathbf{G}_{k,i}=\mathbf{G}_{N-k+1,i}$($i\in[1,M]$, $k\in[1,N]$), $\mathbf{G}_{k,i}\geq\mathbf{G}_{k+1,i}$($i\in[1,M]$, $k\in[1,[N/2]]$), and $\mathbf{G}_{1,i}=\mathbf{G}_{N,i}=P$ ($iE\ [1,M]$), $P$ represents the value of the adjustment value in edge rows of the matrix in the matrix **G.** In addition, the adjustment value in the matrix **G** decreases according to the Rule F from the edge rows of the matrix toward the center row of the matrix **G,** and after $S$ ($S\leq\lfloor N/2\rfloor$) frequency-domain units are decreased, the remaining frequency-domain units are set to zero. The Rule F may include decreasing once at every interval of q frequency-domain units according to the proportion coefficient $r$ (r<1), and $\lfloor\ \rfloor$ represents rounding down.

For the matrix **H,** the first adjustment value associated with the target transmission resources corresponding to some of the time-domain units and/or some of the frequency-domain units is $U$, and the first adjustment value associated with the remaining target transmission resources is 0. The time-domain units may be selected according to the index set $V\subseteq\{i\mid i\in[1,M]\}$, and the frequency-domain units may be selected according to the starting index $a$ ($a\in[1,N]$), the length of the frequency domain and/or the time domain $l$ ($l\in[1,N]$), the interval $d$ ($d$

E [1,N]), and for the corresponding selected target transmission resources, their associated first parameters are set based on the first adjusted value.

Referring to FIG. 58, the matrix **X** may be constructed by the formula: matrix **X** = matrix **B** + matrix **G** + matrix **H,** where Y=0.1, S=3, P=0.2, U=0.6, r=0.5, V={3, 6, 9, 12}, a=3, l=1, d=6. That is, the initial value of the first parameter in the matrix **B** is 0.1. The target transmission resources adjusted by the first adjustment value in the matrix **H** satisfy the following conditions that: they are in time-domain units with the indexes of 3, 6, 9 and 12, the starting frequency of the corresponding frequency-domain unit is a frequency-domain unit corresponding to a subcarrier with an index $a$=3, the frequency-domain length $l$ is 1, and the target transmission resources corresponding to the first adjustment value are separated by $d$=2 frequency-domain unit. Accordingly, the value of the first adjustment value associated with the above target transmission resources in the matrix **H** is 0.2, and the value of the first adjustment value associated with the other target transmission resources is 0. The change in the adjustment value 2 in the matrix **G** may be represented as: $\mathbf{G}_{k,i}=\mathbf{G}_{k,M-i+1}$ ($i\in[1,M]$, $k\in[1,N]$), $\mathbf{G}_{k,i}\geq\mathbf{G}_{k,i+1}$ ( $i\in\left[1,\right\rceil M/2\right]\right]$ , $k\in[1,N]$), $\mathbf{G}_{k,M/2}=\mathbf{G}_{k,M/2+1}=P$=0.6 ($k\in[1,N]$), and $P$ represents the value of the adjustment value 2 in edge columns of the matrix in the matrix **G.** In addition, the adjustment value 2 in the matrix **G** decreases according to the Rule F from the center column of the matrix to the edge columns of the matrix **G,** and after S=3 time-domain units are decreased, the remaining time-domain units are set to zero. The Rule F may include decreasing once at every interval of $U$=1 time-domain unit according to the proportion coefficient

Accordingly, continuing to refer to FIG. 58, the values of the first parameters associated with the target transmission units associated with the first adjustment value in the matrix **H,** in the constructed matrix **X,** are Y+U+P=0.9, and the values of the first parameters associated with the remaining target transmission units are determined by matrix **B** + matrix **G.**

It should be noted that the target transmission resources associated with the matrix **H** and the target transmission resources associated with the matrix **G** may contain overlapping transmission resources. Of course, in the embodiments of the present disclosure, some or all of the target time-domain resources in the target transmission resources associated with the matrix **H** and the target transmission resources associated with the matrix **G** may be different.

The setting modes of the first parameters in the embodiments of the present disclosure are introduced above in conjunction with FIG. 25 to FIG. 58, and the first parameters may be presented in a pattern mode in the setting modes of the first parameters introduced above, e.g., as illustrated above by any one matrix **X, X** E $[0,1]^{N\times M}$. In some scenarios, the different setting modes of the first parameters above may be indicated by indication information. The setting mode of the first parameters is presented in the pattern mode, and accordingly, different parameter values carried in the indication information may indicate different patterns. For example, if the parameter value in the indication information is 00, it may be used to indicate that the first parameter is determined based on the matrix **X** in the non-orthogonal transmission mode 3. For another example, if the parameter value in the indication information is 01, it may be used to indicate that the first parameter is determined based on the matrix **X** in the non-orthogonal transmission mode 4-1. For another example, if the parameter value in the indication information is 10, it may be used to indicate that the first parameter is determined based on the matrix **X** in the non-orthogonal transmission mode 4-2. For another example, if the parameter value in the indication information is 11, it may be used to indicate that the first parameter is determined based on the matrix **X** in the non-orthogonal transmission mode 4-3. For another example, if the parameter value in the indication information is 0000, it may be used to indicate that the first parameter is determined based on the matrix **X** in the non-orthogonal transmission mode 4-4. For another example, if the parameter value in the indication information is 0000, it may be used to indicate that the first parameter is determined based on the matrix **X** in the non-orthogonal transmission mode 4-4. For another example, if the parameter value in the indication information is 0001, it may be used to indicate that the first parameter is determined based on the matrix **X** in the non-orthogonal transmission mode 5-1. For another example, if the parameter value in the indication information is 0010, it may be used to indicate that the first parameter is determined based on the matrix **X** in the non-orthogonal transmission mode 5-2. For another example, if the parameter value in the indication information is 0100, it may be used to indicate that the first parameter is determined based on the matrix **X** in the non-orthogonal transmission mode 5-3. For another example, if the parameter value in the indication information is 1000, it may be used to indicate that the first parameter is determined based on the matrix **X** in the non-orthogonal transmission mode 5-4. For another example, if the parameter value in the indication information is 1100, it may be used to indicate that the first parameter is determined based on the matrix **X** in the non-orthogonal transmission mode 6.

In the embodiments of the present disclosure, the setting mode of the first parameter, in addition to the above introduction, may be determined based on a first model, where the first model is used to adjust an initial parameter according to a transmission condition of the first signal. That is, the above method further includes: adjusting, by the first device, an initial parameter by using a target model, to obtain the first parameter.

Generally, in order to improve the reasonableness of the first parameters output by the target model, the first model may be trained by using training data associated with the transmission condition of the first signal. That is, the transmission condition of the first signal is associated with the training data of the first model, and the training data is used to train the first model.

In some implementations, the transmission condition is associated with one or more of: a number of antennas for transmitting the first signal; a channel condition of a channel for transmitting the first signal; or a characteristic of a radio frequency device for transmitting the first signal.

For ease of understanding, a solution for generating the first parameter in the embodiments of the present disclosure is introduced below in conjunction with FIG. 67. Referring to FIG. 67, in S6710, a data bit stream is generated; in step S6720, channel encoding is performed on the data bits; in step S6730, symbol mapping is performed on the channel-encoded bit stream according to a set of modulated symbols, to complete a modulation process; in step S6740, pilots are superimposed based on a set of pilot symbols to obtain the superimposed symbols; and in step S6750, the superimposed signal is transmitted to a receiver end through a channel. In step S6760, the superimposed signal transmitted through the channel is received by using the receiver, and channel decoding is performed on the superimposed signal; and in step S6770, the received data bits are obtained through the channel decoding.

It should be noted that the parameter (the first parameter) used for superimposing the pilot in the above link, and model parameters in the receiver may be learnable, and the other modules are not learnable.

In addition, end-to-end training optimization may be considered according to three types of loss functions, in the training process, where a loss function $L1$ is a cross-entropy between the generated data bits and the received data bits, where a loss function $L2$ is a cross-entropy between the channel-encoded bits and the bits that are recovered by the AI receiver, and where a loss function $L3$ is a mean-square error between the true channel matrix and the estimated channel matrix. The learnable parameters in the link are optimized according to a total loss function $L = \alpha L1 + \beta L2 + \gamma L3$, in the training process, where $\alpha$, $\beta$, and $\gamma$ represent weight parameters. The first parameter (e.g., the pilot pattern) and the corresponding receiver parameters obtained after the training, may be used for the subsequent actual deployment of the specified communication scenario.

In the embodiments of the present disclosure, there is no limitation on the range of values of the first parameter. In some implementations, the range of values of the first parameter may be between 0 and 1. For example, the value of the first parameter may be 0.05, the value of the first parameter may be 0.1, the value of the first parameter may be 0.2, and the value of the first parameter may be 0.4. For another example, the first parameter may be set such that the energy of the target signal transmitted on the target transmission resource is less than an energy threshold associated with the target transmission resource. In some other implementations, the first parameter may be set such that the power of the target signal transmitted on the target transmission resource is less than a power threshold associated with the target transmission resource.

Based on the above, it can be seen that the solution of the non-orthogonal transmission of the first signal and the second signal helps to improve the utilization ratio of the transmission resources. However, the solution of the non-orthogonal transmission poses a challenge for the second device to distinguish the first signal and the second signal, and the conventional receiver is unable to better distinguish the first signal and the second signal that are transmitted orthogonally.

Therefore, with respect to the above problem, the embodiments of the present disclosure further provide a model-based receiver, where the model (also referred to as a "fourth model") is used to process the received signal, to predict bits corresponding to the received signal. In the embodiments of the present disclosure, there is no specific limitation on the fourth model. In some implementations, the fourth model may be a neural network model, for example, any one of the neural network models introduced above, and therefore, the receiver of the instances of the present disclosure may also be referred to as an "AI receiver". Of course, the fourth model may also be other models, such as a machine learning model.

In some implementations, the fourth model may recover bits corresponding to symbols of the received signal by predicting symbols corresponding to the received signal. For example, referring to FIG. 59, the first signal and the second signal are transmitted on an RB1 in a non-orthogonal transmission mode, and the matrix 1 represents the energy of the signal (including the first signal and the second signal transmitted in a non-orthogonal manner) carried in each RE in the RB1. The matrix 1 is input into the fourth model, and accordingly, the fourth model may predict symbols (e.g., constellation modulation symbols) corresponding to each RE in the PB1 based on the matrix 1, and afterwards, recover bits carried on each RE in the RB1 based on a corresponding relationship between symbols and bits.

The solutions of the embodiments of the present disclosure may be applicable to scenarios in which the corresponding relationship between symbols and bits is known. In some implementations, the solutions of the embodiments of the present disclosure may be applicable in scenarios in which the symbols are not learnable as introduced above (e.g., a scenario in which the constellation modulation symbols are not learnable), and in the scenarios, the corresponding relationship between symbols and bits is known.

In some other implementations, the fourth model may directly predict bits corresponding to the received signal. For example, referring to FIG. 60, the first signal and the second signal are transmitted on an RB1 in a non-orthogonal transmission mode, and the matrix 1 represents the energy of the signal (including the first signal and the second signal transmitted in a non-orthogonal manner) carried in each RE in the RB1. The matrix 1 is input into the fourth model, and accordingly, the fourth model may predict the bits corresponding to each RE in the RB1 based on the matrix 1, i.e., recover the bits carried on each RE in the RB1.

The solutions of the embodiments of the present disclosure may be applicable to scenarios in which the corresponding relationship between symbols and bits is unknown. In some implementations, the solutions of the embodiments of the present disclosure may be applicable in scenarios in which the symbols are learnable as introduced above (e.g., a scenario in which the constellation modulation symbols are learnable). In the scenarios, the corresponding relationship between symbols and bits is changed with the learning of the second model and/or the third model, i.e., the corresponding relationship between symbols and bits is unknown. Of course, the embodiments of the present disclosure may also be applicable to the scenarios in which the symbols are not learnable as introduced above.

Taking the second signal being the data signal and the first signal being the pilot signal as an example, the above-described association relationship between symbols and bits may include an association relationship between symbols of the data signal and bits of the data signal, and the association relationship is associated with the modulation mode of the data signal. Accordingly, the above-described recovered bits are data bits of the recovered data signal.

It should be noted that the receiver provided in the embodiments of the present disclosure may be used to receive any one of the signals transmitted in a non-orthogonal manner introduced above. For ease of understanding, taking a signal input channel-based splicing mode as an example, solutions for receiving signals by the receiver in the embodiments of the present disclosure are introduced below. The reception solution for other signals transmitted in a non-orthogonal manner is similar, and will not be repeated below for the sake of brevity.

Referring to FIG. 61, the first signal and the second signal are nonlinearly superimposed based on the channels of the input signals, for non-orthogonal transmission on the RB1, and the matrix 1 represents the energy of the signals (including the first signal and the second signal transmitted in a non-orthogonal manner) carried in each RE in the RB1. The matrix 1 is input into the fourth model, and accordingly, the fourth model may predict symbols (e.g., constellation modulation symbols) corresponding to each RE in the RB1 based on the matrix 1, and afterwards, bits carried on each RE in the RB1 are recovered based on the corresponding relationship between symbols and bits.

Referring to FIG. 62, the first signal and the second signal are nonlinearly superimposed based on the channels of the input signals, for non-orthogonal transmission on the RB1, and the matrix 1 represents the energy of the signals (including the first signal and the second signal transmitted in a non-orthogonal manner) carried in each RE in the RB1. The matrix 1 is input into the fourth model, and accordingly, the fourth model may predict bits corresponding to each RE in the RB1 based on the matrix 1, i.e., recover bits carried on each RE in the RB1.

In some scenarios, the process of receiving the signal by the receiver may be divided into a plurality of sub-processes, for example, based on the signal receiving solution described in FIG. 1, the receiving process of the signal may include a channel estimation process and a data recovery process, etc., that is, channel estimation may be performed based on the received signal and for the received data, data recovery may be performed based on the result of the channel estimation. Based on the above introduction, it can be seen that the receiver may recover the received signal based on the fourth model, that is, the fourth model may be used to perform the channel estimation process and the data recovery process. Therefore, the receiver introduced above may also be referred to as an "integrated receiver".

Of course, in the embodiments of the present disclosure, the function of the model may be set based on the process of receiving signals by the receiver, and accordingly, the receiver may include a plurality of models. Thus, the receiver of the embodiments of the present disclosure may be referred to as a "modular receiver". For ease of understanding, the AI receiver of the embodiments of the present disclosure is introduced by taking the second signal being the data signal and the first signal being the pilot signal as an example. Accordingly, the process of receiving signals described above may include a channel estimation process and a data recovery process.

In some implementations, the receiver may include a fifth model and a sixth model. The fifth model is used to estimate the channel state based on the first signal. The sixth model is used to recover the second signal based on the estimated channel state. The embodiments of the present disclosure do not limit the type of the fifth model and/or the sixth model, for example, the fifth model and/or the sixth model may be an AI model. Of course, the fifth model and/or the sixth model may also be other models, for example, the fifth model and/or the sixth model may be a machine learning model.

In some implementations, the sixth model may recover bits corresponding to symbols of the received signal by predicting the symbols corresponding to the received signal. For example, referring to FIG. 63, the first signal and the second signal are transmitted on the RB1 in a non-orthogonal transmission mode, and the matrix 1 represents the energy of the signal (including the first signal and the second signal transmitted in a non-orthogonal manner) carried in each RE in the RB1. The matrix 1 is input into the fifth model, and accordingly, the fifth model may output a matrix 2 based on the matrix 1, and the matrix 2 is used to indicate the channel state corresponding to each RE in the RB1. Afterwards, the matrix 2 and the matrix 1 are used as inputs to the sixth model, and accordingly, the sixth model may predict symbols (e.g., constellation modulation symbols) corresponding to each RE in the RB1 based on the matrix 1 and the matrix 2, and afterwards, based on the corresponding relationship between symbols and bits, the bits carried on each RE in the RB1 are recovered.

The receiver of the embodiments of the present disclosure may be applicable to scenarios in which the corresponding relationship between symbols and bits is known. In some implementations, the solutions of the embodiments of the present disclosure may be applicable in scenarios introduced above in which symbols are not learnable (e.g., scenarios in which constellation modulation symbols are not learnable), and in the scenarios, the corresponding relationship between symbols and bits is known.

In some other implementations, the sixth model may directly predict the bits corresponding to the received signal. For example, referring to FIG. 64, the first signal and the second signal are transmitted on the RB1 in a non-orthogonal transmission mode, and the matrix 1 represents the energy of the signal (including the first signal and the second signal transmitted in a non-orthogonal manner) carried in each RE in the RB1. The matrix 1 is input into the fifth model, and accordingly, the fifth model may output a matrix 2 based on the matrix 1, and the matrix 2 is used to indicate the channel state corresponding to each RE in the RB1. Afterwards, the matrix 2 and the matrix 1 are used as inputs to the sixth model, and accordingly, the sixth model may predict the bits carried on each RE in the RB1 based on the matrix 1 and the matrix 2, to recover the second signal.

The receiver of the embodiments of the present disclosure may be applicable to scenarios in which the corresponding relationship between symbols and bits is unknown. In some implementations, the solutions of the embodiments of the present disclosure may be applicable in scenarios introduced above in which symbols are learnable (e.g., scenarios in which constellation modulation symbols are learnable). In the scenarios, the corresponding relationship between symbols and bits changes with the learning of the second model and/or the third model, that is, the corresponding relationship between symbols and bits is unknown. Of course, the embodiments of the present disclosure may also be applicable to the scenarios introduced above in which symbols are not learnable.

It should be noted that the receiver provided in the embodiments of the present disclosure may be used to receive any one of the signals transmitted in a non-orthogonal manner introduced above. For ease of understanding, taking a signal input channel-based splicing mode as an example, solutions of receiving signals by the receiver in the embodiments of the present disclosure are introduced below. The reception solution for other signals transmitted in a non-orthogonal manner is similar, and will not be repeated below for the sake of brevity.

Referring to FIG. 65, it is assumed that the first signal and the second signal are nonlinearly superimposed based on the channels of the input signals, for nonorthogonal transmission on the RB1, and the matrix 1 represents the energy of the signals (including the first signal and the second signal transmitted in a non-orthogonal manner) carried in each RE in the RB1. The matrix 1 is input into the fifth model, and accordingly, the fifth model may output a matrix 2 based on the matrix 1, and the matrix 2 is used to indicate the channel state corresponding to each RE in the RB1. Afterwards, the matrix 2 and the matrix 1 are used as inputs to the sixth model, and accordingly, the sixth model may predict symbols (e.g., constellation modulation symbols) corresponding to each RE in the RB1 based on the matrix 1 and the matrix 2, and afterwards, bits carried on each RE in the RB1 are recovered based on the corresponding relationship between symbols and bits.

Referring to FIG. 66, the first signal and the second signal are nonlinearly superimposed based on the channels of the input signals, for non-orthogonal transmission on the RB1, and the matrix 1 represents the energy of the signals (including the first signal and the second signal transmitted in a non-orthogonal manner) carried in each RE in the RB1. The matrix 1 is input into the fifth model, and accordingly, the fifth model may output a matrix 2 based on the matrix 1, and the matrix 2 is used to indicate the channel state corresponding to each RE in the RB1. Afterwards, the matrix 2 and the matrix 1 are used as inputs to the sixth model, and accordingly, the sixth model may predict bits carried on each RE in the RB1 based on the matrix 1 and the matrix 2, to recover the second signal.

The non-orthogonal transmission mode and the receiver of the embodiments of the present disclosure are introduced above, and the training process of the embodiments of the present disclosure is introduced below in conjunction with FIG. 65. In some implementations, the above method includes: processing training data to be transmitted by using the first model to obtain the processed training data; and transmitting the processed first training data through the target transmission resource, where the training data includes the first signal and the second signal transmitted in a non-orthogonal manner. Accordingly, the second device recovers the processed first training data to obtain recovered data of the first training data; and trains the first model by using the difference between the recovered data and the first training data.

As introduced above, in some implementations, the second device may transmit the signal transmitted in a non-orthogonal manner by using the model in the receiver, and thus, in the process of training the first model, the model in the receiver may be jointly trained together. The model in the receiver (hereinafter also referred to as a "target model") may include a fourth model, or the model in the receiver may include a fifth model and a sixth model. Of course, in the embodiments of the present disclosure, the target model and the first model may be associated with different training processes, and therefore, only the first model may be trained, or only the target model may be trained, in the training process introduced below.

That is, the above-described recovering the processed first training data by the second device to obtain the recovered data of the first training data, includes: recovering, by the second device, the processed first training data by using the target model, to obtain the recovered data of the first training data, and training the first model and/or the target model, by using the difference between the recovered data and the first training data.

In some implementations, taking the second signal being the data signal and the first signal being the pilot signal as an example, the training of the first model and/or the target model may be determined based on one or more of: a difference between data bits to be transmitted by the first device and data bits received by the second device; a difference between channel-encoded bits and bits recovered by the receiver (un-decoded bits); or a difference between a true channel state and a channel state estimated by the second device.

In the embodiments of the present disclosure, there is no limitation on the implementations of the above-described difference. In some implementations, the above-described difference may be computed by a loss function, e.g., the above-described difference may be computed by cross entropy in the loss function.

For ease of understanding, the training process of the embodiments of the present disclosure is introduced below in conjunction with FIG. 67. It should be understood that FIG. 67 is introduced by taking an example of the signal transmission process including a signal modulation process and a signal encoding process, and other signal processing processes may be introduced into the training process, e.g., signal pre-encoding, signal interleaving processes, etc., which is not limited in the embodiments of the present disclosure. In addition, the training process of the embodiments of the present disclosure is introduced below from the perspective of the transmitting end and the receiving end, where the transmitting end may be the first device introduced above, and of course, the transmitting end may also be other devices other than the first device. The receiving end may be the second device introduced above, and of course, the receiving end may also be other devices other than the second device.

FIG. 67 is a schematic diagram of a training process of the embodiments of the present disclosure. The method shown in FIG. 67 includes step S6710 to step S6780.

Referring to FIG. 67, in step S6710, the transmitting end generates data bits.

In some implementations, the transmitting end may randomly generate data bits, and of course, in the embodiments of the present disclosure, the transmitting end may also use pre-stored data bits.

In step S6720, the transmitting end performs channel encoding on the generated data bits to obtain encoded data bits.

In step S6730, the transmitting end modulates the encoded data bits to obtain modulated symbols.

In some implementations, the transmitting end may map the encoded data bits to symbols according the set of modulated symbols, to complete the modulation process.

In step S6740, the transmitting end superimposes a preset pilot symbol and the modulated symbol by using the first model, to obtain a superimposed signal (also referred to as a "superimposed symbol"), where the preset pilot symbol may belong to the set of pilot symbols.

In some implementations, the non-linear superimposition mode and/or the linear superimposition mode as introduced above may be used to superimpose the pilot signal and the modulated symbols. Specific implementations may refer to the introduction described above and will not be repeated here for the sake of brevity.

In step S6750, the superimposed signal is transmitted through a channel to the receiving end.

In step S6760, the receiving end inputs the received superimposed signal into a receiver, and accordingly, the receiver outputs the recovered data bits by using the target model.

In step S6770, the receiving end performs channel decoding on the recovered data bits to obtain the received data bits.

It should be noted that, as described above, in step S6730, the transmitting end may modulate the signal based on the set of modulated symbols. The set of modulated symbols may be learnable, e.g., may be learned based on the second model. Of course, in the embodiments of the present disclosure, the set of modulated symbols may be not learnable.

In addition, the pilot symbol used by the transmitting end in step S6740 may be selected from the set of pilot symbols. The set of pilot symbols may be learnable, for example, it may be learned based on the third model. Of course, in the embodiments of the present disclosure, the set of pilot symbols may be not learnable.

In step S6780, the first model and the target model are jointly trained based on a loss function.

In some implementations, the loss function includes one or more of a loss function L1, a loss function L2, or a loss function L3. The loss function L1 includes a cross-entropy between the generated data bits and the received data bits. The loss function L2 is a cross-entropy between the channel-encoded bits and the bits recovered by the receiver. The loss function L3 is a mean square error between the true channel matrix and the estimated channel matrix.

If the training is performed based on the above three loss functions, the total loss function in the training process may be represented as $L = \alpha \cdot L1 + \beta \cdot L2 + \gamma \cdot L3$,

where $\alpha$, $\beta$ and $\gamma$ represent weight parameters. Accordingly, if the total loss function satisfies a condition (e.g., the total loss function is less than a threshold), it may be considered that the training processes of the first model and the target model are completed. If the total loss function does not satisfy the condition (e.g., the total loss function is less than the threshold), it may be considered that the training processes of the first model and the target model are not completed.

The method embodiments of the present disclosure are described in detail above in conjunction with FIG. 1 to FIG. 67, and apparatus embodiments of the present disclosure are described in detail below in conjunction with FIG. 68 to FIG. 70. It should be understood that the description of the method embodiments and the description of the apparatus embodiments correspond to each other, so the parts not described in detail may refer to the above method embodiments.

FIG. 68 is a schematic diagram of a communication device of the embodiments of the present disclosure. The communication device 6800 shown in FIG. 68 is a first device, and the communication device 6800 includes a transmitting unit 6810.

The transmitting unit transmits a target signal to a second device on a target transmission resource, where the target signal includes a first signal and a second signal transmitted in a non-orthogonal manner.

In a possible implementation, the target transmission resource is associated with a first parameter, and the first parameter is used to adjust energy of the first signal transmitted on associated target transmission resource.

In a possible implementation, the target transmission resource belongs to a first resource set, the first resource set including a plurality of the target transmission resources, where a plurality of target transmission resources located in the same time-domain unit in the first resource set are associated with the same first parameter; and/or a plurality of target transmission resources located in different time-domain units in the first resource set are associated with first parameters that are partially or completely different.

In a possible implementation, time-domain positions of target transmission resources in the first resource set include a first time-domain position and a second time-domain position, where target transmission resources between the first time-domain position and the second time-domain position satisfy one or more rules of: a first parameter associated with each target transmission resource increasing, in order of time-domain units from early to late in time domain; a first parameter associated with each target transmission resource decreasing, in order of time-domain units from late to early in time domain; a first parameter associated with a target transmission resource increasing at every interval of q time-domain units, in order of time-domain units from early to late in time domain; or a first parameter associated with a target transmission resource decreasing at every interval of q time-domain units, in order of time-domain units from late to early in time domain; where q is a positive integer greater than or equal to 0.

In a possible implementation, the first time-domain position is earlier in the time domain than other time-domain positions other than the first time-domain position in the first resource set, or the first time-domain position is later in the time domain than the other time-domain positions.

In a possible implementation, the second time-domain position is located at a center time-domain position of the first resource set in the time domain

In a possible implementation, the time-domain positions of the target transmission resources in the first resource set further include a third time-domain position, and the first time-domain position and the third time-domain position are located on two sides of the second time-domain position in the time domain, where a trend of change in first parameters associated with target transmission resources between the second time-domain position and the third time-domain position is opposite to a trend of change in first parameters associated with the target transmission resources between the second time-domain position and the first time-domain position.

In a possible implementation, target transmission resources that are consecutive in some of time domain in the first resource set belong to a first subset, and target resources included in the first subset are located between other transmission resources in the first resource set in the time domain, the other transmission resources being transmission resources in the first resource set, other than target transmission resources included in the first subset, where first parameters associated with the target transmission resources included in the first subset are same.

In a possible implementation, the target transmission resource belongs to a second resource set, the second resource set includes a plurality of target transmission resources, and first parameters associated with multiple target transmission resources within a same frequency-domain unit in the second resource set are same; and/or first parameters associated with multiple target transmission resources within different frequency-domain units in the second resource set are partially or completely different.

In a possible implementation, frequency-domain positions of target transmission resources in the second resource set include a first frequency-domain position and a second frequency-domain position, where target transmission resources between the first frequency-domain position and the second frequency-domain position satisfy one or more rules of: a first parameter associated with each target transmission resource increasing, in order of frequency-domain units from high to low in frequency domain; a first parameter associated with each target transmission resource decreasing, in order of frequency-domain units from low to high in frequency domain; a first parameter associated with a target transmission resource increasing at every interval of q frequency-domain units, in order of frequency-domain units from high to low in frequency domain; or a first parameter associated with a target transmission resource decreasing at every interval of q frequency-domain units, in order of frequency-domain units from low to high in frequency domain; where q is a positive integer greater than or equal to 0.

In a possible implementation, the first frequency-domain position is lower in the frequency domain than other frequency-domain positions other than the first frequency-domain position in the second resource set, or the first frequency-domain position is higher in the frequency domain than the other frequency-domain positions.

In a possible implementation, the second frequency-domain position is located at a center frequency-domain position of the second resource set in the frequency domain.

In a possible implementation, the frequency-domain positions of the target transmission resources in the second resource set further include a third frequency-domain position, and the first frequency-domain position and the third frequency-domain position are located on two sides of the second frequency-domain position in the frequency domain, where a trend of change in first parameters associated with target transmission resources between the second frequency-domain position and the third frequency-domain position is opposite to a trend of change in first parameters associated with the target transmission resources between the second frequency-domain position and the first frequency-domain position.

In a possible implementation, target transmission resources that are consecutive in some of frequency domain in the first resource set belongs to a second subset, and target resources included in the second subset are located between other transmission resources in the first resource set in the frequency domain, the other transmission resources being transmission resources in the first resource set, other than target transmission resources included in the second subset, where first parameters associated with the target transmission resources included in the second subset are same.

In a possible implementation, the target transmission resource belongs to a third resource set, and first parameters associated with target transmission resources in the third resource set are same.

In a possible implementation, some of target transmission resources belongs to a third resource set, a first parameter associated with a target transmission resource in the third resource set is determined based on a first adjustment value, and target transmission resources in the third resource set are arranged according to a first rule, where the first rule includes one or more of: transmission resources within a target time-domain unit being arranged at intervals in frequency domain; transmission resources within a target frequency-domain unit being arranged at intervals in frequency domain; multiple groups of transmission resources within the target time-domain unit being arranged at intervals in the frequency domain, where a group of transmission resources among the multiple groups of transmission resources includes multiple transmission resources and the multiple transmission resources are consecutive in the frequency domain; or multiple groups of transmission resources within the target frequency-domain unit being arranged at intervals in time domain, where a group of transmission resources among the multiple groups of transmission resources includes multiple transmission resources and the multiple transmission resources are consecutive in the time domain.

In a possible implementation, the target transmission resource belongs to a target resource set, and target transmission resources in the target resource set, other than the target transmission resources included in the third resource set, are other transmission resources, the first parameter associated with the target transmission resource in the third resource set is greater than first parameters associated with the other transmission resources, or the first parameter associated with the target transmission resource in the third resource set is less than first parameters associated with the other transmission resources.

In a possible realization, the apparatus further includes: adjusting, by the first device, an initial parameter by using a target model, to obtain the first parameter, where the target model is used to adjust the initial parameter according to a transmission condition of the first signal.

In a possible implementation, the transmission condition of the first signal is associated with training data of the target model, where the training data is used to train the target model.

In a possible implementation, the transmission condition is associated with one or more of: a number of antennas for transmitting the first signal; a channel condition of a channel for transmitting the first signal; or a characteristic of a radio frequency device for transmitting the first signal.

In a possible implementation, the energy of the first information adjusted based on the first parameter on the target transmission resource is less than an energy threshold associated with the target transmission resource.

In a possible implementation, a size of a resource set to which the target transmission resource belongs is determined based on a size of transmission resources allocated by a network device.

FIG. 69 is a schematic diagram of a communication apparatus of the embodiments of the present disclosure, the communication apparatus shown in FIG. 69 is the second apparatus, and the communication apparatus 6900 includes a receiving unit 6910.

The receiving unit 6910 is configured to receive a target signal transmitted by a first device on a target transmission resource, where the target signal includes a first signal and a second signal transmitted in a non-orthogonal manner.

In a possible implementation, the target transmission resource is associated with a first parameter, and the first parameter is used to adjust energy of the first signal transmitted on associated target transmission resource.

In a possible implementation, the target transmission resource belongs to a first resource set, the first resource set includes a plurality of target transmission resources, and first parameters associated with multiple target transmission resources within a same time-domain unit in the first resource set are same; and/or first parameters associated with multiple target transmission resources within different time-domain units in the first resource set are partially or completely different.

In a possible implementation, time-domain positions of target transmission resources in the first resource set include a first time-domain position and a second time-domain position, where target transmission resources between the first time-domain position and the second time-domain position satisfy one or more rules of: a first parameter associated with each target transmission resource increasing, in order of time-domain units from early to late in time domain; a first parameter associated with each target transmission resource decreasing, in order of time-domain units from late to early in time domain; a first parameter associated with a target transmission resource increasing at every interval of q time-domain units, in order of time-domain units from early to late in time domain; or a first parameter associated with a target transmission resource decreasing at every interval of q time-domain units, in order of time-domain units from late to early in time domain; where q is a positive integer greater than or equal to 0.

In a possible implementation, the first time-domain position is earlier in the time domain than other time-domain positions other than the first time-domain position in the first resource set, or the first time-domain position is later in the time domain than the other time-domain positions.

In a possible implementation, the second time-domain position is located at a center time-domain position of the first resource set in the time domain.

In a possible implementation, the time-domain positions of the target transmission resources in the first resource set further include a third time-domain position, and the first time-domain position and the third time-domain position are located on two sides of the second time-domain position in the time domain, where a trend of change in first parameters associated with target transmission resources between the second time-domain position and the third time-domain position is opposite to a trend of change in first parameters associated with the target transmission resources between the second time-domain position and the first time-domain position.

In a possible implementation, target transmission resources that are consecutive in some of time domain in the first resource set belong to a first subset, and target resources included in the first subset are located between other transmission resources in the first resource set in the time domain, the other transmission resources being transmission resources in the first resource set, other than target transmission resources included in the first subset, where first parameters associated with the target transmission resources included in the first subset are same.

In a possible implementation, the target transmission resource belongs to a second resource set, the second resource set includes a plurality of target transmission resources, and first parameters associated with multiple target transmission resources within a same frequency-domain unit in the second resource set are same; and/or first parameters associated with multiple target transmission resources within different frequency-domain units in the second resource set are partially or completely different.

In a possible implementation, frequency-domain positions of target transmission resources in the second resource set include a first frequency-domain position and a second frequency-domain position, where target transmission resources between the first frequency-domain position and the second frequency-domain position satisfy one or more rules of: a first parameter associated with each target transmission resource increasing, in order of frequency-domain units from high to low in frequency domain; a first parameter associated with each target transmission resource decreasing, in order of frequency-domain units from low to high in frequency domain; a first parameter associated with a target transmission resource increasing at every interval of q frequency-domain units, in order of frequency-domain units from high to low in frequency domain; or a first parameter associated with a target transmission resource decreasing at every interval of q frequency-domain units, in order of frequency-domain units from low to high in frequency domain; where q is a positive integer greater than or equal to 0.

In a possible implementation, the first frequency-domain position is lower in the frequency domain than other frequency-domain positions other than the first frequency-domain position in the second resource set, or the first frequency-domain position is higher in the frequency domain than the other frequency-domain positions.

In a possible implementation, the second frequency-domain position is located at a center frequency-domain position of the second resource set in the frequency domain.

In a possible implementation, the frequency-domain positions of the target transmission resources in the second resource set further include a third frequency-domain position, and the first frequency-domain position and the third frequency-domain position are located on two sides of the second frequency-domain position in the frequency domain, where a trend of change in first parameters associated with target transmission resources between the second frequency-domain position and the third frequency-domain position is opposite to a trend of change in first parameters associated with the target transmission resources between the second frequency-domain position and the first frequency-domain position.

In a possible implementation, target transmission resources that are consecutive in some of frequency domain in the first resource set belongs to a second subset, and target resources included in the second subset are located between other transmission resources in the first resource set in the frequency domain, the other transmission resources being transmission resources in the first resource set, other than target transmission resources included in the second subset, wherein first parameters associated with the target transmission resources included in the second subset are same.

In a possible implementation, the target transmission resource belongs to a third resource set, and first parameters associated with target transmission resources in the third resource set are same.

In a possible implementation, some of target transmission resources included in the first resource set belong to a third subset, and target transmission resources in the third subset are arranged according to a first rule, where the first rule includes one or more of: transmission resources within a target time-domain unit being arranged at intervals in frequency domain; transmission resources within a target frequency-domain unit being arranged at intervals in frequency domain; multiple groups of transmission resources within the target time-domain unit being arranged at intervals in the frequency domain, where a group of transmission resources among the multiple groups of transmission resources includes multiple transmission resources and the multiple transmission resources are consecutive in the frequency domain; or multiple groups of transmission resources within the target frequency-domain unit being arranged at intervals in time domain, where a group of transmission resources among the multiple groups of transmission resources includes multiple transmission resources and the multiple transmission resources are consecutive in the time domain.

In a possible implementation, transmission resources in the first resource set, other than the target transmission resources included in the third subset, are other transmission resources, a first parameter associated with a target transmission resource in the third subset is greater than first parameters associated with the other transmission resources, or a first parameter associated with a target transmission resource in the third subset is less than first parameters associated with the other transmission resources.

In a possible implementation, the first parameter is obtained based on adjusting an initial parameter by using a target model, where the target model is used to adjust the initial parameter according to a transmission condition of the first signal.

In a possible realization, the transmission condition of the first signal is associated with training data of the target model, where the training data is used to train the target model.

In a possible implementation, the transmission condition is associated with one or more of: a number of antennas for transmitting the first signal; a channel condition of a channel for transmitting the first signal; or a characteristic of a radio frequency device for transmitting the first signal.

In a possible implementation, the energy of the first information adjusted based on the first parameter on the target transmission resource is less than an energy threshold associated with the target transmission resource.

In a possible implementation, a size of a resource set to which the target transmission resource belongs is determined based on a size of transmission resources allocated by a network device.

In optional embodiments, the transmitting unit 6810 may be a transceiver 7030. The communication device 6800 may further include a processor 7010 and a memory 7020, as shown in FIG. 70 specifically.

In optional embodiments, the receiving unit 6910 may be a transceiver 7030. The communication device 6900 may further include a processor 7010 and a memory 7020, as shown in FIG. 70 specifically.

FIG. 70 is a schematic structural diagram of a communication apparatus of the embodiments of the present disclosure. Dashed lines in FIG. 70 indicate that the units or modules are optional. The apparatus 7000 may be used to implement the method described in the method embodiments described above. The apparatus 7000 may be a chip, a terminal device or a network device.

The apparatus 7000 may include one or more processors 7010. The processors 7010 may support the apparatus 7000 to implement the method described in the above method embodiments. The processor 7010 may be a general processor or a dedicated processor. For example, the processor may be a central processing unit (CPU). Or, the processor may also be other general processors, digital signal processor (DSP), application specific integrated circuit (ASIC), field programmable gate array (FPGA), or other programmable logic devices, discrete gate or transistor logic devices, discrete hardware components, etc. The general processor may be a microprocessor, or the processor may be any conventional processor or the like.

The apparatus 7000 may also include one or more memories 7020. The memory 7020 stores a program, which may be performed by the processor 7010, to enable the processor 7010 to perform the method described in the above method embodiments. The memory 7020 may be independent of the processor 7010 or may be integrated into the processor 7010.

The apparatus 7000 may further include a transceiver 7030. The processor 7010 may communicate with other devices or chips via the transceiver 7030. For example, the processor 7010 may transmit and receive data with other devices or chips via the transceiver 7030.

The embodiments of the present disclosure also provide a computer-readable storage medium configured to store a program. The computer-readable storage medium may be applied to the terminal or the network device provided by the embodiments of the present disclosure, and the program causes a computer to perform the method performed by the terminal or the network device in various embodiments of the present disclosure.

The embodiments of the present disclosure also provide a computer program product. The computer program product includes a program. The computer program product may be applied to the terminal or the network device provided by the embodiments of the present disclosure, and the program causes a computer to perform the method performed by the terminal or the network device in various embodiments of the present disclosure.

The embodiments of the present disclosure also provide a computer program. The computer program may be applied to the terminal or the network device provided by the embodiments of the present disclosure, and the computer program causes a computer to perform the method performed by the terminal or the network device in various embodiments of the present disclosure.

It shall be understood that the terms "system" and "network" in the present disclosure may be used interchangeably. Furthermore, the terms used in the present disclosure are only used to explain the specific embodiments of the present disclosure, but are not intended to limit the present disclosure. The terms "first", "second", "third", "fourth" and the like in the specification, claims and drawings of the present disclosure are used to distinguish different objects, rather than to describe a specific order. In addition, the terms "include/comprise" and "has/have" and any variations thereof, are intended to cover the non-exclusive inclusion.

In the embodiments of the present disclosure, the "indicate/indicated/indicating/indication" mentioned may be a direct indication, an indirect indication, or may also indicate that there is an associated relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an associated relationship between A and B.

In the embodiments of the present disclosure, "B corresponding to A" means that B is associated with A, and B may be determined according to A. However, it shall also be understood that determining B according to A does not mean determining B based on A only, and B may also be determined based on A and/or other information.

In the embodiments of the present disclosure, the term " correspond/corresponding/correspondence " may indicate a direct correspondence or an indirect correspondence between two items, or may mean that there is an associated relationship between the two items, or may mean a relationship of indicating and being indicated, or a relationship of configuring and being configured, or the like.

In the embodiments of the present disclosure, the "predefined" or "pre-configured" and variations thereof may be implemented by pre-saving corresponding codes, tables or other manners that may be used to indicate related information, in the device (for example, including the terminal device and the network device), and the present disclosure does not limit its specific implementation. For example, the predefined may refer to what is defined in a protocol.

In the embodiments of the present disclosure, the term "protocol" may refer to a standard protocol in the field of communications, and for example, the "protocol" may include an LTE protocol, an NR protocol, and a related protocol used in a future communication system, which is not limited in the present disclosure.

In the embodiments of the present disclosure, the term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

In various embodiments of the present disclosure, values of serial numbers of the aforementioned processes do not mean an execution order, and the execution order of each process shall be determined by its function and internal logic, and shall not impose any limitation on the implementation process of the embodiments of the present disclosure.

It shall be understood that the disclosed systems, apparatuses, and methods in several embodiments provided in the present disclosure may be implemented in other modes. For example, the apparatus embodiments described above are merely exemplary, and for example, a division of units is merely a division based on logical functions, while other divisions exist in actual implementations. For example, a plurality of units or components may be combined or integrated into another system, or some features may be omitted or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

All or part of the above embodiments may be implemented by software, hardware, firmware or any combination thereof. When implemented by using software, all or part of the embodiments may be implemented in a form of a computer program product. The computer program product includes one or more computer instructions. When the computer program instructions are loaded and executed on a computer, all or part of the procedures or functions described according to the embodiments of the present disclosure are generated. The computer may be a general-purpose computer, a dedicated-purpose computer, a computer network, or other programmable apparatus. The computer instructions may be stored in a computer-readable storage medium, or transmitted from a computer-readable storage medium to another computer-readable storage medium. For example, the computer instructions may be transmitted from a website, a computer, a server, or a data center to another website, another computer, another server, or another data center via a wired mode (e.g., a coaxial cable, optical fiber, a digital subscriber line (DSL)) or a wireless mode (e.g., an infrared, radio, microwave, etc.). The computer-readable storage medium may be any available medium that can be read by a computer, or a data storage device including a server or a data center integrated with one or more available media, etc. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of the claims.

**Claims**

1. A wireless communication method, comprising:
   transmitting, by a first device, a target signal to a second device on a target transmission resource, wherein the target signal comprises a first signal and a second signal transmitted in a non-orthogonal manner.

2. The method according to claim 1, wherein the target transmission resource is associated with a first parameter, and the first parameter is used to adjust energy of the first signal transmitted on associated target transmission resource.

3. The method according to claim 2, wherein the target transmission resource belongs to a first resource set, the first resource set comprises a plurality of target transmission resources, and first parameters associated with multiple target transmission resources within a same time-domain unit in the first resource set are same; and/or
first parameters associated with multiple target transmission resources within different time-domain units in the first resource set are partially or completely different.

4. The method according to claim 2 or 3, wherein time-domain positions of target transmission resources in a first resource set comprise a first time-domain position and a second time-domain position, wherein target transmission resources between the first time-domain position and the second time-domain position satisfy one or more rules of:

a first parameter associated with each target transmission resource increasing, in order of time-domain units from early to late in time domain;
a first parameter associated with each target transmission resource decreasing, in order of time-domain units from late to early in time domain;
a first parameter associated with a target transmission resource increasing at every interval of q time-domain units, in order of time-domain units from early to late in time domain; or
a first parameter associated with a target transmission resource decreasing at every interval of q time-domain units, in order of time-domain units from late to early in time domain;
wherein q is a positive integer greater than or equal to 0.

5. The method according to claim 4, wherein the first time-domain position is earlier in the time domain than other time-domain positions other than the first time-domain position in the first resource set, or the first time-domain position is later in the time domain than the other time-domain positions.

6. The method according to claim 4 or 5, wherein the second time-domain position is located at a center time-domain position of the first resource set in the time domain.

7. The method according to any one of claims 4 to 6, wherein the time-domain positions of the target transmission resources in the first resource set further comprise a third time-domain position, and the first time-domain position and the third time-domain position are located on two sides of the second time-domain position in the time domain, wherein a trend of change in first parameters associated with target transmission resources between the second time-domain position and the third time-domain position is opposite to a trend of change in first parameters associated with the target transmission resources between the second time-domain position and the first time-domain position.

8. The method according to any one of claims 2 to 7, wherein target transmission resources that are consecutive in some of time domain in the first resource set belong to a first subset, and target resources comprised in the first subset are located between other transmission resources in the first resource set in the time domain, the other transmission resources being transmission resources in the first resource set, other than target transmission resources comprised in the first subset, wherein first parameters associated with the target transmission resources comprised in the first subset are same.

9. The method according to claim 2, wherein the target transmission resource belongs to a second resource set, the second resource set comprises a plurality of target transmission resources, and first parameters associated with multiple target transmission resources within a same frequency-domain unit in the second resource set are same; and/or
first parameters associated with multiple target transmission resources within different frequency-domain units in the second resource set are partially or completely different.

10. The method according to claim 2 or 9, wherein frequency-domain positions of target transmission resources in a second resource set comprise a first frequency-domain position and a second frequency-domain position, wherein target transmission resources between the first frequency-domain position and the second frequency-domain position satisfy one or more rules of:

a first parameter associated with each target transmission resource increasing, in order of frequency-domain units from high to low in frequency domain;
a first parameter associated with each target transmission resource decreasing, in order of frequency-domain units from low to high in frequency domain;

a first parameter associated with a target transmission resource increasing at every interval of q frequency-domain units, in order of frequency-domain units from high to low in frequency domain; or

a first parameter associated with a target transmission resource decreasing at every interval of q frequency-domain units, in order of frequency-domain units from low to high in frequency domain;

wherein q is a positive integer greater than or equal to 0.

11. The method according to claim 10, wherein the first frequency-domain position is lower in the frequency domain than other frequency-domain positions other than the first frequency-domain position in the second resource set, or the first frequency-domain position is higher in the frequency domain than the other frequency-domain positions.

12. The method according to claim 10 or 11, wherein the second frequency-domain position is located at a center frequency-domain position of the second resource set in the frequency domain.

13. The method according to any one of claims 10 to 12, wherein the frequency-domain positions of the target transmission resources in the second resource set further comprise a third frequency-domain position, and the first frequency-domain position and the third frequency-domain position are located on two sides of the second frequency-domain position in the frequency domain,

wherein a trend of change in first parameters associated with target transmission resources between the second frequency-domain position and the third frequency-domain position is opposite to a trend of change in first parameters associated with the target transmission resources between the second frequency-domain position and the first frequency-domain position.

14. The method according to any one of claims 9 to 13, wherein target transmission resources that are consecutive in some of frequency domain in the first resource set belongs to a second subset, and target resources comprised in the second subset are located between other transmission resources in the first resource set in the frequency domain, the other transmission resources being transmission resources in the first resource set, other than target transmission resources comprised in the second subset, wherein first parameters associated with the target transmission resources comprised in the second subset are same.

15. The method according to claim 2, wherein the target transmission resource belongs to a third resource set, and first parameters associated with target transmission resources in the third resource set are same.

16. The method according to any one of claims 2 to 15, wherein some of target transmission resources belongs to a third resource set, a first parameter associated with a target transmission resource in the third resource set is determined based on a first adjustment value, and target transmission resources in the third resource set are arranged according to a first rule, wherein the first rule comprises one or more of:

transmission resources within a target time-domain unit being arranged at intervals in frequency domain;

transmission resources within a target frequency-domain unit being arranged at intervals in frequency domain;

multiple groups of transmission resources within the target time-domain unit being arranged at intervals in the frequency domain, wherein a group of transmission resources among the multiple groups of transmission resources comprises multiple transmission resources and the multiple transmission resources are consecutive in the frequency domain; or

multiple groups of transmission resources within the target frequency-domain unit being arranged at intervals in time domain, wherein a group of transmission resources among the multiple groups of transmission resources comprises multiple transmission resources and the multiple transmission resources are consecutive in the time domain.

17. The method according to claim 16, wherein the target transmission resource belongs to a target resource set, and target transmission resources in the target resource set, other than the target transmission resources comprised in the third resource set, are other transmission resources,

the first parameter associated with the target transmission resource in the third resource set is greater than first parameters associated with the other transmission resources, or the first parameter associated with the target transmission resource in the third resource set is less than first parameters associated with the other transmission resources.

18. The method according to claim 2, wherein the method further comprises:

adjusting, by the first device, an initial parameter by using a target model, to obtain the first parameter, wherein the target model is used to adjust the initial parameter according to a transmission condition of the first signal.

19. The method according to claim 18, wherein the transmission condition of the first signal is associated with training data of the target model, wherein the training data is used to train the target model.

20. The method according to claim 18 or 19, wherein the transmission condition is associated with one or more of:

a number of antennas for transmitting the first signal;
a channel condition of a channel for transmitting the first signal; or
a characteristic of a radio frequency device for transmitting the first signal.

21. The method according to any one of claims 2 to 20, wherein the energy of the first information adjusted based on the first parameter on the target transmission resource is less than an energy threshold associated with the target transmission resource.

22. The method according to any one of claims 1 to 21, wherein a size of a resource set to which the target transmission resource belongs is determined based on a size of transmission resources allocated by a network device.

23. A wireless communication method, comprising:
receiving, by a second device, a target signal transmitted by a first device on a target transmission resource, wherein the target signal comprises a first signal and a second signal transmitted in a non-orthogonal manner.

24. The method according to claim 23, wherein the target transmission resource is associated with a first parameter, and the first parameter is used to adjust energy of the first signal transmitted on associated target transmission resource.

25. The method according to claim 24, wherein the target transmission resource belongs to a first resource set, the first resource set comprises a plurality of target transmission resources, and first parameters associated with multiple target transmission resources within a same time-domain unit in the first resource set are same; and/or
first parameters associated with multiple target transmission resources within different time-domain units in the first resource set are partially or completely different.

26. The method according to claim 24 or 25, wherein time-domain positions of target transmission resources in a first resource set comprise a first time-domain position and a second time-domain position, wherein target transmission resources between the first time-domain position and the second time-domain position satisfy one or more rules of:

a first parameter associated with each target transmission resource increasing, in order of time-domain units from early to late in time domain;
a first parameter associated with each target transmission resource decreasing, in order of time-domain units from late to early in time domain;
a first parameter associated with a target transmission resource increasing at every interval of q time-domain units, in order of time-domain units from early to late in time domain; or
a first parameter associated with a target transmission resource decreasing at every interval of q time-domain units, in order of time-domain units from late to early in time domain;
wherein q is a positive integer greater than or equal to 0.

27. The method according to claim 26, wherein the first time-domain position is earlier in the time domain than other time-domain positions other than the first time-domain position in the first resource set, or the first time-domain position is later in the time domain than the other time-domain positions.

28. The method according to claim 26 or 27, wherein the second time-domain position is located at a center time-domain position of the first resource set in the time domain.

29. The method according to any one of claims 26 to 28, wherein the time-domain positions of the target transmission resources in the first resource set further comprise a third time-domain position, and the first time-domain position and the third time-domain position are located on two sides of the second time-domain position in the time domain, wherein a trend of change in first parameters associated with target transmission resources between the second time-domain position and the third time-domain position is opposite to a trend of change in first parameters associated with the target transmission resources between the second time-domain position and the first time-domain position.

30. The method according to any one of claims 24 to 29, wherein target transmission resources that are consecutive in some of time domain in the first resource set belong to a first subset, and target resources comprised in the first subset are located between other transmission resources in the first resource set in the time domain, the other transmission resources being transmission resources in the first resource set, other than target transmission resources comprised in the first subset, wherein first parameters associated with the target transmission resources comprised in the first subset are same.

31. The method according to claim 24, wherein the target transmission resource belongs to a second resource set, the second resource set comprises a plurality of target transmission resources, and first parameters associated with multiple target transmission resources within a same frequency-domain unit in the second resource set are same; and/or

first parameters associated with multiple target transmission resources within different frequency-domain units in the second resource set are partially or completely different.

32. The method according to claim 24 or 31, wherein frequency-domain positions of target transmission resources in a second resource set comprise a first frequency-domain position and a second frequency-domain position, wherein target transmission resources between the first frequency-domain position and the second frequency-domain position satisfy one or more rules of:

a first parameter associated with each target transmission resource increasing, in order of frequency-domain units from high to low in frequency domain;
a first parameter associated with each target transmission resource decreasing, in order of frequency-domain units from low to high in frequency domain;
a first parameter associated with a target transmission resource increasing at every interval of q frequency-domain units, in order of frequency-domain units from high to low in frequency domain; or
a first parameter associated with a target transmission resource decreasing at every interval of q frequency-domain units, in order of frequency-domain units from low to high in frequency domain;
wherein q is a positive integer greater than or equal to 0.

33. The method according to claim 32, wherein the first frequency-domain position is lower in the frequency domain than other frequency-domain positions other than the first frequency-domain position in the second resource set, or the first frequency-domain position is higher in the frequency domain than the other frequency-domain positions.

34. The method according to claim 32 or 33, wherein the second frequency-domain position is located at a center frequency-domain position of the second resource set in the frequency domain.

35. The method according to any one of claims 32 to 34, wherein the frequency-domain positions of the target transmission resources in the second resource set further comprise a third frequency-domain position, and the first frequency-domain position and the third frequency-domain position are located on two sides of the second frequency-domain position in the frequency domain,

wherein a trend of change in first parameters associated with target transmission resources between the second frequency-domain position and the third frequency-domain position is opposite to a trend of change in first parameters associated with the target transmission resources between the second frequency-domain position and the first frequency-domain position.

36. The method according to any one of claims 31 to 35, wherein target transmission resources that are consecutive in some of frequency domain in the first resource set belongs to a second subset, and target resources comprised in the second subset are located between other transmission resources in the first resource set in the frequency domain, the other transmission resources being transmission resources in the first resource set, other than target transmission resources comprised in the second subset, wherein first parameters associated with the target transmission resources comprised in the second subset are same.

37. The method according to claim 24, wherein the target transmission resource belongs to a third resource set, and first parameters associated with target transmission resources in the third resource set are same.

38. The method according to any one of claims 24 to 37, wherein some of target transmission resources comprised in the first resource set belong to a third subset, and target transmission resources in the third subset are arranged according to a first rule, wherein the first rule comprises one or more of:

transmission resources within a target time-domain unit being arranged at intervals in frequency domain;
transmission resources within a target frequency-domain unit being arranged at intervals in frequency domain;
multiple groups of transmission resources within the target time-domain unit being arranged at intervals in the frequency domain, wherein a group of transmission resources among the multiple groups of transmission resources comprises multiple transmission resources and the multiple transmission resources are consecutive in the frequency domain; or
multiple groups of transmission resources within the target frequency-domain unit being arranged at intervals in time domain, wherein a group of transmission resources among the multiple groups of transmission resources comprises multiple transmission resources and the multiple transmission resources are consecutive in the time domain.

39. The method according to claim 38, wherein transmission resources in the first resource set, other than the target transmission resources comprised in the third subset, are other transmission resources, a first parameter associated with a target transmission resource in the third subset is greater than first parameters associated with the other transmission resources, or a first parameter associated with a target transmission resource in the third subset is less than first parameters associated with the other transmission resources.

40. The method according to claim 24, wherein the first parameter is obtained based on adjusting an initial parameter by using a target model, wherein the target model is used to adjust the initial parameter according to a transmission condition of the first signal.

41. The method according to claim 40, wherein the transmission condition of the first signal is associated with training data of the target model, wherein the training data is used to train the target model.

42. The method according to claim 40 or 41, wherein the transmission condition is associated with one or more of:

    a number of antennas for transmitting the first signal;
    a channel condition of a channel for transmitting the first signal; or
    a characteristic of a radio frequency device for transmitting the first signal.

43. The method according to any one of claims 24 to 42, wherein the energy of the first information adjusted based on the first parameter on the target transmission resource is less than an energy threshold associated with the target transmission resource.

44. The method according to any one of claims 23 to 43, wherein a size of a resource set to which the target transmission resource belongs is determined based on a size of transmission resources allocated by a network device.

45. A communication apparatus, wherein the communication apparatus is a first device, and the communication apparatus comprises:
a transmitting unit, configured to transmit a target signal to a second device on a target transmission resource, wherein the target signal comprises a first signal and a second signal transmitted in a non-orthogonal manner.

46. The apparatus according to claim 45, wherein the target transmission resource is associated with a first parameter, and the first parameter is used to adjust energy of the first signal transmitted on associated target transmission resource.

47. The apparatus according to claim 46, wherein the target transmission resource belongs to a first resource set, the first resource set comprises a plurality of target transmission resources, and first parameters associated with multiple target transmission resources within a same time-domain unit in the first resource set are same; and/or
first parameters associated with multiple target transmission resources within different time-domain units in the first resource set are partially or completely different.

48. The apparatus according to claim 46 or 47, wherein time-domain positions of target transmission resources in the first resource set comprise a first time-domain position and a second time-domain position, wherein target transmission resources between the first time-domain position and the second time-domain position satisfy one or more rules of:

    a first parameter associated with each target transmission resource increasing, in order of time-domain units from early to late in time domain;
    a first parameter associated with each target transmission resource decreasing, in order of time-domain units from late to early in time domain;
    a first parameter associated with a target transmission resource increasing at every interval of q time-domain units, in order of time-domain units from early to late in time domain; or
    a first parameter associated with a target transmission resource decreasing at every interval of q time-domain units, in order of time-domain units from late to early in time domain;
    wherein q is a positive integer greater than or equal to 0.

49. The apparatus according to claim 48, wherein the first time-domain position is earlier in the time domain than other time-domain positions other than the first time-domain position in the first resource set, or the first time-domain position is later in the time domain than the other time-domain positions.

50. The apparatus according to claim 48 or 49, wherein the second time-domain position is located at a center time-domain position of the first resource set in the time domain.

51. The apparatus according to any one of claims 48 to 50, wherein the time-domain positions of the target transmission resources in the first resource set further comprise a third time-domain position, and the first time-domain position and the third time-domain position are located on two sides of the second time-domain position in the time domain, wherein a trend of change in first parameters associated with target transmission resources between the second time-domain position and the third time-domain position is opposite to a trend of change in first parameters associated with the target transmission resources between the second time-domain position and the first time-domain position.

52. The apparatus according to any one of claims 46 to 51, wherein target transmission resources that are consecutive in some of time domain in the first resource set belong to a first subset, and target resources comprised in the first subset are located between other transmission resources in the first resource set in the time domain, the other transmission resources being transmission resources in the first resource set, other than target transmission resources comprised in the first subset, wherein first parameters associated with the target transmission resources comprised in the first subset are same.

53. The apparatus according to claim 46, wherein the target transmission resource belongs to a second resource set, the second resource set comprises a plurality of target transmission resources, and first parameters associated with multiple target transmission resources within a same frequency-domain unit in the second resource set are same; and/or first parameters associated with multiple target transmission resources within different frequency-domain units in the second resource set are partially or completely different.

54. The apparatus according to claim 46 or 53, wherein frequency-domain positions of target transmission resources in the second resource set comprise a first frequency-domain position and a second frequency-domain position, wherein target transmission resources between the first frequency-domain position and the second frequency-domain position satisfy one or more rules of:

a first parameter associated with each target transmission resource increasing, in order of frequency-domain units from high to low in frequency domain;
a first parameter associated with each target transmission resource decreasing, in order of frequency-domain units from low to high in frequency domain;
a first parameter associated with a target transmission resource increasing at every interval of q frequency-domain units, in order of frequency-domain units from high to low in frequency domain; or
a first parameter associated with a target transmission resource decreasing at every interval of q frequency-domain units, in order of frequency-domain units from low to high in frequency domain;
wherein q is a positive integer greater than or equal to 0.

55. The apparatus according to claim 54, wherein the first frequency-domain position is lower in the frequency domain than other frequency-domain positions other than the first frequency-domain position in the second resource set, or the first frequency-domain position is higher in the frequency domain than the other frequency-domain positions.

56. The apparatus according to claim 54 or 55, wherein the second frequency-domain position is located at a center frequency-domain position of the second resource set in the frequency domain.

57. The apparatus according to any one of claims 54 to 56, wherein the frequency-domain positions of the target transmission resources in the second resource set further comprise a third frequency-domain position, and the first frequency-domain position and the third frequency-domain position are located on two sides of the second frequency-domain position in the frequency domain,
wherein a trend of change in first parameters associated with target transmission resources between the second frequency-domain position and the third frequency-domain position is opposite to a trend of change in first parameters associated with the target transmission resources between the second frequency-domain position and the first frequency-domain position.

58. The apparatus according to any one of claims 53 to 57, wherein target transmission resources that are consecutive in some of frequency domain in the first resource set belongs to a second subset, and target resources comprised in the second subset are located between other transmission resources in the first resource set in the frequency domain, the other transmission resources being transmission resources in the first resource set, other than target transmission resources comprised in the second subset, wherein first parameters associated with the target transmission resources comprised in the second subset are same.

59. The apparatus according to claim 46, wherein the target transmission resource belongs to a third resource set, and first parameters associated with target transmission resources in the third resource set are same.

60. The apparatus according to any one of claims 46 to 59, wherein some of target transmission resources belongs to a third resource set, a first parameter associated with a target transmission resource in the third resource set is determined based on a first adjustment value, and target transmission resources in the third resource set are arranged according to a first rule, wherein the first rule comprises one or more of:

transmission resources within a target time-domain unit being arranged at intervals in frequency domain;
transmission resources within a target frequency-domain unit being arranged at intervals in frequency domain;
multiple groups of transmission resources within the target time-domain unit being arranged at intervals in the frequency domain, wherein a group of transmission resources among the multiple groups of transmission resources comprises multiple transmission resources and the multiple transmission resources are consecutive in the frequency domain; or
multiple groups of transmission resources within the target frequency-domain unit being arranged at intervals in time domain, wherein a group of transmission resources among the multiple groups of transmission resources comprises multiple transmission resources and the multiple transmission resources are consecutive in the time domain.

61. The apparatus according to claim 60, wherein the target transmission resource belongs to a target resource set, and target transmission resources in the target resource set, other than the target transmission resources comprised in the third resource set, are other transmission resources,
the first parameter associated with the target transmission resource in the third resource set is greater than first parameters associated with the other transmission resources, or the first parameter associated with the target transmission resource in the third resource set is less than first parameters associated with the other transmission resources.

62. The apparatus according to claim 46, wherein the method further comprises:
adjusting, by the first device, an initial parameter by using a target model, to obtain the first parameter, wherein the target model is used to adjust the initial parameter according to a transmission condition of the first signal.

63. The apparatus according to claim 62, wherein the transmission condition of the first signal is associated with training data of the target model, wherein the training data is used to train the target model.

64. The apparatus according to claim 62 or 63, wherein the transmission condition is associated with one or more of:

a number of antennas for transmitting the first signal;
a channel condition of a channel for transmitting the first signal; or
a characteristic of a radio frequency device for transmitting the first signal.

65. The apparatus according to any one of claims 46 to 64, wherein the energy of the first information adjusted based on the first parameter on the target transmission resource is less than an energy threshold associated with the target transmission resource.

66. The apparatus according to any one of claims 45 to 65, wherein a size of a resource set to which the target transmission resource belongs is determined based on a size of transmission resources allocated by a network device.

67. A communication apparatus, wherein the communication apparatus is a second device, comprising:
a receiving unit, configured to receive a target signal transmitted by a first device on a target transmission resource, wherein the target signal comprises a first signal and a second signal transmitted in a non-orthogonal manner.

68. The apparatus according to claim 67, wherein the target transmission resource is associated with a first parameter, and the first parameter is used to adjust energy of the first signal transmitted on associated target transmission resource.

69. The apparatus according to claim 68, wherein the target transmission resource belongs to a first resource set, the first resource set comprises a plurality of target transmission resources, and first parameters associated with multiple target transmission resources within a same time-domain unit in the first resource set are same; and/or
first parameters associated with multiple target transmission resources within different time-domain units in the first resource set are partially or completely different.

70. The apparatus according to claim 68 or 69, wherein time-domain positions of target transmission resources in the first resource set comprise a first time-domain position and a second time-domain position, wherein target transmission resources between the first time-domain position and the second time-domain position satisfy one or more rules of:

> a first parameter associated with each target transmission resource increasing, in order of time-domain units from early to late in time domain;
> a first parameter associated with each target transmission resource decreasing, in order of time-domain units from late to early in time domain;
> a first parameter associated with a target transmission resource increasing at every interval of q time-domain units, in order of time-domain units from early to late in time domain; or
> a first parameter associated with a target transmission resource decreasing at every interval of q time-domain units, in order of time-domain units from late to early in time domain;
> wherein q is a positive integer greater than or equal to 0.

71. The apparatus according to claim 70, wherein the first time-domain position is earlier in the time domain than other time-domain positions other than the first time-domain position in the first resource set, or the first time-domain position is later in the time domain than the other time-domain positions.

72. The apparatus according to claim 70 or 71, wherein the second time-domain position is located at a center time-domain position of the first resource set in the time domain.

73. The apparatus according to any one of claims 70 to 72, wherein the time-domain positions of the target transmission resources in the first resource set further comprise a third time-domain position, and the first time-domain position and the third time-domain position are located on two sides of the second time-domain position in the time domain, wherein a trend of change in first parameters associated with target transmission resources between the second time-domain position and the third time-domain position is opposite to a trend of change in first parameters associated with the target transmission resources between the second time-domain position and the first time-domain position.

74. The apparatus according to any one of claims 68 to 73, wherein target transmission resources that are consecutive in some of time domain in the first resource set belong to a first subset, and target resources comprised in the first subset are located between other transmission resources in the first resource set in the time domain, the other transmission resources being transmission resources in the first resource set, other than target transmission resources comprised in the first subset, wherein first parameters associated with the target transmission resources comprised in the first subset are same.

75. The apparatus according to claim 68, wherein the target transmission resource belongs to a second resource set, the second resource set comprises a plurality of target transmission resources, and first parameters associated with multiple target transmission resources within a same frequency-domain unit in the second resource set are same; and/or first parameters associated with multiple target transmission resources within different frequency-domain units in the second resource set are partially or completely different.

76. The apparatus according to claim 68 or 75, wherein frequency-domain positions of target transmission resources in the second resource set comprise a first frequency-domain position and a second frequency-domain position, wherein target transmission resources between the first frequency-domain position and the second frequency-domain position satisfy one or more rules of:

> a first parameter associated with each target transmission resource increasing, in order of frequency-domain units from high to low in frequency domain;
> a first parameter associated with each target transmission resource decreasing, in order of frequency-domain units from low to high in frequency domain;
> a first parameter associated with a target transmission resource increasing at every interval of q frequency-domain units, in order of frequency-domain units from high to low in frequency domain; or
> a first parameter associated with a target transmission resource decreasing at every interval of q frequency-domain units, in order of frequency-domain units from low to high in frequency domain;
> wherein q is a positive integer greater than or equal to 0.

77. The apparatus according to claim 76, wherein the first frequency-domain position is lower in the frequency domain than other frequency-domain positions other than the first frequency-domain position in the second resource set, or the first frequency-domain position is higher in the frequency domain than the other frequency-domain positions.

78. The apparatus according to claim 76 or 77, wherein the second frequency-domain position is located at a center frequency-domain position of the second resource set in the frequency domain.

79. The apparatus according to any one of claims 76 to 78, wherein the frequency-domain positions of the target transmission resources in the second resource set further comprise a third frequency-domain position, and the first frequency-domain position and the third frequency-domain position are located on two sides of the second frequency-domain position in the frequency domain, wherein a trend of change in first parameters associated with target transmission resources between the second frequency-domain position and the third frequency-domain position is opposite to a trend of change in first parameters associated with the target transmission resources between the second frequency-domain position and the first frequency-domain position.

80. The apparatus according to any one of claims 75 to 79, wherein target transmission resources that are consecutive in some of frequency domain in the first resource set belongs to a second subset, and target resources comprised in the second subset are located between other transmission resources in the first resource set in the frequency domain, the other transmission resources being transmission resources in the first resource set, other than target transmission resources comprised in the second subset, wherein first parameters associated with the target transmission resources comprised in the second subset are same.

81. The apparatus according to claim 68, wherein the target transmission resource belongs to a third resource set, and first parameters associated with target transmission resources in the third resource set are same.

82. The apparatus according to any one of claims 68 to 81, wherein some of target transmission resources comprised in the first resource set belong to a third subset, and target transmission resources in the third subset are arranged according to a first rule, wherein the first rule comprises one or more of:

transmission resources within a target time-domain unit being arranged at intervals in frequency domain;
transmission resources within a target frequency-domain unit being arranged at intervals in frequency domain;
multiple groups of transmission resources within the target time-domain unit being arranged at intervals in the frequency domain, wherein a group of transmission resources among the multiple groups of transmission resources comprises multiple transmission resources and the multiple transmission resources are consecutive in the frequency domain; or
multiple groups of transmission resources within the target frequency-domain unit being arranged at intervals in time domain, wherein a group of transmission resources among the multiple groups of transmission resources comprises multiple transmission resources and the multiple transmission resources are consecutive in the time domain.

83. The apparatus according to claim 82, wherein transmission resources in the first resource set, other than the target transmission resources comprised in the third subset, are other transmission resources, a first parameter associated with a target transmission resource in the third subset is greater than first parameters associated with the other transmission resources, or a first parameter associated with a target transmission resource in the third subset is less than first parameters associated with the other transmission resources.

84. The apparatus according to claim 68, wherein the first parameter is obtained based on adjusting an initial parameter by using a target model, wherein the target model is used to adjust the initial parameter according to a transmission condition of the first signal.

85. The apparatus according to claim 84, wherein the transmission condition of the first signal is associated with training data of the target model, wherein the training data is used to train the target model.

86. The apparatus according to claim 84 or 85, wherein the transmission condition is associated with one or more of:

a number of antennas for transmitting the first signal;
a channel condition of a channel for transmitting the first signal; or
a characteristic of a radio frequency device for transmitting the first signal.

87. The apparatus according to any one of claims 68 to 86, wherein the energy of the first information adjusted based on the first parameter on the target transmission resource is less than an energy threshold associated with the target transmission resource.

88. The apparatus according to any one of claims 67 to 87, wherein a size of a resource set to which the target transmission resource belongs is determined based on a size of transmission resources allocated by a network device.

89. A communication device, comprising a transceiver, a memory, and a processor, wherein the memory is configured to store a program, and the processor is configured to call the program in the memory, and control the transceiver to receive or transmit a signal, to enable the terminal to perform the method according to any one of claims 1 to 44.

90. An apparatus, comprising a processor configured to call a program from a memory, to enable the apparatus to perform the method according to any one of claims 1 to 44.

91. A chip, comprising a processor configured to call a program from a memory, to enable a device equipped with the chip to perform the method according to any one of claims 1 to 44.

92. A computer-readable storage medium, wherein a program is stored on the computer-readable storage medium, and the program causes a computer to perform the method according to any one of claims 1 to 44.

93. A computer program product, comprising a program, wherein the program causes a computer to perform the method according to any one of claims 1 to 44.

94. A computer program, wherein the computer program causes a computer to perform the method according to any one of claims 1 to 44.

Information to be transmitted

S111 → Channel encoding process

S112 → Modulation process

S113 → Pilot insertion process

Transmit a signal

S114

Channel ← Noise

Receive a signal

Recovered information ← Channel decoding process ← Demodulation process ← Symbol detection process ← Channel estimation process

S118   S117   S116   S115

FIG. 1

FIG. 2

FIG. 3(a)

FIG. 3(b)

FIG. 3(c)

FIG. 4

Input layer
510

Hidden
layer 520

Output
layer 530

FIG. 5

Input layer
610

Convolutional
layer 620

Pooling
layer 630

Convolutional
layer 620

Pooling
layer 630

Fully
connected
layer 640

Output layer
650

FIG. 6

Represent a vector
transmission

Represent a
processing node

Represent a neural
network layer

Represent vector
connection

Represent vector
copying

730

ht

ct-1

ct

710

720

tanh

σ

σ

tanh

σ

tanh

FIG. 7

Receiver
800

Pilot Signal

Channel
estimation
module 810

Channel
information

FIG. 8

900

FIG. 9

| First device | | Second device |

S1010, target Signal →

FIG. 10

☒ Represent a superimposed transmission resource (or RE)

Frequency domain

RB1

Time domain

FIG. 11

■ Represent a superimposed transmission resource

▨ Represent a transmission resource for the first signal

Frequency domain

RB2

Time domain

FIG. 12

FIG. 13

(a)　　　　(b)

FIG. 14

FIG. 15

FIG. 16

FIG. 17

FIG. 18

FIG. 19

FIG. 20

First Matrix

S2110

Second
Model

Frequency
domain

S2130

RB1

RB2

S2140

First
model

Matrix **Q**

Second Matrix

S2120

Third
Model

Time domain

FIG. 21

First Matrix

S2210

Second
Model

Frequency
domain

S2230

RB2    RB1

S2240

First
model

Matrix **Q**

Second Matrix

S2220

Third
Model

Time domain

FIG. 22

First Matrix

S2310

Second
Model

Frequency
domain

Input
channel 2

Input
channel 1

S2340

First
model

Matrix **Q**

Second Matrix

S2320

Third
Model

Time domain

FIG. 23

First Matrix

S2410

Second
Model

Frequency
domain

Matrix **P**

S2430

Matrix **X**

⊙

Time domain

+

S2440

Matrix **S**

=

First
model

Matrix **Q**

Second Matrix

S2420

Third
Model

Frequency
domain

Matrix **D**

Matrix **V**

⊙

Time domain

FIG. 24

FIG. 25

FIG. 26

FIG. 27

FIG. 28

FIG. 29

FIG. 30

FIG. 31

FIG. 32

EP 4 757 213 A1

FIG. 33

FIG. 34

FIG. 35

FIG. 36

71

FIG. 37

FIG. 38

FIG. 39

FIG. 40

FIG. 41

FIG. 42

FIG. 43

FIG. 44

FIG. 45

□ Represent an RE

Time domain (Symbol)

FIG. 46

□ Represent an RE

FIG. 47

□ Represent an RE

FIG. 48

Matrix **X**        Matrix **B**        Matrix **H**

Frequency
domain

Time domain

FIG. 49

Matrix **X**        Matrix **B**        Matrix **H**

1

Frequency
domain

Time domain

0

FIG. 50

Matrix **X**        Matrix **B**        Matrix **H**

1

Frequency
domain

Time domain

0

FIG. 51

Matrix **X**        Matrix **B**        Matrix **H**

1

Frequency
domain

Time domain

0

FIG. 52

Matrix **X**  Matrix **B**  Matrix **H**

Frequency domain

Time domain

FIG. 53

Matrix **X**  Matrix **B**  Matrix **H**

Frequency domain

Time domain

FIG. 54

Matrix **X**  Matrix **B**  Matrix **G**  Matrix **H**

Frequency domain

Time domain

FIG. 55

Matrix **X**  Matrix **B**  Matrix **G**  Matrix **H**

Frequency domain

Time domain

FIG. 56

Matrix **X**  Matrix **B**  Matrix **G**  Matrix **H**

Frequency domain

Time domain

FIG. 57

Matrix **X**     Matrix **B**     Matrix **G**     Matrix **H**

Frequency
domain

Time domain

FIG. 58

Matrix 1        Represent a symbol
carried on RE

Fourth
model

FIG. 59

Matrix 1        Represent a bit
carried on RE

Fourth
model

FIG. 60

Frequency
domain    Matrix 1        Represent a symbol
carried on RE

Fourth
model

Time domain

FIG. 61

Frequency
domain    Matrix 1        Represent a bit
carried on RE

Fourth
model

Time domain

FIG. 62

Matrix 1    Matrix 2    ⊠ Represent a symbol corresponding to RE

Frequency domain

→ Time domain

Fifth model → Sixth model →

FIG. 63

Matrix 1    Matrix 2    ⊠ Represent a bit corresponding to RE

Frequency domain

→Time domain

Fifth model → Sixth model →

FIG. 64

Matrix 1    Matrix 2    ⊠ Represent a symbol corresponding to RE

Frequency domain

→ Time domain

Fifth model → Sixth model →

FIG. 65

Matrix 1    Matrix 2    ⊠ Represent a bit corresponding to RE

Frequency domain

→Time domain

Fifth model → Sixth model →

FIG. 66

S6730
Modulation
symbol set

S6740
Pilot
symbol set

$L_3$

S6750

Estimated channel

S6760

S6770

S6710   S6720

Data
bits → Channel encoding → Modula-tion → Pilot Superim-position → Channel → Receiver → Channel decoding → Receive data bits

$L_2$

$L_1$   S6780

FIG. 67

Communication
device 6800

Transmitting unit 6810

FIG. 68

Communication
device 6900

Transmitting unit 6910

FIG. 69

Apparatus
7000

Processor
7010

Memory
7020

Transceiver
7030

FIG. 70

## INTERNATIONAL SEARCH REPORT

| International application No. |
|---|
| **PCT/CN2023/109992** |

| A. | CLASSIFICATION OF SUBJECT MATTER |
|---|---|

H04L 1/00(2006.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, 3GPP: 无线, 传输, 非, 正交, 非正交多址接入, 资源, 目标, 能量, 功率, 参数, 调整, 修改, 时域, 频域, 集合, 相同, 不同, 位置, wireless, transmission, non, orthogonal, NOMA, target, energy, power, parameter, adjustment, modification, time domain, frequency domain, collection, same, different, location

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107211374 A (MEDIATEK INC.) 26 September 2017 (2017-09-26) description, paragraphs 1-49, and figures 1-7 | 1-3, 8-9, 14-15, 18-25, 30-31, 36-37, 40-47, 52-53, 58-59, 62-69, 74-75, 80-81, 84-94 |
| X | CN 116389216 A (XIDIAN UNIVERSITY) 04 July 2023 (2023-07-04) description, paragraphs 9-82, and figures 1-6 | 1-3, 8-9, 14-15, 18-25, 30-31, 36-37, 40-47, 52-53, 58-59, 62-69, 74-75, 80-81, 84-94 |
| X | WO 2016134525 A1 (FUJITSU LIMITED) 01 September 2016 (2016-09-01) description, pages 5-16, and figures 1-15 | 1-3, 8-9, 14-15, 18-25, 30-31, 36-37, 40-47, 52-53, 58-59, 62-69, 74-75, 80-81, 84-94 |
| A | CN 111901081 A (ZTE CORP.) 06 November 2020 (2020-11-06) entire document | 1-94 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 March 2024** | **30 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2"><strong>PCT/CN2023/109992</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | KR 20170141587 A (ELECTRONICS AND TELECOMMUNICATIONS RESEARCH INSTITUTE) 26 December 2017 (2017-12-26) entire document | 1-94 |

Form PCT/ISA/210 (second sheet) (July 2022)

## INTERNATIONAL SEARCH REPORT
### Information on patent family members

| International application No. |
|---|
| **PCT/CN2023/109992** |

| Patent document cited in search report | | | Publication date (day/month/year) | Patent family member(s) | | | Publication date (day/month/year) |
|---|---|---|---|---|---|---|---|
| CN | 107211374 | A | 26 September 2017 | BR | 112018006557 | A2 | 11 December 2018 |
| | | | | BR | 112018006557 | B1 | 19 December 2023 |
| | | | | WO | 2017054766 | A1 | 06 April 2017 |
| | | | | US | 2017094668 | A1 | 30 March 2017 |
| | | | | US | 10863512 | B2 | 08 December 2020 |
| | | | | EP | 3342216 | A1 | 04 July 2018 |
| | | | | EP | 3342216 | A4 | 02 January 2019 |
| | | | | EP | 3342216 | B1 | 22 April 2020 |
| | | | | CN | 107211374 | B | 08 September 2020 |
| | | | | CN | 112087789 | B | 11 August 2023 |
| | | | | CN | 112087789 | A | 15 December 2020 |
| CN | 116389216 | A | 04 July 2023 | None | | | |
| WO | 2016134525 | A1 | 01 September 2016 | None | | | |
| CN | 111901081 | A | 06 November 2020 | WO | 2021143632 | A1 | 22 July 2021 |
| | | | | EP | 4092947 | A1 | 23 November 2022 |
| | | | | US | 2023068304 | A1 | 02 March 2023 |
| | | | | JP | 2023510366 | W | 13 March 2023 |
| | | | | KR | 20230129289 | A | 08 September 2023 |
| KR | 20170141587 | A | 26 December 2017 | KR | 102377840 | B1 | 25 March 2022 |

Form PCT/ISA/210 (patent family annex) (July 2022)